(19) Europäisches Patentamt
European Patent Office
Office européen des brevets

(11) **EP 2 163 467 A1**

(12) **EUROPEAN PATENT APPLICATION**
published in accordance with Art. 153(4) EPC

(43) Date of publication:
**17.03.2010 Bulletin 2010/11**

(21) Application number: **08739662.8**

(22) Date of filing: **02.04.2008**

(51) Int Cl.:
**B62K 17/00** *(2006.01)* **B60L 15/00** *(2006.01)*
**B62K 3/00** *(2006.01)*

(86) International application number:
**PCT/JP2008/056551**

(87) International publication number:
**WO 2009/004844 (08.01.2009 Gazette 2009/02)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.06.2007 JP 2007171519**
 **10.08.2007 JP 2007210532**
 **10.08.2007 JP 2007210533**
 **10.08.2007 JP 2007210534**
 **10.08.2007 JP 2007210535**
 **10.08.2007 JP 2007210536**

(71) Applicant: **Equos Research Co., Ltd.**
**Chiyoda-ku**
**Tokyo 101-0021 (JP)**

(72) Inventors:
 • **DOI, Katsunori**
 **Tokyo 101-0021 (JP)**

 • **ANDO, Masao**
 **Tokyo 101-0021 (JP)**
 • **HASEBE, Masahiro**
 **Tokyo 101-0021 (JP)**
 • **GORAI, Naoki**
 **Tokyo 101-0021 (JP)**
 • **HAYASHI, Koki**
 **Tokyo 101-0021 (JP)**
 • **FUTAMURA, Kayo**
 **Tokyo 101-0021 (JP)**
 • **MIYAKE, Takafumi**
 **Tokyo 101-0021 (JP)**
 • **KUNO, Kazuhiro**
 **Tokyo 101-0021 (JP)**

(74) Representative: **TBK-Patent**
**Bavariaring 4-6**
**80336 München (DE)**

(54) **VEHICLE**

(57) Intended is to provide a vehicle giving a comfortable ride and utilizing the attitude control of an inverted pendulum. The balance (or the inverted state) of a vehicle body is kept by moving a riding area containing a rider, translationally in the longitudinal directions of the vehicle. The riding area containing the rider is moved translationally in the accelerating direction so that a balance between an anti-torque of drive wheels to act on the vehicle body and an inertial force accompanying the acceleration may be kept by the acceleration/deceleration according to a target running state (e.g., acceleration, deceleration or stop) based on the rider's operations. As a result, the angle of inclination of the vehicle body with respect to the acceleration/deceleration can be reduced to provide a comfortable and safe inverted type vehicle.

EP 2 163 467 A1

# FIG.1A

## WHEN RIDING SECTION IS MOVED

GRAVITATIONAL FORCE

INERTIAL FORCE

ANTI-TORQUE

TRANSLATIONAL MOVEMENT OF RIDING SECTION

# FIG.1B

## WHEN RIDING SECTION IS NOT MOVED

INERTIAL FORCE

ANTI-TORQUE

GRAVITATIONAL FORCE

**Description**

TECHNICAL FIELD

The present invention relates to a vehicle, and for example, relates to a vehicle employing an inverted pendulum for posture control.

BACKGROUND ART

Vehicles employing an inverted pendulum for posture control (hereafter simply termed "inverted pendulum vehicles") have attracted attention. For example, a transportation device disclosed in Patent Document 1 has been developed.

[Patent Document 1] Japanese Patent Application Publication No. JP-A-2004-129435

A sensor unit provided in the transportation device disclosed by Patent Document 1 detects the state of balance and operation of a housing and the transportation device is placed in a stationary or moving state by controlling the operation of a rotating body by a control unit.
Posture control is performed by moving a counterweight (balancer) based on an angle of inclination of a vehicle body.

DISCLOSURE OF THE INVENTION

Problem to be Solved by the Invention

A vehicle disclosed in Patent Document 1 performs the posture control by moving the balancer in the forward-backward direction. However, a specific control method of the vehicle during an acceleration or deceleration is not disclosed therein.
During the acceleration or deceleration, an anti-torque of a drive wheel and inertial force due to the acceleration act on the vehicle body (invertedly supported body). Thus, the gravity center of the vehicle body needs to be moved in a direction of the acceleration to maintain balance of the vehicle body.
Generally, mass of the balancer is smaller than that of a vehicle body (increase in the mass of the balancer for posture control degrades fuel efficiency), and a moving range of the balancer is limited. Therefore, the amount of gravity center movement due to the movement of the balancer is relatively small. Therefore, to maintain balance of the vehicle body upon high acceleration and deceleration, the vehicle body needs to be largely inclined even when the balancer has moved. If a larger balancer is used to correspond to the acceleration or to reduce the inclination of the vehicle body, because the mass on the vehicle body increases, the rigidity of the vehicle body needs to be increased. This leads to increased weight of the vehicle as a whole, larger vehicle body, and lower fuel efficiency, and thus is not practical.
For example, without a balancer, a vehicle body has to be inclined forward by no less than 20 degrees at an acceleration of 0.4 G.
Due to such an inclination of a vehicle body, a rider has to be also inclined upon rapid acceleration or rapid deceleration and the field of vision of the rider moves through a large vertical range. Thus, riding comfort tends to be adversely affected.
It is therefore an object of the present invention to provide a vehicle employing an inverted pendulum for posture control that is comfortable to ride.

Means for Solving the Problem

(1) In order to achieve the object, the invention according to claim 1 provides a vehicle characterized by including: a drive wheel; a vehicle body rotatably supported by a rotational axis of the drive wheel; a riding section relatively-movably disposed in the vehicle body; target acquisition means acquiring a target running state; and running control means controlling running while adjusting a gravity center of the vehicle body through rotation of the vehicle body about the rotational axis and movement of the riding section with respect to the vehicle body based on the target running state.

(2) The invention according to claim 2 provides the vehicle according to claim 1 further **characterized in that** the running control means includes determination means determining drive torque of the drive wheel and movement thrust force for moving the riding section based on the acquired target running state, drive means applying the drive torque determined by the determination means to the drive wheel, and riding section movement means applying the movement thrust force determined by the determination means to the riding section.

(3) The invention according to claim 3 provides the vehicle according to claim 1 characterized by further including: target inclination angle determination means determining a target inclination angle achieved through rotation of the vehicle body based on the target running state; and target position determination means determining, based on the target running state and the target inclination angle, a target position to which the riding section is moved. The running control means controls the running while adjusting the gravity center of the vehicle body through rotation of the vehicle body and movement of the riding section based on the target running state, the target inclination angle, and the target position.

(4) The invention according to claim 4 provides the vehicle according to claim 1 or 2 characterized by further including: target inclination angle determination means determining a target inclination angle achieved through rotation of the vehicle body based on the target running state; target position determination means determining, based on the target running state and the target inclination angle, a target position to which the riding section is moved; inclination angle detection means detecting an inclination angle of the vehicle body; and position detection means detecting a position of the riding section. The determination means determines: drive torque ofr the drive wheel based on the inclination angle of the vehicle body detected by the inclination angle detection means and the target inclination angle of the vehicle body determined by the target inclination angle determination means; and movement thrust force of the riding section based on the position of the riding section detected by the position detection means and the target position of the riding section determined by the target position determination means.

(5) The invention according to claim 5 provides the vehicle according to claim 2 characterized by further including: target inclination angle determination means determining a target inclination angle achieved through rotation of the vehicle body based on the target running state; target position determination means determining, based on the target running state and the target inclination angle, a target position to which the riding section is moved; inclination detection means detecting an inclination angle of the vehicle body; position detection means detecting a position of the riding section made by the riding section movement mechanism; feedforward output determination means determining feedforward drive torque of the drive wheel based on the target inclination angle, and feedforward movement thrust force of the riding section based on the target position of the riding section; and feedback output determination means determining feedback drive torque of the drive wheel based on a deviation between the target inclination angle determined by the target inclination angle determination means and the inclination angle of the vehicle body detected by the inclination angle detection means, and determining feedback movement thrust force of the riding section based on a deviation between the target position determined by the target position determination means and the position of the riding section detected by the inclination detection means. The determination means determines: the drive torque of the drive wheel based on a sum of the feedforward drive torque and the feedback drive torque; and the movement thrust force of the riding section based on a sum of the feedforward movement thrust force and the feedback movement thrust force.

(6) The invention according to claim 6 provides the vehicle according to any one of claims 1 to 5 characterized by further including a target acceleration acquisition means acquiring target acceleration based on an operation state of an operation member for operating the vehicle. The target acquisition means acquires the target acceleration as the target running state.

(7) The invention according to claim 7 provides the vehicle according to any one of claims 2 to 6 characterized by further including specification means specifying a sensory acceleration. The determination means determines the drive torque and the movement thrust force further based on a degree of the specified sensory acceleration.

(8) The invention according to claim 8 provides the vehicle according to claim 1 or 6 characterized by further including a balancer, and a balancer movement mechanism moving the balancer. The running control means controls the running while adjusting the gravity center of the vehicle body through the rotation of the vehicle body about the rotational axis, movement of the balancer with the balancer movement mechanism, and the movement of the riding section with respect to the vehicle body.

(9) The invention according to claim 9 provides the vehicle according to claim 8 further **characterized in that** the running control means controls the running while adjusting the gravity center of the vehicle body through inclination of the vehicle body and movement of the balancer when the acquired target acceleration is smaller than a predetermined threshold value, and through the inclination of the vehicle body and the movement of the riding section while the balancer is fixed at a movable limit position based on a direction of the target acceleration when the acquired target acceleration is equal to or greater than the predetermined threshold value.

(10) The invention according to claim 10 provides the vehicle according to any one of claims 1 to 9 characterized by further including mass acquisition means acquiring a mass of the riding section including a weight body on the riding section. The running control means controls the running while adjusting the gravity center of the vehicle body based on the mass of the riding section acquired by the mass acquisition means.

(11) The invention according to claim 11 provides a vehicle characterized by including: a drive wheel; a vehicle body rotatably supported by a rotational axis of the drive wheel; a riding section relatively-movably disposed in the vehicle body; target acquisition means acquiring a target running state; drive means driving the drive wheel; riding section movement means moving the riding section; and running control means controlling running while adjusting a position of a gravity center of the vehicle body by controlling at least one of drive by the drive means and movement of the riding section by the riding section movement means based on the target running state. The running control means determines drive torque of the drive wheel based on a low-frequency component of a change in the target running state, and determines movement thrust force for moving the riding section based on a high-frequency component of the change in the target running state.

(12) The invention according to claim 12 provides the vehicle according to claim 11 characterized by further including specification means specifying a sensory acceleration. The running control means determines the drive torque and the movement thrust force further based on a degree of the specified sensory acceleration.

(13) The invention according to claim 13 provides the vehicle according to claim 11 or 12 characterized by further including: target inclination angle determination means determining a target inclination angle achieved through rotation of the vehicle body based on the acquired low-frequency component of the target running state; and target position determination means determining, based on the target running state and the target inclination angle, a target position to which the riding section is moved. The running control means determines drive torque of the drive wheel based on the determined target inclination angle, and movement thrust force for moving the riding section based on the determined target position.

(14) The invention according to claim 14 provides a vehicle characterized by including: a drive wheel; a vehicle body rotatably supported by a rotational axis of the drive wheel; a riding section relatively-movably disposed in the vehicle body; target acquisition means acquiring a target running state; drive means driving the drive wheel; riding section movement means moving the riding section; vehicle speed detection means detecting a vehicle speed; and running control means controlling running while adjusting a position of a gravity center of the vehicle body by controlling at least one of drive by the drive means and movement of the riding section by the riding section movement means based on the target running state. The running control means controls at least one of the drive and the movement of the riding section so that an angle of rotation of the vehicle body increases in proportion to the vehicle speed.

(15) The invention according to claim 15 provides the vehicle according to claim 14 characterized by further including specification means specifying a sensory acceleration. The determination means determines the drive torque and the movement thrust force further based on a degree of the specified sensory acceleration.

(16) The invention according to claim 16 provides the vehicle according to claim 14 characterized by further including: target inclination angle determination means determining a target inclination angle achieved through rotation of the vehicle body based on the target running state; and target position determination means determining, based on the target running state and the target inclination angle, a target position to which the riding section is moved. The determination means determines the drive torque and the movement thrust force based on the target running state, the target inclination angle and the target position regarding the reference.

(17) The invention according to claim 17 provides a vehicle characterized by including: a drive wheel; a vehicle body rotatably supported by a rotational axis of the drive wheel; a riding section relatively-movably disposed in the vehicle body; target acquisition means acquiring a target running state; drive means driving the drive wheel; riding section movement means moving the riding section; determination means determining drive torque of the drive wheel and a movement thrust force for moving the riding section based on the acquired target running state; and running control means controlling running while adjusting a position of a gravity center of the vehicle body by controlling the drive by the drive means with the determined drive torque and controlling the movement of the riding section by the riding section movement means with the determined movement thrust force. When directions of a drive torque required for vehicle body posture control and a drive torque required for vehicle running control are different from each other, the determination means determines, based on the acquired target running state, one of the drive torques as the drive torque of the drive wheel, and determines the movement thrust force based on the other drive torque and the target running state.

(18) The invention according to claim 18 provides the vehicle according to claim 17 characterized by further including specification means specifying a sensory acceleration. The determination means determines the drive torque and the movement thrust force further based on a degree of the specified sensory acceleration.

(19) The invention according to claim 19 provides a vehicle characterized by including: a drive wheel; a vehicle body rotatably supported by a rotational axis of the drive wheel; a riding section relatively-movably disposed in the vehicle body; target acquisition means acquiring a target running state; drive means driving the drive wheel; riding section movement means moving the riding section; disturbance detection means detecting a disturbance acting on the vehicle body; and running control means controlling running while adjusting a position of a gravity center of the vehicle body by controlling, based on the target running state, at least one of drive by the drive means and movement of the riding section by the riding section movement means. The running control means determines drive torque of the drive wheel based on a high-frequency component of the disturbance, and determines movement thrust force for moving the riding section based on the acquired target running state and a low-frequency component of the detected disturbance.

(20) The invention according to claim 20 provides the vehicle according to claim 19 characterized by further including specification means specifying a sensory acceleration. The running control means further determines the drive torque and the movement thrust force based on a degree of the specified sensory acceleration.

(21) The invention according to claim 21 provides the vehicle according to claim 19 or 20 characterized by further including a balancer, and a balancer movement mechanism moving the balancer. The running control means determines the drive torque of the drive wheel based on the acquired target running state and a mid-frequency component of the detected disturbance, determines the movement thrust force for moving the riding section based on the acquired target running state and the low-frequency component of the detected disturbance, and determines balancer thrust force applied by the balancer movement mechanism based on the high-frequency component of the detected disturbance.

(22) The invention according to claim 22 provides a vehicle characterized by including: a drive wheel; a vehicle body rotatably supported by a rotational axis of the drive wheel; a riding section relatively-movably disposed in the vehicle body; target acquisition means acquiring a target running state; drive means driving the drive wheel; riding section movement means moving the riding section; running control means controlling running while adjusting a position of a gravity center of the vehicle body by controlling at least one of drive by the drive means and movement of the riding section by the riding section movement means based on the target running state; and first failure detection means detecting a failure of the drive means. When the failure of the drive means is detected, the running control means determines movement thrust force for moving the riding section based on a running acceleration of the vehicle and an inclination angle of the vehicle body, and performs posture control while adjusting the position of the gravity center of the vehicle body with the movement thrust force.

(23) The invention according to claim 23 provides the vehicle according to claim 22 characterized by further including: target inclination angle determination means determining a target inclination angle achieved through rotation of the vehicle body based on the target running state; target position determination means determining, based on the target running state and the target inclination angle, a target position to which the riding section is moved; inclination detection means detecting the inclination angle of the vehicle body; and position detection means detecting a position of the riding section made by the riding section movement mechanism. The running control means determines: drive torque for feedback control of the drive wheel based on a deviation between the target inclination angle determined by the target inclination angle determination means and the inclination angle of the vehicle body detected by the inclination angle detection means; and movement thrust force for feedback control of the riding section based on a deviation between the target position determined by the target position determination means and the position of the riding section detected by the inclination detection means, and when the failure of the drive means is detected, the target position determination means determines the target position based on running acceleration of the vehicle and an inclination angle of the vehicle body.

(24) The invention according to claim 24 provides a vehicle characterized by including: a drive wheel; a vehicle body rotatably supported by a rotational axis of the drive wheel; a riding section relatively-movably disposed in the vehicle body; target acquisition means acquiring a target running state; drive means driving the drive wheel; riding section movement means moving the riding section; running control means controlling running while adjusting a position of a gravity center of the vehicle body by controlling at least one of drive by the drive means and movement of the riding section by the riding section movement means based on the target running state; and second failure detection means detecting a failure of the riding section movement means. When the failure of the riding section movement means is detected, the running control means determines the drive torque of the drive wheel based on a position of the riding section, and performs posture control while adjusting the position of the gravity center of the vehicle body with the drive torque.

(25) The invention according to claim 25 provides the vehicle according to claim 24 characterized by further including: target inclination angle determination means determining a target inclination angle achieved through rotation of the vehicle body based on the target running state; target position determination means determining, based on the target running state and the target inclination angle, a target position to which the riding section is moved; inclination detection means detecting an inclination angle of the vehicle body ; and position detection means detecting the position of the riding section made by the riding section movement mechanism. The running control means determines drive torque for feedback control of the drive wheel based on a deviation between the target inclination angle determined by the target inclination angle determination means and an inclination angle of the vehicle body detected by the inclination angle detection means, determines movement thrust force for feedback control of the riding section based on a deviation between the target position determined by the target position determination means and the position of the riding section detected by the inclination detection means, and determines the drive torque by changing a feedback control gain of the feedback based on the acquired target running state and an actual position of the riding section when the failure of the riding section movement means is detected.

Effects of the Invention

(1) In the present invention as claimed in claim 1, the running is performed while adjusting the gravity center of the vehicle body not only through the inclination of the vehicle body but also through the movement of the riding section. Thus, the inclination angle of the vehicle body can be reduced. Therefore, a vehicle comfortable for a rider can be provided.

(2) In the present invention as claimed in claim 2, the drive torque of the drive wheel and the movement thrust force for moving the riding section are determined based on the target running state, and the drive torque is applied to the drive wheel and the movement thrust force is applied to the riding section. Thus, the amount of vehicle body inclination and the position of the riding section can be optimized.

(3) In the present invention as claimed in claim 3, a speed can be controlled with a constant inclination angle of the vehicle body by determining the target position of the riding section and the drive torque based on the target inclination angle of the vehicle body. Thus, the target value can be determined and the control can be performed in the aim of providing a rider a comfortable ride.

(4) In the present invention as claimed in claim 4, the inclination of the vehicle body and the position of the riding section are controlled based on the measured value and the target value. Thus, the gravity center of the vehicle body can be controlled more accurately.

(5) In the present invention as claimed in claim 5, the sum of the feedforward output and feedback output of the drive wheel and the riding section is obtained based on the target inclination angle and the target position. Thus, each state quantity is controlled highly accurately so that steady-state deviations of the state quantities can be reduced. Therefore, the running while adjusting the gravity center can be stably controlled.

(6) In the present invention as claimed in claim 6, the target acceleration as the target state is acquired based on the operation state of the operation member for operating the vehicle. Thus, the running can be performed with a small inclination angle of the vehicle body while corresponding to an acceleration request from a rider.

(7) In the present invention as claimed in claim 7, the sensory acceleration can be specified. Thus, the sensory acceleration can be quantitatively adjusted based on "preference" of the rider.

(8) In the present invention as claimed in claim 8, the balancer is moved in addition to the rotation of the vehicle body about the rotational axis and the movement of the riding section with respect to the vehicle body. Thus, the adjustment of the gravity center of the vehicle body can be controlled more in detail.

(9) In the present invention as claimed in claim 9, the gravity center of the vehicle body is adjusted through the inclination of the vehicle body and the movement of the balancer if the target acceleration is less than a predetermined threshold value. Thus, without moving the riding section and with small amount of vehicle body inclination under low acceleration, the rider can feel an appropriate acceleration.

(10) In the present invention as claimed in claim 10, the mass of the riding section including the weight body on the riding section is acquired and the running is controlled while adjusting the gravity center of the vehicle body based on the acquired mass of the riding section. Thus, the steady-state deviations of the target vehicle movement and the target posture of the vehicle body are reduced as much as possible and the appropriate control can be performed. Therefore, stability and accuracy in the posture control can be improved.

(11) In the present invention as claimed in claim 11, the drive torque of the drive wheel is determined based on the low-frequency component of the change in the target running state and the movement thrust force for moving the riding section is determined based on the high-frequency component of the change in the target running state. Thus, sudden inclination of the vehicle body is prevented and a vehicle that is comfortable to ride can be provided.

(12) In the present invention as claimed in claim 12, the sensory acceleration can be specified. Thus, the sensory acceleration can be quantitatively adjusted based on the "preference" of the rider.

(13) In the present invention as claimed in claim 13, the speed can be controlled with the constant vehicle body inclination angle by determining the target position of the riding section and the drive torque based on the target inclination angle determined by the low-frequency component of the target running state. Thus, the target value can be determined and the control can be performed in the aim of providing a rider a comfortable ride.

(14) In the present invention as claimed in claim 14, at least one of the drive and the movement of the riding section is controlled so that the rotational angle of the vehicle body increases in proportion to the vehicle speed. Thus, large change in the inclination angle of the vehicle body immediately after a rapid deceleration is prevented.

(15) In the present invention as claimed in claim 15, the sensory acceleration can be specified. Thus, the sensory acceleration can be quantitatively adjusted based on the "preference" of the rider.

(16) In the present invention as claimed in claim 16, the drive torque and the movement thrust force are determined based on the target running state, the target inclination angle, and the target position with <u>a state in which the riding section is moved forward and the vehicle body is inclined backward as a reference</u>. Thus, the speed can be adjusted with the constant vehicle inclination angle. As a result, the target value can be determined and the control can be performed in the aim of providing a rider a comfortable ride.

(17) In the present invention as claimed in claim 17, when the direction of the drive torque required for controlling the posture of the vehicle body and the direction of the drive torque required for controlling the running of the vehicle are different, one of the drive torques is determined as the drive torque of the drive wheel based on the acquired target running state, and the movement thrust force is determined based on the other torque and the target running state, so as to be able to correspond to reverse operating condition of the driving torques in the inverted type vehicle.

(18) In the present invention as claimed in claim 18, the sensory acceleration can be specified. Thus, the sensory acceleration can be quantitatively adjusted based on the "preference" of the rider.

(19) In the present invention as claimed in claim 19, the drive torque of the drive wheel is determined based on the high-frequency component of the disturbance, and the riding section is moved based on the acquired target running state and the low-frequency component of the detected disturbance. Thus, vibration caused by the disturbance can be reduced.

(20) In the present invention as claimed in claim 20, the sensory acceleration can be specified. Thus, the sensory acceleration can be quantitatively adjusted based on the "preference" of the rider.

(21) In the present invention as claimed in claim 21, the drive torque of the drive wheel is determined based on the acquired target running state and the mid-frequency component of the detected disturbance, the movement thrust force for moving the riding section is determined based on the acquired target running state and the low-frequency component of the detected disturbance, and the balancer thrust force applied by the balancer movement mechanism is determined based on the high-frequency component of the detected disturbance. Thus, the vibration caused by the disturbance can be prevented more accurately.

(22) In the present invention as claimed in claim 22, if the failure of the drive means is detected, the movement thrust force for moving the riding section is determined based on the running acceleration of the vehicle and the vehicle body inclination angle. The posture is controlled while adjusting <u>the position of the gravity center</u> of the vehicle body with the movement thrust force. Thus, the posture can be maintained with the failed drive means.

(23) In the present invention as claimed in claim 23, when the failure of the drive means is detected, the target position is determined based on the running acceleration of the vehicle and the inclination angle of the vehicle body. The movement thrust force for feedback control of the riding section is determined based on the deviation between the determined target position and the position of the riding section. Thus, the posture can be maintained with the failed drive means.

(24) In the present invention as claimed in claim 24, when the failure of the riding section movement means is detected, the drive torque of the drive wheel is determined based on the position of the riding section and, the posture is controlled while adjusting the position of the gravity center of the vehicle body with the drive torque. Thus, the running can be maintained with the failed drive means.

(25) In the present invention as claimed in claim 25, when the failure of the riding section movement means is detected, the drive torque is determined by changing the feedback control gain based on the acquired target running state and the actual position of the riding section. Thus, the running can be maintained with the failed drive means.

BRIEF DESCRIPTION OF THE DRAWINGS

[FIG. 1] FIG. 1 shows conditions of a vehicle according to an embodiment of the present invention accelerating with a small angle of inclination by moving a riding section forward.

[FIG. 2] FIG. 2 is an exemplary diagram showing a condition of the vehicle according to the embodiment, in which the vehicle loaded with a rider runs in a forward direction.

[FIG. 3] FIG. 3 is a block diagram of a control system according to a first embodiment.

[FIG. 4] FIG. 4 is a flowchart showing details of a running and posture control process according to the first embodiment.

[FIG. 5] FIG. 5 is a diagram showing a relationship between a vehicle target acceleration $\alpha^*$ (abscissa), a target vehicle body inclination angle $\theta_1^*$, and a riding section target position $\lambda_S^*$.

[FIG. 6] FIG. 6 is a flowchart showing a target value determination process in a modified example of the first embodiment.

[FIG. 7] FIG. 7 is a block diagram of a control system according to a second embodiment.

[FIG. 8] FIG. 8 is a diagram showing correspondence between control modes to be selected and a rider acceleration sensation coefficient $C_{Sense}$.

[FIG. 9] FIG. 9 is a flowchart showing details of a running and posture control process according to the second embodiment.

[FIG. 10] FIG. 10 is a block diagram of a control system according to a third embodiment.

[FIG. 11] FIG. 11 is a diagram showing an arrangement of a balancer movement mechanism.

[FIG. 12] FIG. 12 shows a dynamic model of a vehicle posture control system including the balancer.

[FIG. 13] FIG. 13 is a diagram showing a relationship between the vehicle target acceleration $\alpha^*$ (abscissa), the target vehicle body inclination angle $\theta_1^*$, the riding section target position $\lambda_S^*$, and a balancer target position $\lambda_2^*$.

[FIG. 14] FIG. 14 is a flowchart showing details of a target value determination process in the third embodiment.

[FIG. 15] FIG. 15 is a diagram showing weighting of a vehicle body inclination and a riding section movement for each frequency component of the vehicle target acceleration $\alpha^*$.

[FIG. 16] FIG. 16 shows changes in states of the vehicle body inclination and the riding section movement during sudden acceleration in a fourth embodiment.

[FIG. 17] FIG. 17 is a flowchart showing details of a running and posture control process according to the fourth embodiment.

[FIG. 18] FIG. 18 shows changes in states of the vehicle body inclination and the riding section movement in a fifth embodiment.

[FIG. 19] FIG. 19 is a flowchart showing details of a running and attitude control process according to the fifth embodiment.

[FIG. 20] FIG. 20 is a diagram showing a relationship between the vehicle target acceleration $\alpha^*$ (abscissa), the target vehicle body inclination angle $\theta_1^*$, and the riding section target position $\lambda_S^*$.

[FIG. 21] FIG. 21 is an illustration showing a relationship between the vehicle body posture control and the vehicle running control by the drive motor 52.

[FIG. 22] FIG. 22 is a flowchart showing details of a running and posture control process according to a sixth embodiment.

[FIG. 23] FIG. 23 is a diagram showing weighting of the drive motor and the riding section movement for each frequency component of a disturbance.

[FIG. 24] FIG. 24 is a flowchart showing details of a running and posture control process according to a seventh embodiment.

[FIG. 25] FIG. 25 is a diagram showing weighting of the riding section movement, the drive motor, and a balancer movement for each frequency component of a disturbance.

[FIG. 26] FIG. 26 is a flowchart showing details of a running and posture control process according to an eighth embodiment.

[FIG. 27] FIG. 27 is a main flowchart showing a running and posture control process according to a ninth embodiment.

[FIG. 28] FIG. 28 is a flowchart showing details of process for control under drive motor failure.

[FIG. 29] FIG. 29 is a flowchart showing details of process for control under riding section motor failure.

Description of the Reference Numerals

11: drive wheel
12: drive motor
13: riding section
14: support member
131: seat cushion
132: seat back
133: head restraint
16: control unit
20: control ECU
21: main control ECU
22: drive wheel control ECU
23: riding section control ECU
24: balancer control ECU
30: input device
31: joystick
32: control mode input device
40: vehicle body control system
41: vehicle body inclination sensor
50: drive wheel control system
51: drive wheel sensor
52: drive motor
60: riding section control system
61: riding section sensor
62: riding section motor
70: balancer control system
71: balancer sensor
72: balancer motor
63: movement mechanism

BEST MODES FOR CARRYING OUT THE INVENTION

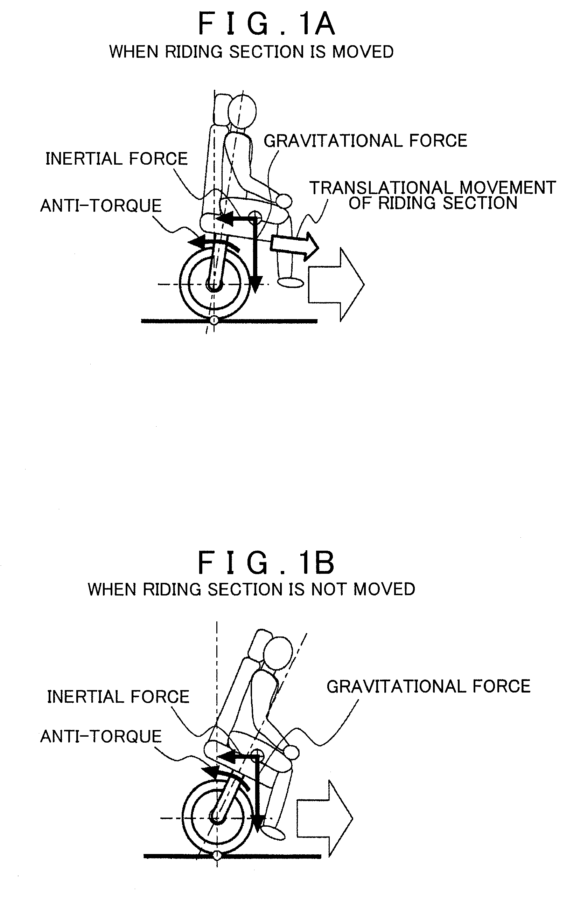

A vehicle according to preferred embodiments of the present invention will be described in detail below with reference to FIGS. 1 through 29.

(1) Outline of the embodiments
FIG. 1 shows conditions of acceleration with a small angle of inclination achieved through movement of the riding section in the embodiment.
In this embodiment, the balance (inverted state) of a vehicle body is maintained by moving the riding section including a rider relatively translationally in a longitudinal direction of the vehicle.
Specifically, referring to FIG. 1A, the riding section including the rider is moved translationally in an acceleration direction to maintain a balance of the vehicle body with anti-torque of a drive wheel and inertial force accompanying acceleration acting thereon as a result of acceleration/deceleration according to a target running state (for example, acceleration, deceleration, or stop) based on an operation performed by the rider.
As a result, the angle of inclination of the vehicle body accompanied by the acceleration/deceleration can be reduced to provide a comfortable and safe inverted type vehicle.

In a second embodiment, in determining a target vehicle body posture (a vehicle target angle of inclination, a riding section position target value), the angle of inclination of the vehicle body and a riding section movement amount are determined so as to adjust the degree of sensory acceleration. To make the driver feel a strong acceleration, for example, the riding section is moved with a suppressed vehicle body inclination. This allows the vehicle body inclination and the sensory acceleration relative to the acceleration to be adjusted according to preference of the rider.
In addition, in a third embodiment, a riding section movement mechanism and a balancer movement mechanism are used to perform a forward-backward direction running and posture control of the inverted type vehicle.

Specifically, the vehicle body inclination, the riding section position, and the balancer position are controlled according to the target running state to thereby achieve the target running state, while maintaining the balance of the vehicle body. More specifically, if the vehicle target acceleration is smaller than a predetermined value, the vehicle body balance is maintained by movement of the balancer and inclination of the vehicle body. If the vehicle target acceleration is greater than the predetermined value, on the other hand, the vehicle body balance is maintained by the inclination of the vehicle body and movement of the riding section with the balancer moved to its stroke limit.

(2) Details of the first embodiment

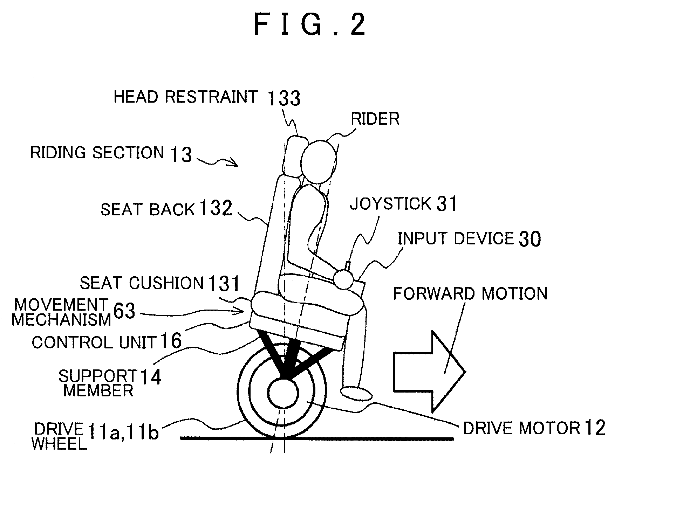

FIG. 2 is an exemplary diagram showing a condition of the vehicle according to the embodiment, in which the vehicle loaded with a rider runs in a forward direction.

Referring to FIG. 2, the vehicle includes two drive wheels 11a, 11b disposed coaxially.

The drive wheels 11a, 11b are driven by drive motors 12a, 12b, respectively.

Note that, one or three or more drive wheels and drive motors may be disposed instead of coaxially disposing two each as described above.

A riding section 13 (seat) that carries a cargo, a rider, or other weight body is disposed above the drive wheels 11a, 11b (a drive wheel 11 to mean both drive wheels 11a, 11b collectively; the same holds true with other elements hereunder) and the drive motor 12.

The riding section 13 includes a seat cushion 131 on which the rider sits, a seat back 132, and a head restraint 133.

The riding section 13 is supported by a support member 14 via a movement mechanism 63. The support member 14 is fixed to a drive motor cabinet in which the drive motor 12 is accommodated.

A linear guide system or other linear movement mechanism having low resistance is, for example, used as the movement mechanism 63. The position of the riding section 13 relative to the support member 14 is to be changed through drive torque of a riding section drive motor.

The linear guide system includes a guide rail fixed to the support member 14, a slider fixed to the riding section drive motor, and a rolling body.

The guide rail includes two trackway grooves formed linearly longitudinally in right and left side surfaces of the guide rail. The slider has a channel-shaped cross section. Two trackway grooves are formed inside two mutually opposing side surfaces of the channel shape so as to face the two trackway grooves, respectively, in the guide rail.

The rolling body is inserted between the abovementioned trackway grooves, rolling in the trackway grooves as the guide rail and the slider make linear motions relative to each other.

Additionally, the slider includes a return path formed therein, connecting both ends of the trackway grooves, so that the rolling body circulates through the trackway grooves and the return path.

The linear guide system includes a brake (clutch) that fixes the movement of the linear guide system. When the movement of the riding section is not required, such as when the vehicle is not moving, by fixing the slider onto the guide rail with the brake, the relative position between the support member 14 to which the guide rail is fixed and the riding section 13 to which the slider is fixed is maintained. When the movement is required, the brake is released, so that the distance between a reference position on the side of the support member 14 and a reference position on the side of the riding section 13 can be controlled to be a predetermined value.

An input device 30 is disposed beside the riding section 13. The input device 30 includes a joystick 31 disposed thereon.

The rider operates the joystick 31 to issue commands for acceleration, deceleration, turn, on-the-spot rotation, standstill, braking, and other operations of the vehicle.

The input device 30 according to the embodiment is fixed to the seat cushion 131. The input device 30 may instead be configured with a wired or wireless remote control, or disposed on an armrest provided additionally.

The vehicle according to the embodiment includes the input device 30 disposed therein. If the vehicle runs automatically according to predetermined travel command data, a travel command data acquisition section is disposed in place of the input device 30. The travel command data acquisition section may include, for example, data read means acquiring the travel command data from storage media of various sorts such as a semiconductor memory, or/and communication control means acquiring the travel command data externally through wireless communications.

In FIG. 2, a human is on the riding section 13. The vehicle is not necessarily limited to an application of a human rider operating; rather, the vehicle may carry only a cargo or nothing and run or stop through, for example, remote control from an external environment or according to travel command data.

A control unit 16 is disposed between the riding section 13 and the drive wheel 11.

In this embodiment, the control unit 16 is mounted on the support member 14.

The control unit 16 may be mounted on a lower surface of the seat cushion 131 of the riding section 13. In this case, the control unit is moved in the forward-backward direction with the riding section 13 by the movement mechanism 63.

The vehicle according to the embodiment includes a battery among other miscellaneous types of devices. The battery, disposed on the support member 14, supplies electric power for drive and arithmetic operations to, for example, the drive motor 12, the riding section drive motor, and a control ECU 20.

In the description given hereunder, a "drive wheel" collectively means the drive wheel 11 and parts fixed to, and rotated with the drive wheel 11; a "vehicle body" means an entire vehicle including a rider, but except the drive wheel, and a "riding section" means the riding section 13 and parts (including the rider) fixed to, and moved translationally with the riding section 13.

In this embodiment, the "riding section" is formed of the riding section 13, the input device 30, and a part of the movement mechanism 63 (linear guide). The control unit 16 or the battery may be disposed on the riding section 13 so as to be included in the "riding section". This increases weight of the "riding section" and thus produces a greater effect from the movement of the "riding section".

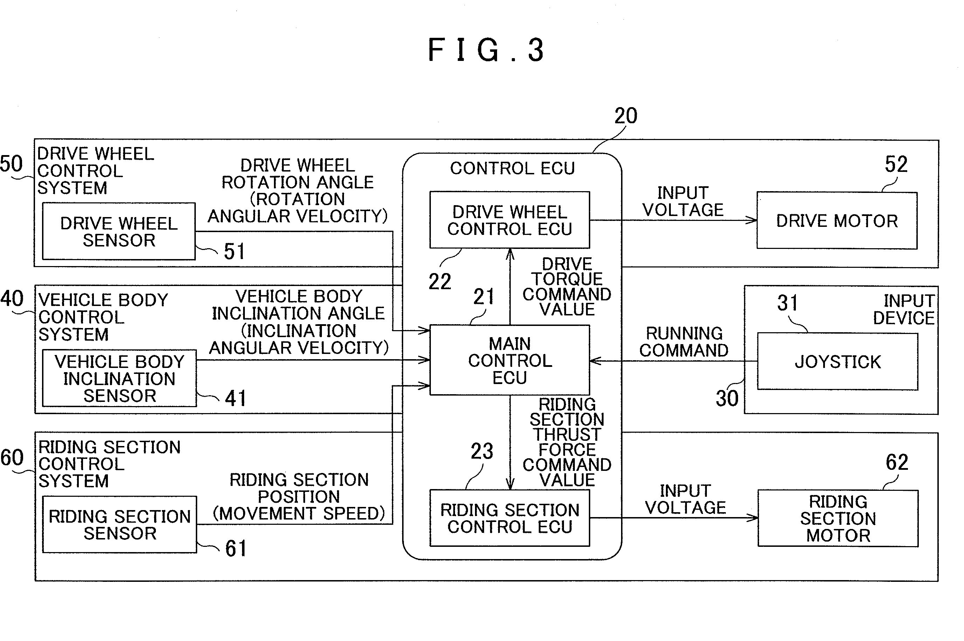

FIG. 3 is a block diagram of a control system according to the first embodiment.

The control system includes the control ECU (electronic control unit) 20 that functions as running and posture control means, the joystick 31, a vehicle body inclination sensor 41, a drive wheel sensor 51, a drive motor 52 (same as the drive motor 12), a riding section sensor 61, a riding section motor 62 (riding section drive motor), and other devices.

The control ECU 20 includes a main control ECU 21, a drive wheel control ECU 22, and a riding section control ECU 23 and performs various types of controls including the vehicle running and posture control through, for example, a drive wheel control and a vehicle body control (inversion control).

The control ECU 20 is formed of a computer system that includes a ROM that stores therein various programs and data, such as the running and posture control process program in this embodiment, a RAM used as a work area, an external storage device, and an interface.

The main control ECU 21 is connected with the drive wheel sensor 51, the vehicle body inclination sensor 41, the riding section sensor 61, and the joystick 31 as the input device 30.

The joystick 31 supplies the main control ECU 21 with a running command (maneuvering operation amount) based on an operation performed by the rider.

With its upright position defined as a neutral position, the joystick 31 is tilted in the forward-backward direction to command acceleration or deceleration and in the lateral direction to command lateral acceleration during turning. The requested acceleration/deceleration or lateral acceleration is greater with a larger tilt angle.

The vehicle body inclination sensor 41 functions as inclination detection means detecting the angle of inclination of the vehicle body and detects an inclination state of the vehicle body in the forward-backward direction about an axle of the drive wheel 11.

The vehicle body inclination sensor 41 includes an acceleration sensor that detects acceleration and a gyro sensor that detects a vehicle body inclination angular velocity. Accuracy of the vehicle body inclination sensor 41 is enhanced by calculating a vehicle body inclination angle $\theta_1$ from a detected vehicle body inclination angular velocity as well as from a detected acceleration. Instead, either one of the sensors may be disposed in the vehicle body inclination sensor 41 and the vehicle body inclination angle or the angular velocity may be calculated from a value detected thereby.

The main control ECU 21 functions as target running state acquisition means that acquires the target running state set as a target. Further, the main control ECU 21 functions as output determination means that determines drive torque of the drive wheel and movement thrust force of the riding section according to the acquired target running state.

The main control ECU 21 functions as target posture determination means that determines a vehicle body inclination angle and a riding section position set as targets according to the target running state based on a signal from the joystick 31.

Additionally, the main control ECU 21 functions as feedforward output determination means that determines a feedforward output of each actuator (the drive motor 52 and the riding section motor 62) according to the target running state and a target posture (the target vehicle body inclination angle and the target riding section position).

Further, the main control ECU 21 functions as feedback output determination means that determines a feedback output of the drive motor 52 according to a deviation in the vehicle body inclination angle between a target value and an actually measured value and a feedback output of the riding section motor 62 according to a deviation in the riding section position between a target value and an actually measured value.

The main control ECU 21 functions with the drive wheel control ECU 22 and the drive motor 52 as drive means and, a drive wheel control system 50 is formed by further including the drive wheel sensor 51 to the drive means.

The drive wheel sensor 51 detects a drive wheel rotation angle (rotation angular velocity) that represents a rotation state of the drive wheel 11 and supplies the main control ECU 21 with the drive wheel rotation angle. The drive wheel sensor 51 of this embodiment is formed of a resolver detecting the drive wheel rotation angle. The rotation angular velocity is calculated using this drive wheel rotation angle.

The main control ECU 21 supplies the drive wheel control ECU 22 with a drive torque command value and the drive wheel control ECU 22 supplies the drive motor 52 with an input voltage (drive voltage) corresponding to the drive torque command value. The drive motor 52 functions as a drive wheel actuator that applies the drive wheel 11 the drive torque according to the input voltage.

Additionally, the main control ECU 21 forms a riding section control system 60 with the riding section control ECU 23, the riding section sensor 61, and the riding section motor 62.

The riding section sensor 61 functions as a <u>position detector</u> detecting a relative position of the riding section and supplies data that represents the detected riding section position (movement speed) to the main control ECU 21. The riding section sensor of this embodiment is formed of an encoder detecting the riding section position. The movement speed of the riding section is calculated from a detected value of the riding section position.

The main control ECU 21 supplies the riding section control ECU 23 with a riding section thrust force command value. The riding section control ECU 23 supplies the riding section motor 62 with an input voltage (drive voltage) corresponding to the riding section thrust force command value. The riding section motor 62 functions as a riding section actuator that applies thrust force for moving the riding section 13 translationally according to the input voltage.

Running and posture control process performed by the vehicle having the above arrangement will be described below.

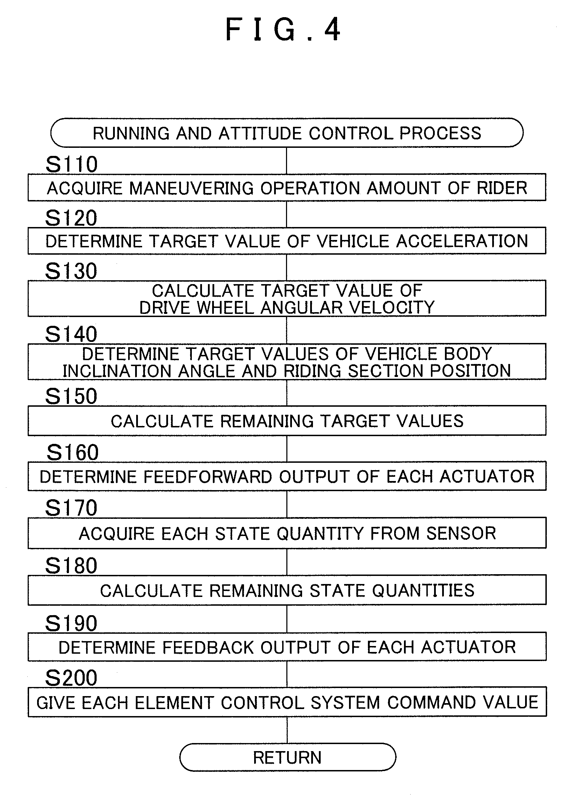

FIG. 4 is a flowchart showing details of the running and posture control process.

The entire running and posture control process will first be outlined.

The running and posture control according to this embodiment achieves the target running state, while maintaining the balance of the vehicle body, by controlling the vehicle body inclination or the riding section position according to the running state set as the target including, for example, acceleration/deceleration and stop.

The main control ECU 21 first determines how the vehicle is moved according to an intention of the rider, specifically, the <u>target running</u> of the vehicle (steps 110 to 130).

The main control ECU 21 next determines a vehicle body target posture (the target vehicle body inclination angle and the target riding section position) at which the balance of the vehicle body is maintained (makes the vehicle take an inverted posture) under the determined <u>target running</u> (step 140).

By optimizing the vehicle body inclination <u>amount</u> and the riding section position as described above, the rider can feel an appropriate acceleration, while minimizing the vehicle body inclination to prevent riding comfort from being degraded.

The main control ECU 21 then determines output values of the drive motor 52 and the riding section motor 62 required for achieving the vehicle running state and the vehicle posture set as the target. In accordance with the output values, actual outputs of the drive motor 52 and the riding section motor 62 are controlled using the drive wheel control ECU 22 and the riding section control ECU 23 (steps 150 to 200).

Details of the running and posture control process will next be described.

The main control ECU 21 acquires the maneuvering operation amount (run command) of the joystick 31 operated by the rider (step 110).

The main control ECU 21 then determines a target value of vehicle acceleration (vehicle target acceleration) $\alpha^*$ based on the acquired operation amount (step 120). A value proportional, for example, to the forward-backward operation amount of the joystick 31 is defined as the value of the vehicle target acceleration $\alpha^*$.

Using the determined vehicle target acceleration $\alpha^*$, the main control ECU 21 calculates a target value of the drive wheel angular velocity (drive wheel target angular velocity) $[\theta\omega^*]$ (step 130).

Note that code $[n]$ represents a derivative of n with respect to time. For example, the vehicle target acceleration $\alpha^*$ is integrated with respect to time and divided by a predetermined drive wheel ground contact radius to arrive at a value as the drive wheel target angular velocity $[\theta\omega^*]$.

The main control ECU 21 next determines the target values of the vehicle body inclination angle and riding section position (step 140). Specifically, the target value of the vehicle body inclination angle (target vehicle body inclination angle) $\theta_1^*$ is determined using Expressions 1 to 3 given below according to the magnitude of the vehicle target acceleration $\alpha^*$ determined at step 120.

Then, based on the determined target vehicle body inclination angle $\theta_1^*$, the target value of the riding section position (riding section target position) $\lambda_S^*$ is determined using Expressions 4 to 6 according to the magnitude of the vehicle target acceleration $\alpha^*$.

$$(\text{Expression 1}) \quad \theta_1^* = \varphi^* - \beta_{Max} + \sin^{-1}(\gamma\sin\varphi^*\cos\beta_{Max}) \quad (\alpha^* < -\alpha_{Max})$$

$$(\text{Expression 2}) \quad \theta_1^* = (1 - C_{Sense})\varphi^* \quad (-\alpha_{Max} \leq \alpha^* \leq \alpha_{Max})$$

$$\text{(Expression 3)} \quad \theta_1{}^* = \varphi^* + \beta_{Max} + \sin^{-1}(\gamma \sin\varphi^* \cos\beta_{Max}) \quad (\alpha^* > \alpha_{Max})$$

$$\text{(Expression 4)} \quad \lambda_S{}^* = -\lambda_{S,Max} \quad (\alpha^* < -\alpha_{Max})$$

$$\text{(Expression 5)} \quad \lambda_S{}^* = l_1(m_1/m_S)\{\tan(\varphi^*-\theta_1{}^*) + \gamma(\sin\varphi^*/\cos(\varphi^*-\theta_1{}^*))\} \quad (-\alpha_{Max} \leq \alpha^* \leq \alpha_{Max})$$

$$\text{(Expression 6)} \quad \lambda_S{}^* = \lambda_{S,Max} \quad (\alpha^* > \alpha_{Max})$$

In Expressions 1 to 6, $\phi^*$, $\beta_{Max}$, and $\gamma$ are as follows:

$$\varphi^* = \tan^{-1}\alpha^*$$

$$\beta_{Max} = \tan^{-1}(m_S\lambda_{S,Max}/m_1 l_1)$$

$$\gamma = M\text{\~} R_W/m_1 l_1 \quad \text{or} \quad M\text{\~} = m_1 + m_W + I_W/R_W{}^2.$$

$\alpha^*$ is the vehicle target acceleration (G). $\lambda_{S,Max}$ is a set value representing the maximum riding section movement amount.
A threshold value $\alpha_{Max}$ is the vehicle target acceleration $\alpha^*$ when $\lambda_S{}^* = \lambda_{S,Max}$ in Expression 5, specifically, when the riding section has been moved to its stroke limit. The threshold value $\alpha_{Max}$ is a preset value, but cannot be obtained analytically. The threshold value $\alpha_{Max}$ is therefore determined, for example, through iterative calculation or with an approximate expression.

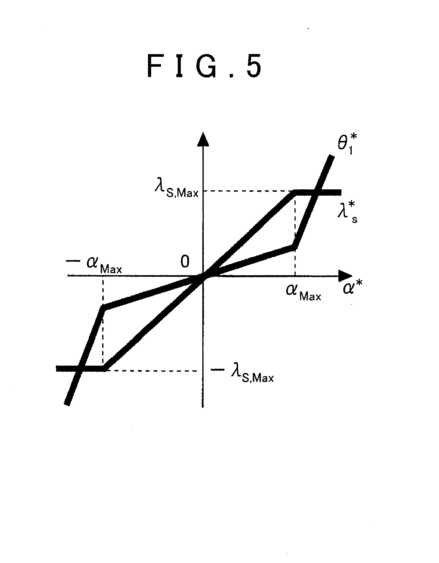

FIG. 5 is a diagram showing a relationship between the vehicle target acceleration $\alpha^*$ (abscissa), the target vehicle body inclination angle $\theta_1{}^*$, and the riding section target position $\lambda_S{}^*$, given by Expressions 1 to 6.
If the vehicle target acceleration $\alpha^*$ falls within a range of the threshold value $\pm\alpha_{Max}$ ($-\alpha_{Max} \leq \alpha^* \leq \alpha_{Max}$), the target vehicle body inclination angle $\theta_1{}^*$ is determined using Expression 2 and the riding section target position $\lambda_S{}^*$ is determined using Expression 5.
As a result, in the range of ($-\alpha_{Max} \leq \alpha^* \leq \alpha_{Max}$), the rider can feel an appropriate acceleration while maintaining the balance of the vehicle body by moving the riding section to $\lambda_S{}^*$ with the vehicle body inclined at $\theta_1{}^*$.

As such, movement of a gravity center position required for achieving the vehicle target acceleration $\alpha^*$ is accomplished in the range of the threshold value $\pm\alpha_{Max}$ by both inclination of the vehicle body and movement of the riding section. Herein, the amounts of movement of the gravity center borne by the inclination of the vehicle body and movement of the riding section are determined by a rider acceleration sensation coefficient $C_{Sense}$ in Expressions 2 and 5. The value of $C_{Sense}$ is preset to fall within a range of $0 \leq C_{Sense} \leq 1$.
A greater preset value $C_{Sense}$ relative to the vehicle target acceleration $\alpha^*$ results in a larger target vehicle body inclination angle $\theta_1{}^*$ (Expression 2) and a smaller riding section target position $\lambda_S{}^*$ (Expression 5).

$C_{Sense}$ corresponds to the degree of acceleration the rider feels.
Specifically, if $C_{Sense} = 1$, the target vehicle body inclination angle $\theta_1{}^* = 0$ (Expression 2), so that the vehicle body is not inclined at all. The rider therefore directly feels inertial force as a result of acceleration or deceleration of the vehicle.
If $C_{Sense} = 0$, $\theta_1{}^* = \varphi^* = \tan^{-1}\alpha^*$, so that the vehicle body is inclined to an equilibrium inclination angle (angle between resultant force of gravity and the inertial force). As a result, the rider feels no inertial force (though downward force increases relative to the rider).

In this embodiment, $C_{Sense} = p$ is preset as a value that makes the rider feel an optimum acceleration. For example, if $C_{Sense} = 1$, the movement of the gravity center position required for achieving the vehicle target acceleration $\alpha^*$ is accomplished only by the movement of the riding section 13, and the vehicle runs with the vehicle body controlled to maintain an upstanding position.

When the riding section movement amount reaches the stroke limit $\pm\lambda_{S,Max}$, specifically, if the vehicle target acceleration $\alpha^* < -\alpha_{Max}$ or $\alpha^* > \alpha_{Max}$, the balance is maintained by further inclining the vehicle body as shown in FIG. 5 (Expressions 1 and 3).

Note that, if the riding section movement amount has not reached the stroke limit, the vehicle body inclination angle may, instead, be limited.

(Modified example of determination of the target vehicle body inclination angle $\theta_1^*$ and the riding section target position $\lambda_S^*$)

The above embodiment has been described for the case, in which the target vehicle body inclination angle $\theta_1^*$ and the riding section target position $\lambda_S^*$ are determined by selecting, from the relationship between the vehicle target acceleration $\alpha^*$ and the threshold value $\pm\alpha_{Max}$, any one of Expressions 1 to 3 and any one of Expressions 4 to 6.

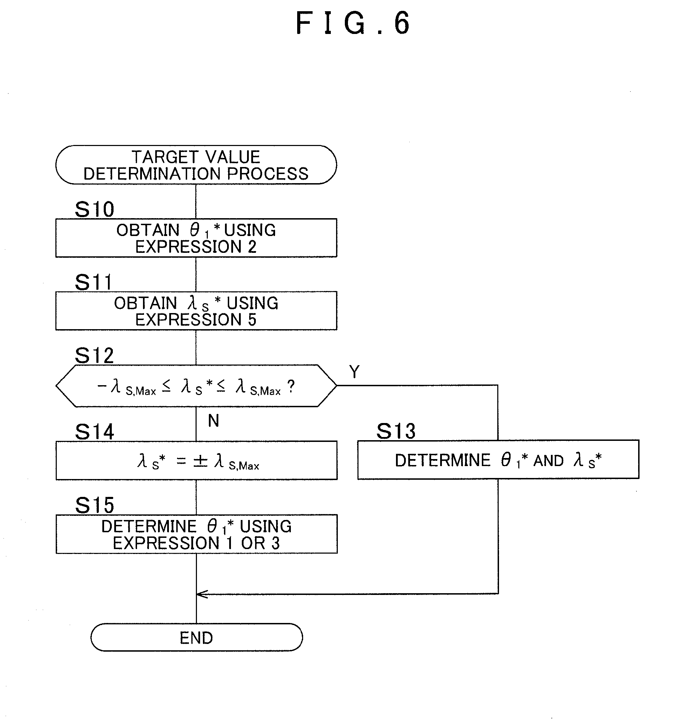

The target vehicle body inclination angle $\theta_1^*$ and the riding section target position $\lambda_S^*$ may, instead, be determined through a target value determination process shown in FIG. 6.

FIG. 6 is a flowchart showing the target value determination process in the <u>first embodiment</u>.

The main control ECU 21 first calculates the target vehicle body inclination angle $\theta_1^*$ corresponding to the vehicle target acceleration $\alpha^*$ using Expression 2 (step 10).

Using the determined $\theta_1^*$ and Expression 5, the main control ECU 21 calculates the riding section target position $\lambda_S^*$ (step 11) and determines whether the obtained $\lambda_S^*$ falls within the range of $-\lambda_{S,Max} \leq \lambda_S^* \leq \lambda_{S,Max}$ over which the riding section can move (step 12).

If the calculated value $\lambda_S^*$ falls within the range over which the riding section can move (step 12; Y), the main control ECU 21 determines $\theta_1^*$ obtained in step 10 to be the target vehicle body inclination angle and $\lambda_S^*$ obtained in step 11 to be the riding section target position, respectively (step 13), before terminating the process.

If the calculated value $\lambda_S^*$ falls outside the range over which the riding section can move (step 12; N), the main control ECU 21 determines the maximum riding section movement amount $\pm\lambda_{S,Max}$ to be the riding section target position $\lambda_S^*$ (step 14).

The main control ECU 21 again calculates $\theta_1^*$ that corresponds to the vehicle target acceleration $\alpha^*$ using Expression 1 or 3 and determines this to be the target vehicle body inclination angle $\theta_1^*$ (step 15), before terminating the process.

According to the target value determination process described above, the target vehicle body inclination angle $\theta_1^*$ and the riding section target position $\lambda_S^*$ can be determined without using the threshold value $\alpha_{Max}$ for determining which expression to be used among Expressions 1 to 3 and Expressions 4 to 6.

In this embodiment, Expressions 1 to 6 that are strictly theoretical expressions are used to determine the vehicle body target posture. A simpler expression may be used instead. For example, linearized expressions of Expressions 1 to 6 may be used. Further, instead of using the expressions, a map may be prepared in advance representing a relationship between the vehicle target acceleration $\alpha^*$ and the vehicle body target posture and the vehicle body target posture may be determined using that map.

More complicated relational expression may also be used. For example, a relational expression may be established, with which: if an absolute value of the vehicle target acceleration $\alpha^*$ is equal to, or smaller than a predetermined threshold value, the riding section is moved without inclining the vehicle body at all; and inclination of the vehicle body starts as the absolute value exceeds the predetermined threshold.

Note that, in this embodiment, the maximum forward movement amount of the riding section from a reference position is equal to the maximum rearward movement amount of the riding section from the reference position. Instead, these movement amounts may be different from each other. For example, if the maximum rearward movement amount is greater than the maximum forward movement amount, braking performance can be improved over acceleration performance. In this case, similar control as described above can be achieved easily by correcting the threshold value $\alpha_{Max}$ to correspond to each of limit values.

Returning to the running and posture control process (FIG. 4), the main control ECU 21 uses each of the determined target values to calculate remaining target values (step 150).

Specifically, each target value is differentiated with respect to time or integrated with respect to time to calculate a drive wheel rotation angle target value $\theta_W^*$, a vehicle body inclination angular velocity target value $[\dot{\theta}_1^*]$, and a riding section movement speed target value $[\dot{\lambda}_S^*]$.

Next, the feedforward output of each actuator is determined (step 160).

The main control ECU 21 uses the following Expression 7 to determine a feedforward output $\tau_{W,FF}$ that is estimated to be required for achieving the vehicle target acceleration $\alpha^*$. Note that, M- in Expression 7 represents gross mass of the vehicle in which a rotational inertia component of the drive wheel is incorporated.

Additionally, Expression 8 is used to determine a feedforward output $S_{S,FF}$ of the riding section motor 62 from each of the target values. $S_{S,FF}$ corresponds to riding section thrust force required to prevent the riding section from being moved by gravity so as to stay at the target position at the target vehicle body inclination angle $\theta_1^*$.

$$(\text{Expression 7}) \ \tau_{W,FF} = M{\sim}R_Wg\alpha^*$$

$$(\text{Expression 8}) \ S_{S,FF} = -m_Sg\sin\theta_1^*$$

Each state quantity can be more accurately controlled by applying the feedforward outputs obtained by Expressions 7 and 8.

Note that this method is particularly effective in decreasing steady-state deviation of the state quantity. An integral gain may, instead, be given in feedback control (step 190).

The main control ECU 21 next acquires each state quantity from each sensor (step 170). Specifically, the drive wheel rotation angle (rotation angular velocity) is acquired from the drive wheel sensor 51, the vehicle body inclination angle (inclination angular velocity) is acquired from the vehicle body inclination sensor 41, and the riding section position (movement speed) is acquired from the riding section sensor 61.

Additionally, the main control ECU 21 calculates remaining state quantities (step 180). Specifically, the drive wheel rotation angle (rotation angular velocity), the vehicle body inclination angle (inclination angular velocity), and the riding section position (movement speed) are integrated or differentiated with respect to time to calculate the remaining state quantities.

The main control ECU 21 then determines a feedback output of each actuator (step 190).

Specifically, Expression 9 is used to determine a feedback output $\tau_{W,FB}$ of the drive motor 52 and Expression 10 is used to determine a feedback output $S_{S,FB}$ of the riding section motor 62, based on a deviation between each target value and actual state quantity.

In Expressions 9 and 10, $K^{**}$ is a feedback gain and, for example, an optimum regulator value is preset for each feedback gain $K^{**}$. In addition, an integral gain may be introduced to eliminate the steady-state deviation as described earlier.

$$(\text{Expression 9}) \ \tau_{W,FB} =$$

$$-K_{W1}(\theta_W-\theta_W^*)-K_{W2}([\theta_W]-[\theta_W^*])-K_{W3}(\theta_1-\theta_1^*)-K_{W4}([\theta_1]-[\theta_1^*])-K_{W5}(\lambda_S-\lambda_S^*)-K_{W6}([\lambda_S]-[\lambda_S^*])$$

$$(\text{Expression 10}) \ S_{S,FB} =$$

$$-K_{S1}(\theta_W-\theta_W^*)-K_{S2}([\theta_W]-[\theta_W^*])-K_{S3}(\theta_1-\theta_1^*)-K_{S4}([\theta_1]-[\theta_1^*])-K_{S5}(\lambda_S-\lambda_S^*)-K_{S6}([\lambda_S]-[\lambda_S^*])$$

Some of the feedback gains may be zeroed to simplify the expressions. For example, $\tau_{W,FB} = -K_{W2}([\theta_W]-[\theta_W^*])-K_{W3}(\theta_1-\theta_1^*)$ may be used in place of Expression 9 and $S_{S,FB} = -K_{S5}(\lambda_S-\lambda_S^*)$ may be used in place of Expression 10.

Finally, the main control ECU 21 gives each element control system a command value (step 200) and returns to a main routine.

Specifically, the main control ECU 21 supplies the drive wheel control ECU 22 with a sum ($\tau_{W,FF}+\tau_{W,FB}$) of the feedforward output $\tau_{W,FF}$ determined in step 160 and the feedback output $\tau_{W,FB}$ determined in step 190 as a drive torque command value $\tau_W$. Further, the main control ECU 21 supplies the riding section control ECU 23 with a sum ($S_{S,FF}+S_{S,FB}$) of the feedforward output $S_{S,FF}$ and the feedback output $S_{S,FB}$ as a riding section thrust force command value $S_S$.

Accordingly, the drive wheel control ECU 22 supplies the drive motor 52 with an input voltage (drive voltage) corresponding to the drive torque command value $\tau_W$ to thereby apply the drive wheel drive torque $\tau_W$.

Similarly, the riding section control ECU 23 supplies the riding section motor 62 with an input voltage (drive voltage) corresponding to the riding section thrust force command value $S_S$ to thereby move the riding section.

(3) Second embodiment

In the first embodiment, the rider acceleration sensation coefficient $C_{Sense}$ is set to a preset value, thereby making a rate of sensory acceleration to vehicle acceleration (target value) constant.

By contrast, the second embodiment allows the degree of sensory acceleration to be quantitatively adjustable according to the preference of the rider. Specifically, in determining the target vehicle body posture, the vehicle body inclination angle and the riding section movement amount are determined such that the degree of sensory acceleration is adjusted according to the preference of the rider. To make the rider feel stronger acceleration, for example, the riding section 13 is moved, while suppressing the vehicle body inclination. This is achieved by making the rider acceleration sensation coefficient $C_{Sense}$ variable in Expression 2.

By varying the rider acceleration sensation coefficient $C_{Sense}$ as described above, various types of requirements by various types of riders can be met, while ensuring stability in posture control, so that an even more comfortable inverted type vehicle can be provided.

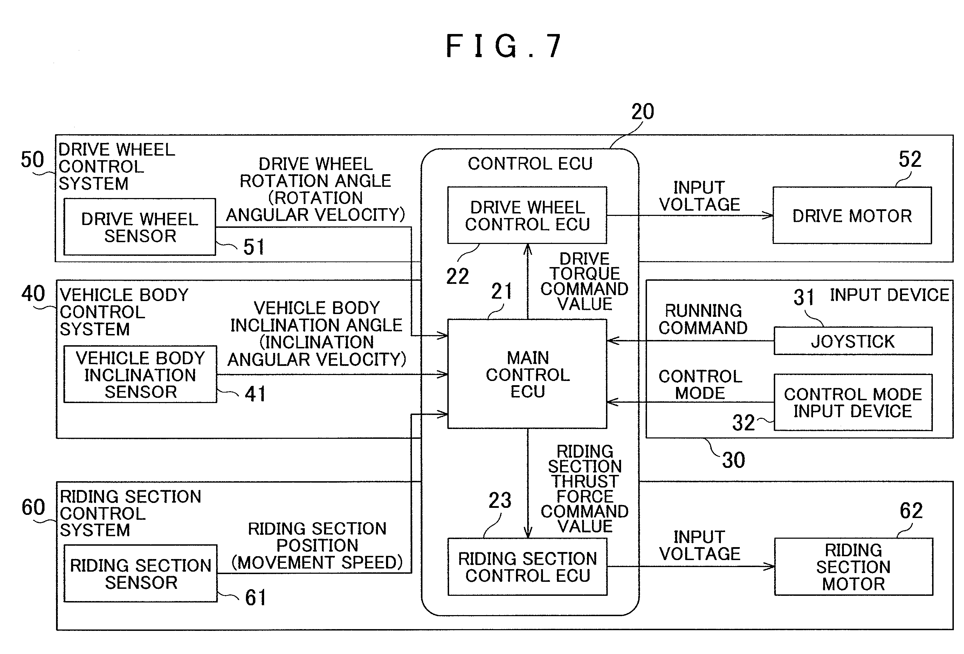

FIG. 7 is a block diagram of a control system according to the second embodiment. Like or corresponding parts are identified by the same reference numerals as those used for the control system of the first embodiment shown in FIG. 3 and descriptions for those parts will be omitted.

Referring to FIG. 7, in the second embodiment, an input device 30 includes a control mode input device 32.

The control mode input device 32 includes a switch for selecting a control mode. The following two control modes are available: a smooth mode in which the vehicle body inclination is suppressed with greater sensory acceleration; and an active mode in which the vehicle body inclination is large with suppressed sensory acceleration.

The control mode selected by the rider is supplied to a main control ECU 2121 from the control mode input device 32.

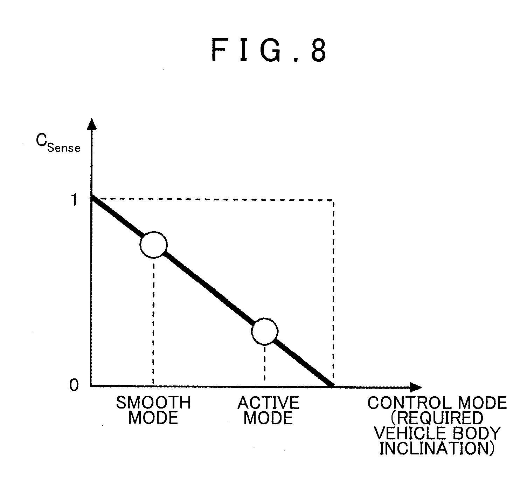

FIG. 8 is a diagram showing correspondence between the control modes to be selected and the rider acceleration sensation coefficient $C_{Sense}$.

As shown in FIG. 8, in the smooth mode, by setting $C_{Sense}$ (Expression 2) to a value close to 1, for example, 0.75, greater sensory acceleration is provided with small vehicle body inclination (while a forward-backward movement width of the riding section becomes great).

In the active mode, on the other hand, by setting $C_{Sense}$ to a value close to 0, for example 0.25, suppressed sensory acceleration is provided with large vehicle body inclination (while the forward-backward movement width of the riding section becomes small).

Though the second embodiment provides the two different control modes, more modes (for example, three modes including $C_{Sense} = 0.5$, or five modes further including $C_{Sense} = 1$ and 0) may further be provided.

Further, the coefficient $C_{Sense}$ may be varied according to a numeric value (required vehicle body inclination degree) input by the rider. In this case, the control mode input device 32 includes a dial type analog input device or a touch panel type digital input device.

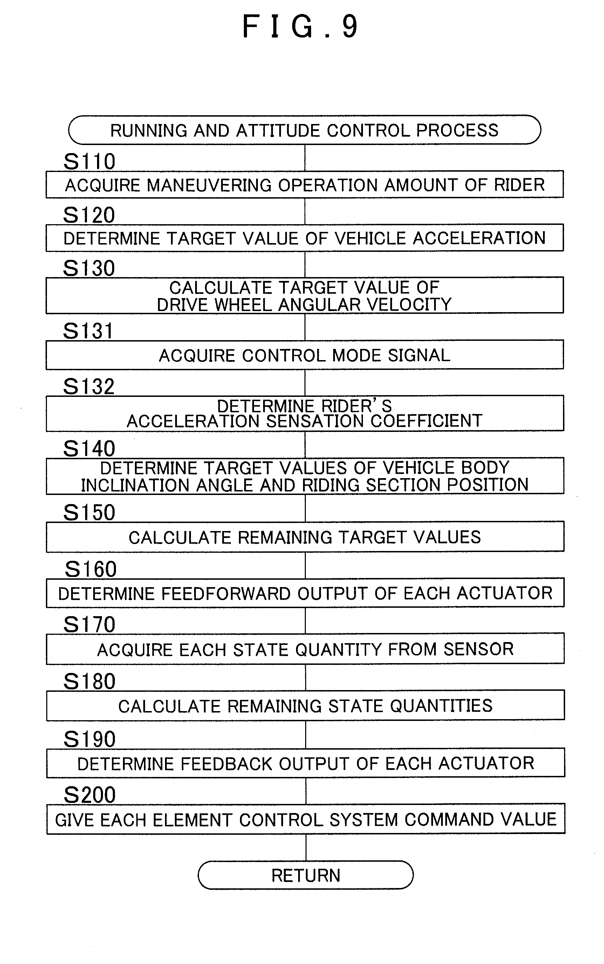

Running and posture control process performed in the second embodiment having above arrangement will be described below with reference to a flowchart of FIG. 9. In the descriptions of the flowchart in the second embodiment, like or corresponding portions are identified by the same reference numerals or step numbers as those used for the first embodiment and descriptions for those portions will be omitted.

In the running and posture control in the second embodiment, the main control ECU 21 first determines, as in the first embodiment, how the vehicle is moved according to the intention of the rider, specifically, the running target of the vehicle (steps 110 through 130).

The main control ECU 21 then acquires a control mode signal (step 131) and determines the rider acceleration sensation coefficient (step 132). Specifically, the main control ECU 21 recognizes the control mode specified by the driver through the control mode input device 32 and sets a value corresponding to the specified control mode for the rider acceleration sensation coefficient $C_{Sense}$ (see FIG. 8).

The main control ECU 21 next determines the target vehicle body inclination angle $\theta_1^*$ and the riding section target position $\lambda_S^*$ (step 140). In the second embodiment, the vehicle body target posture is determined using the vehicle target acceleration $\alpha^*$ and the set rider acceleration sensation coefficient $C_{Sense}$. Specifically, Expressions 1 to 3 are used to determine the target vehicle body inclination angle $\theta_1^*$ and expressions 4 to 6 are used to determine the riding section target position $\lambda_S^*$.

In the second embodiment, as in the first embodiment, the target value determination process described with reference to FIG. 6 may be used to determine the target vehicle body inclination angle $\theta_1^*$ and the riding section target position $\lambda_S^*$.

Similarly as in the first embodiment, the main control ECU 21 hereafter determines the output values of the drive motor 52 and the riding section motor 62 for achieving the vehicle running state and vehicle body posture set as targets; then, according to the values determined, controls the actual outputs of the drive motor 52 and the riding section motor 62 using the drive wheel control ECU 22 and the riding section control ECU 23 (steps 150 to 200) before returning to the main routine.

According to the second embodiment, whether to accelerate or decelerate while inclining the vehicle body or moving the seat can be quantitatively adjusted to suit the "preference" of the rider.

The "preference" varies depending on the mood or situation at the specific moment. Thus, adjustments should be successively made according to follow the variation. In addition, it is difficult to have the rider adjust parameters of a complicated control system and, moreover, during sudden acceleration or deceleration, the seat or the vehicle body needs to be largely inclined against requirements of the rider in order to achieve stability of the vehicle body posture control. In view of these problems, this embodiment allows the riding comfort to be adjusted easily by changing only one parameter, so as to achieve the control in which consecutive adjustments can be made and stability during heavy acceleration or deceleration is ensured.

(4) Third embodiment

A third embodiment will be described below.

The first and second embodiments have been described for the case, in which the movement of the gravity center position relative to the vehicle target acceleration $\alpha^*$ is accomplished through inclination of the vehicle body and movement of the riding section. In the third embodiment, a balancer as a weight body different from the riding section is moved in the forward-backward direction to perform the running and posture control of the inverted type vehicle in the forward-backward direction.

Specifically, the target running state is achieved while maintaining the balance of the vehicle body by controlling the vehicle body inclination, the riding section position, and the balancer position according to the target running state, including acceleration/deceleration and stop.

Although omitted in the description of the third embodiment, the rider acceleration sensation coefficient $C_{Sense}$ may be variable according to the sensory acceleration the rider prefers as in the second embodiment.

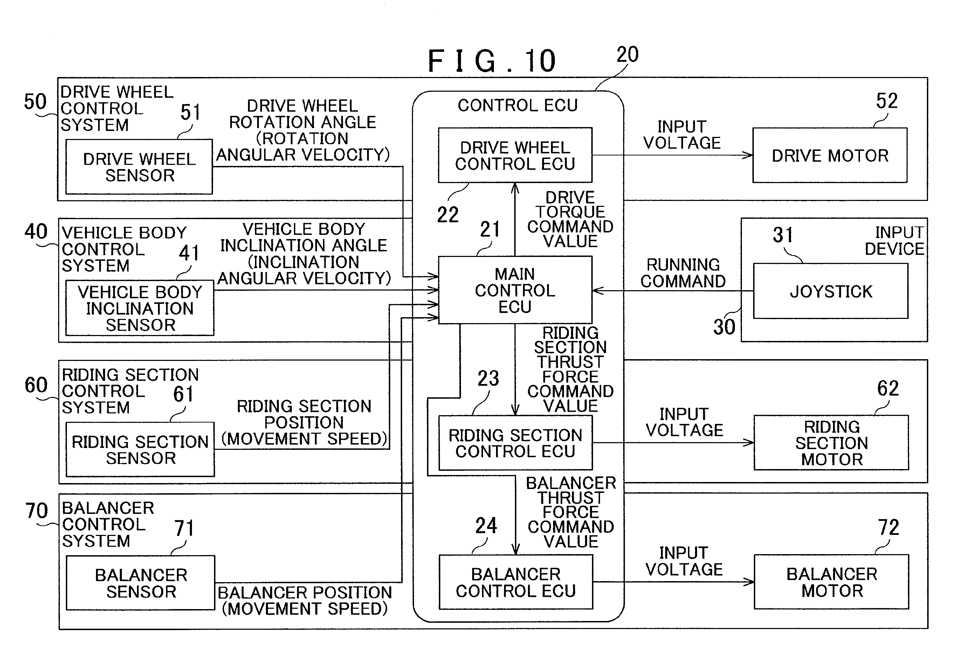

FIG. 10 is a block diagram of a control system according to the third embodiment. Like or corresponding parts are identified by the same reference numerals as those used for the control system of the first embodiment shown in FIG. 3 and descriptions for those parts will be omitted.

Referring to FIG. 10, the control system in the third embodiment further includes a balancer control ECU 24, a balancer sensor (balancer movement state measurement device) 71, and a balancer motor (balancer actuator) 72. A main control ECU 21 functions, together with each of the foregoing parts, as a balancer control system 70.

The balancer sensor 71 supplies the main control ECU 21 with data representing a balancer position. The main control ECU 21 supplies the balancer control ECU 24 with a balancer thrust force command value. The balancer control ECU 24 supplies the balancer drive actuator 62 with an input voltage (drive voltage) corresponding to the balancer thrust force command value.

The third embodiment otherwise has the same arrangements as the first embodiment described with reference to FIG. 3.

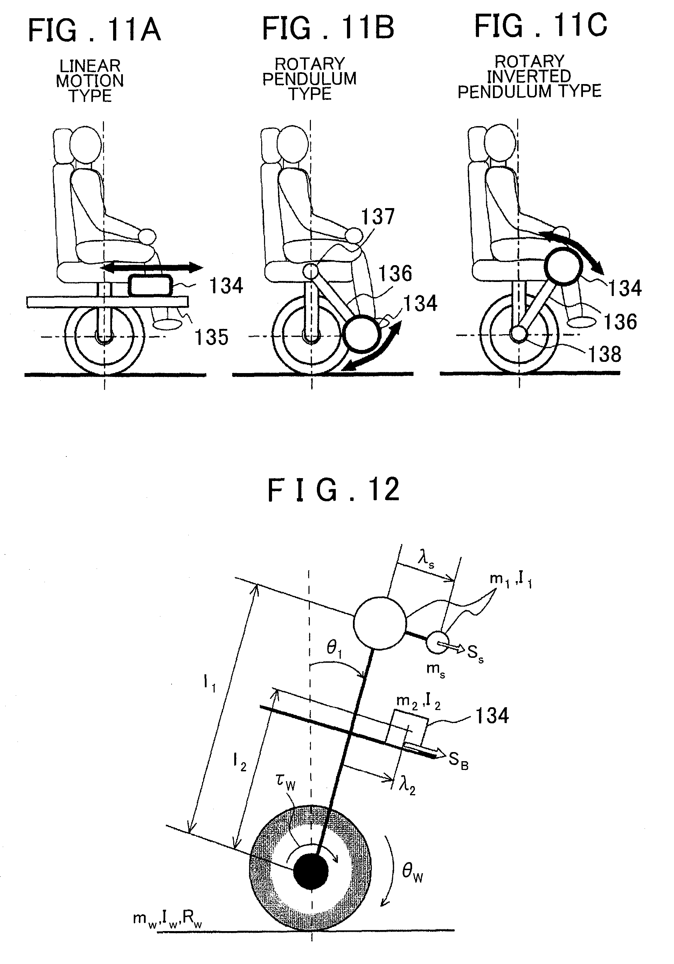

FIG. 11 shows a typical arrangement of a balancer movement mechanism moving a balancer 134 to a desired position.

The balancer movement mechanism functions as weight body movement means and forms a part of the vehicle body. The balancer movement mechanism moves the balancer 134 as a weight body in the forward-backward direction to move the gravity center of the vehicle body.

The balancer 134 is disposed between the riding section 13 and the drive wheel 11. The balancer 134 can be moved in the forward-backward direction (a direction perpendicular to a vehicle body central axis and the axle) by the balancer drive actuator 62.

The balancer movement mechanism of FIG. 11A in this embodiment uses a slider type actuator 135 to move the balancer 134 linearly on a slider.

As another embodiment, the balancer movement mechanisms shown in FIGS. 11B and 11C use a rotary movement type balancer. A support shaft 136 has a first end on which a balancer 134 is disposed and a second end on which a rotor of a balancer support shaft rotation motor 137/138 is fixed. The balancer support shaft rotation motor 137/138 moves the balancer 134 along a circumferential orbit of a circle having a radius of the support shaft 136.

In the balancer movement mechanism of FIG. 11B, the balancer support shaft rotation motor 137 is disposed at a lower portion of a seat cushion 131 and the balancer 134 moves on the lower side of the circumferential orbit.

In the balancer movement mechanism of FIG. 11C, the balancer support shaft rotation motor 138 is disposed coaxially with the drive wheel 11 and the balancer 134 moves on the upper side of the circumferential orbit.

As still another example of the balancer movement mechanism, an extendable actuator may be used to move the balancer 134.

Two extendable actuators may, for example, be used. Each of the two extendable actuators has a first end fixed to either a forward or rearward portion of the vehicle and a second end on which the balancer 134 is fixed. One of the two extendable actuators is extended, while the other is contracted, to thereby move the balancer 134 linearly.

FIG. 12 shows a dynamic model of a vehicle posture control system including the balancer according to this embodiment. Portions of this dynamic model other than the balancer are applicable to other embodiments.

The balancer 134 in FIG. 12 represents the case of FIG. 12A, in which the balancer moves in the direction perpendicular to the axle and vehicle central axis.

Codes used in FIG. 12 have meanings as detailed below. The same applies to codes used in expressions appearing in this specification.

(a) State quantities
$\theta_W$: Drive wheel rotation angle [rad]
$\theta_1$: Vehicle body inclination angle (with reference to the vertical axis) [rad]
$\lambda_2$: Balancer position (with reference to the vehicle body central point) [m]
$\lambda_S$: Riding section position (with reference to the vehicle body central point) [m]
(b) Inputs
$\tau_W$: Drive torque (total of two wheels) [Nm]
$S_B$: Balancer thrust force [N]
$S_S$: Riding section thrust force [N]
(c) Physical constants
g: Gravitational acceleration [m/s$^2$]
(d) Parameters
$m_W$: Drive wheel mass (total of two wheels) [kg]
$R_W$: Drive wheel ground contact radius [m]
$I_W$: Drive wheel inertia moment (total of two wheels) [kgm$^2$]
$D_W$: Viscous damping coefficient relative to drive wheel rotation [Ns/rad]
$m_1$: Vehicle body mass (including riding section and balancer) [kg]
$l_1$: Vehicle body gravity center distance (from axle) [m]
$I_1$: Vehicle body inertia moment (about gravity center) [kgm$^2$]
$D_1$: Viscous damping coefficient relative to vehicle body inclination [Ns/rad]
$m_2$: Balancer mass [kg]
$l_2$: Balancer reference gravity center distance (from axle) [m]
$I_2$: Balancer inertia moment (about gravity center) [kgm$^2$]
$D_2$: Viscous damping coefficient relative to balancer translation [Ns/m]
$m_S$: Riding section mass [kg]
$l_S$: Riding section reference gravity center distance (from axle) [m]
$I_S$: Riding section inertia moment (about gravity center) [kgm$^2$]
$D_S$: Viscous damping coefficient relative to riding section translation [Ns/m]

Running and posture control process performed in the third embodiment having above arrangement will be described below.

The running and posture control process in the third embodiment is substantially similar to that in the first embodiment described with reference to FIG. 4. Thus, portions different from that in the first embodiment will therefore be mainly described with reference to FIG. 4 and the descriptions of the identical portions will be omitted.

In the running and posture control process according to the third embodiment, the main control ECU 21 first determines, as in the first embodiment, how the vehicle is moved according to the intention of the rider, specifically, determines the running target of the vehicle (steps 110 through 130).

The main control ECU 21 then determines the target vehicle body inclination angle $\theta_1{}^*$, the riding section target position $\lambda_S{}^*$, and a balancer target position $\lambda_2{}^*$ as a target value of each state quantity (step 140).

Specifically, according to the magnitude of the vehicle target acceleration $\alpha^*$ determined in step 120, the target vehicle body inclination angle $\theta_1{}^*$ is determined using Expressions 11 to 13 given below according to the magnitude of the vehicle target acceleration $\alpha^*$, the riding section target position $\lambda_S{}^*$ is determined using Expressions 14 to 18 given below, and the balancer target position $\lambda_2{}^*$ is determined using Expressions 19 to 21.

$$(\text{Expression 11})\ \theta_1{}^* = \varphi^* - \beta_{S,Max} + \sin^{-1}(\gamma\sin\varphi^*\cos\beta_{S,Max})\ (\alpha^* < -\alpha_{S,Max})$$

$$(\text{Expression 12})\ \theta_1{}^* = (1 - C_{Sense})\varphi^*\ (-\alpha_{S,Max} \leq \alpha^* \leq \alpha_{S,Max})$$

$$\text{(Expression 13) } \theta_1{}^* = \varphi^* + \beta_{S,Max} + \sin^{-1}(\gamma\sin\varphi^*\cos\beta_{S,Max}) \ (\alpha^* > \alpha_{S,Max})$$

$$\text{(Expression 14) } \lambda_S{}^* = -\lambda_{S,Max} \ (\alpha^* < -\alpha_{S,Max})$$

$$\text{(Expression 15) } \lambda_S{}^* = l_1(m_1/m_S)[\tan(\varphi^*-\theta_1{}^*)+\gamma(\sin\varphi^*/\cos(\varphi^*-\theta_1{}^*))]+(m_2/m_S)\lambda_{2,Max}$$
$$(-\alpha_{S,Max} \leq \alpha^* < -\alpha_{2,Max})$$

$$\text{(Expression 16) } \lambda_S{}^* = 0 \ (-\alpha_{2,Max} \leq \alpha^* \leq \alpha_{2,Max})$$

$$\text{(Expression 17) } \lambda_S{}^* = l_1(m_1/m_S)[\tan(\varphi^*-\theta_1{}^*)+\gamma(\sin\varphi^*/\cos(\varphi^*-\theta_1{}^*))]-(m_2/m_S)\lambda_{2,Max}$$
$$(\alpha_{2,Max} < \alpha^* \leq \alpha_{S,Max})$$

$$\text{(Expression 18) } \lambda_S{}^* = \lambda_{S,Max} \ (\alpha^* > \alpha_{S,Max})$$

$$\text{(Expression 19) } \lambda_2{}^* = -\lambda_{2,Max} \ (\alpha^* < -\alpha_{2,Max})$$

$$\text{(Expression 20) } \lambda_2{}^* = l_1(m_1/m_2)[\tan(\varphi^*-\theta_1{}^*)+\gamma(\sin\varphi^*/\cos(\varphi^*-\theta_1{}^*))] \ (-\alpha_{2,Max} \leq \alpha^* \leq \alpha_{2,Max})$$

$$\text{(Expression 21) } \lambda_2{}^* = \lambda_{2,Max} \ (\alpha^* > \alpha_{2,Max})$$

In Expressions 11 and 13, $\beta_{S,Max}$ is as follows:

$$\beta_{S,Max} = \tan^{-1}((m_S\lambda_{S,Max}+m_2\lambda_{2,Max})/m_1l_1).$$

Further, $\lambda_{2,Max}$ is a set value representing the maximum balancer movement amount.
Other codes appearing in Expressions 11 to 21 are the same as those in Expressions 1 to 6 of the first embodiment.
A threshold value $\alpha_{2,Max}$ is the vehicle target acceleration $\alpha^*$ when $\lambda_2{}^* = \lambda_{2,Max}$ in Expression 20 specifically, when the balancer has been moved to its stroke limit. Meanwhile, a threshold value $\alpha_{S,Max}$ is the vehicle target acceleration $\alpha^*$ when $\lambda_S{}^* = \lambda_{S,Max}$ in Expression 17, specifically, when the riding section has been moved to its stroke limit.
As in the first embodiment, the threshold values $\alpha_{2,Max}$ and $\alpha_{S,Max}$ are preset values, but cannot be obtained analytically. These threshold values are therefore determined, for example, through iterative calculation or by an approximate expression.

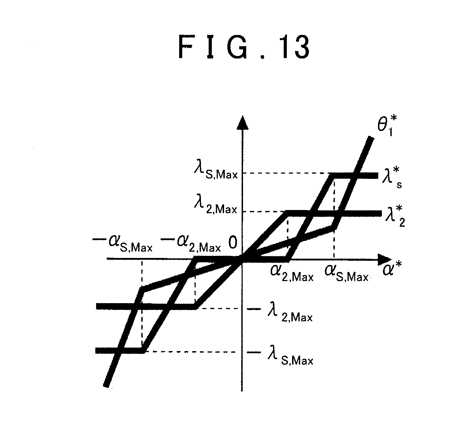

FIG. 13 is a diagram showing a relationship between the vehicle target acceleration $\alpha^*$ (abscissa), the target vehicle body inclination angle $\theta_1^*$, the riding section target position $\lambda_S^*$, and the balancer target position $\lambda_2^*$ given by Expressions 11 to 21.

If the vehicle target acceleration $\alpha^*$ falls within a range of the threshold value $\pm\alpha_{2,Max}$ ($-\alpha_{2,Max} \le \alpha^* \le \alpha_{2,Max}$), the movement of the gravity center position required for achieving the vehicle target acceleration $\alpha^*$ is accomplished by the movement of the balancer and the inclination of the vehicle body with the riding section target position $\lambda_S^* = 0$ (Expression 16).

Specifically, the balancer target position $\lambda_2^*$ is determined using Expression 20 and the target vehicle body inclination angle $\theta_1^*$ is determined using Expression 12.

If the vehicle target acceleration $\alpha^*$ falls within a range of the threshold value $\pm\alpha_{2,Max}$ and the threshold value $\pm\alpha_{S,Max}$ ($-\alpha_{S,Max} \le \alpha^* \le -\alpha_{2,Max}$ or $\alpha_{2,Max} \le \alpha^* \le \alpha_{S,Max}$), further movement of the gravity center position required for achieving the vehicle target acceleration $\alpha^*$ is accomplished by the movement of the riding section and the inclination of the vehicle body with the balancer fixed at the balancer target position $\lambda_2^* = \pm\lambda_{2,Max}$ (Expression 19, Expression 21) according to the direction of the target acceleration (whether + or -).

Specifically, if the vehicle target acceleration $\alpha^*$ is + (acceleration), the balancer position $\lambda^*$ is fixed at a + limit value and, if the vehicle target acceleration $\alpha^*$ is - (deceleration), the balancer position $\lambda^*$ is fixed at a - limit value.

Specifically, the riding section target position $\lambda_S^*$ is determined using Expressions 15 and 17 and the target vehicle body inclination angle $\theta_1^*$ is determined using Expression 12.

If the vehicle target acceleration $\alpha^*$ falls outside the range of the threshold value $\pm\alpha_{S,Max}$ ($\alpha^* < -\alpha_{S,Max}$ or $\alpha_{S,Max} < \alpha^*$), further movement of the gravity center position required for achieving the vehicle target acceleration $\alpha^*$ is accomplished by the inclination of the vehicle body with the balancer fixed at the balancer target position $\lambda_2^* = \pm\lambda_{2,Max}$, which is the stroke limit (Expression 19, Expression 21) and the riding section fixed at the riding section target position $\lambda_S^* = \pm\lambda_{S,Max}$, which is the stroke limit (Expression 14, Expression 18).

Specifically, the target vehicle body inclination angle $\theta_1^*$ is determined using Expressions 11 and 13.

As such, in the third embodiment, balance is maintained by moving only the balancer and not the riding section during light acceleration and, when the balancer movement amount reaches the limit, the riding section is also moved to maintain balance.

This allows the rider to feel appropriate acceleration with a small vehicle body inclination and without moving the riding section during light acceleration.

(Modified example of determination of the target vehicle body inclination angle $\theta_1^*$, the balancer target position $\lambda_2^*$, and the riding section target position $\lambda_S^*$)

The above embodiment has been described for the case, in which each target value (the target vehicle body inclination angle $\theta_1^*$, the balancer target position $\lambda_2^*$, or the riding section target position $\lambda_S^*$) is determined by selecting any of Expressions 11 to 13, Expressions 14 to 18, and Expressions 19 to 21 from the relationship between the vehicle target acceleration $\alpha^*$ and the threshold value $\pm\alpha_{2,Max}$ or the threshold value $\pm\alpha_{S,Max}$.

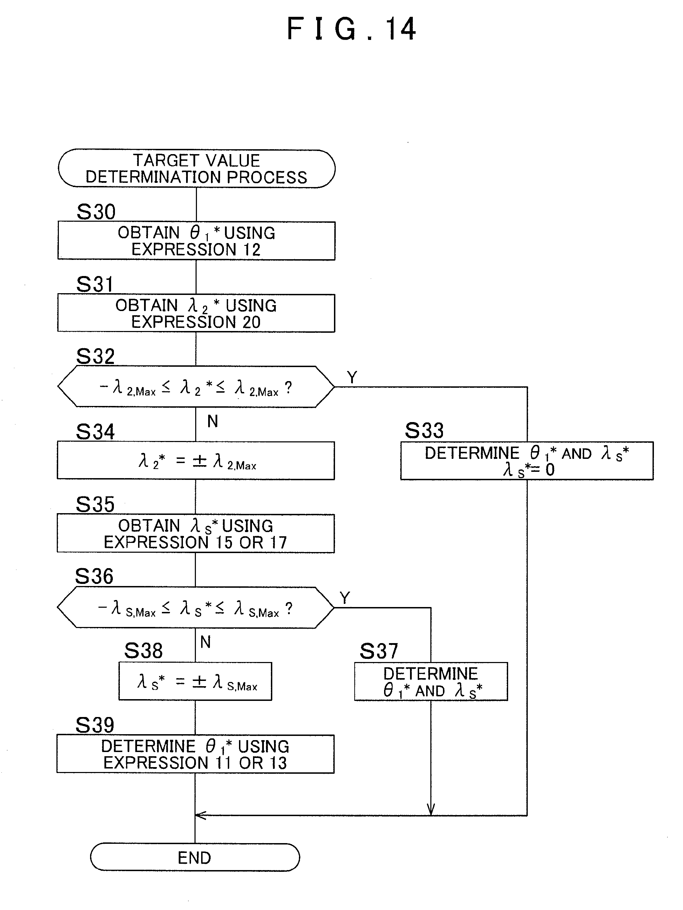

Each target value may instead be determined through target value determination process shown in FIG. 14 as in the modified example of the first embodiment.

FIG. 14 is a flowchart showing details of the target value determination process in the third embodiment.

The main control ECU 21 first calculates the target vehicle body inclination angle $\theta_1^*$ corresponding to the vehicle target acceleration $\alpha^*$ using Expression 12 (step 30).

The main control ECU 21 then calculates the balancer target position $\lambda_2^*$ using the determined $\theta_1^*$ and Expression 20 (step 31) and determines whether the calculated value $\lambda_2^*$ falls within a range of $-\lambda_{2,Max} \le \lambda_2^* \le \lambda_2^*,_{Max}$ over which the balancer can move (step 32).

If the calculated value $\lambda_2^*$ falls within the range over which the balancer can move (step 32; Y), the main control ECU 21 determines (step 33) $\theta_1^*$ calculated in step 30 to be the target vehicle body inclination angle and $\lambda_2^*$ calculated in step 31 to be the balancer target position, before terminating the process.

If, on the other hand, the calculated value $\lambda_2^*$ falls outside the range over which the balancer can move (step 32; N), the main control ECU 21 determines the maximum balancer movement amount $\pm\lambda_{2,Max}$ to be the balancer target position $\lambda_2^*$ (step 34).

The main control ECU 21 then calculates the riding section target position $\lambda_S^*$ using $\theta_1^*$ determined in step 30 and Expression 15 or 17 (step 361) and determines whether the calculated value $\lambda_S^*$ falls within a range of $-\lambda_{S,Max} \le \lambda_S^* \le \lambda_{S,Max}$ over which the riding section can move (step 36).

If the calculated value $\lambda_S^*$ falls within the range over which the riding section can move (step 36; Y), the main control ECU 21 determines (step 37) $\theta_1^*$ calculated in step 30 to be the target vehicle body inclination angle and $\lambda_S^*$ calculated in step 35 to be the riding section target position, respectively, before terminating the process.

If, on the other hand, the calculated value $\lambda_S^*$ falls outside the range over which the riding section can move (step 36; N), the main control ECU 21 determines the maximum riding section movement amount $\pm\lambda_{S,Max}$ to be the riding section target position $\lambda_S^*$ (step 38).

The main control ECU 21 again calculates $\theta_1^*$ that corresponds to the vehicle target acceleration $\alpha^*$ using Expression 11 or 13 and determines this to be the target vehicle body inclination angle $\theta_1^*$ (step 39), before terminating the process.

According to the target value determination process described above, the target vehicle body inclination angle $\theta_1^*$, the balancer target position $\lambda_2^*$, and the riding section target position $\lambda_S^*$ can be determined without using the threshold values $\alpha_{2,Max}$, $\alpha_{S,Max}$ for determining which expression to be used selected from among Expressions 11 to 13, Expressions 14 to 18, and Expressions 19 to 21.

In this embodiment, Expressions 11 to 21 that are strictly theoretical expressions are used to determine the vehicle body target posture. A simpler expression may be used instead. For example, linearized expressions of Expressions 11 to 21 may be used. Further, instead of using the expressions, a map may be prepared in advance representing a relationship between the vehicle target acceleration $\alpha^*$ and the vehicle body target posture and the vehicle body target posture may be determined using that map.

A more complicated relational expression may also be used instead. For example, a relational expression may be established, with which: if an absolute value of the vehicle target acceleration $\alpha^*$ is equal to, or smaller than a predetermined threshold value, the riding section is moved without inclining the vehicle body at all; and inclining of the vehicle body starts as the absolute value exceeds the predetermined threshold.

Note that, in this embodiment, the maximum forward movement amount relative to a reference position in the riding section or the balancer is equal to the maximum rearward movement amount relative to the reference position in the riding section or the balancer. Instead, these movement amounts may be different from each other. For example, by making the maximum rearward movement amount greater, braking performance can be improved over acceleration performance. In this case, similar control can be achieved easily by correcting the threshold value $\alpha_{Max}$ to correspond to each of limit values.

Returning to the running and posture control process (FIG. 4), the main control ECU 21 uses each of the determined target values $\theta_1^*$, $\lambda_2^*$, $\lambda_S^*$ to calculate remaining target values (step 150).

Specifically, each target value is differentiated with respect to time or integrated with respect to time to calculate the drive wheel rotation angle target value $\theta_W^*$, the vehicle body inclination angular velocity target value $[\theta_1^*]$, a balancer movement speed target value $[\lambda_2^*]$, and the riding section movement speed target value $[\lambda_S^*]$.

Next, the feedforward output of each actuator is determined (step 160). The main control ECU 21 uses, as in the first embodiment, Expressions 7 and 8 to determine feedforward outputs $\tau_{W,FF}$ and $S_{S,FF}$ of the drive motor 52 and the riding section motor 62. Further, the main control ECU 21 determines a feedforward output $S_{B,FF}$ of the balancer motor 72 using Expression 22.

Similarly to the feedforward output $S_{S,FF}$ of the riding section motor 62, $S_{B,FF}$ corresponds to balancer thrust force required to keep the balancer at the target position with the target vehicle body inclination angle $\theta_1^*$.

$$\text{(Expression 22)} \quad S_{B,FF} = -m_2 g \sin\theta_1^*$$

Each state quantity can be even more accurately controlled by applying the feedforward outputs as given in Expressions 7, 8, and 22.

Note that, as in the first embodiment, an integral gain may, instead, be given in the feedback control (step 190).

The main control ECU 21 next acquires each state quantity from each sensor (step 170). Specifically, the drive wheel rotation angle (rotation angular velocity) is acquired from the drive wheel sensor 51, the vehicle body inclination angle (inclination angular velocity) is acquired from the vehicle body inclination sensor 41, the riding section position (movement speed) is acquired from the riding section sensor 61, and the balancer position (movement speed) is acquired from the balancer sensor 71.

Additionally, the main control ECU 21 calculates remaining state quantities (step 180). Specifically, the drive wheel rotation angle (rotation angular velocity), the vehicle body inclination angle (inclination angular velocity), the riding section position (movement speed), and the balancer position (movement speed) are integrated or differentiated with respect to time to calculate the remaining state quantities.

The main control ECU 21 then determines a feedback output of each actuator (step 190).

Specifically, Expression 23 is used to determine a feedback output $\tau_{W,FB}$ of the drive motor 52, Expression 24 is used to determine a feedback output $S_{S,FB}$ of the riding section motor 62, and Expression 25 is used to determine a feedback output $S_{B,FB}$ of the balancer motor 72 based on a deviation between each target value and actual state quantity.

In Expressions 23 to 25, K** is a feedback gain and, for example, an optimum regulator value is preset for each feedback gain K**. In addition, an integral gain may be introduced to eliminate the steady-state deviation as described earlier.

(Expression 23) $\tau_{W,FB} =$

$-K_{W1}(\theta_W - \theta_W^*) - K_{W2}([\theta_W] - [\theta_W^*]) - K_{W3}(\theta_1 - \theta_1^*) - K_{W4}([\theta_1] - [\theta_1^*]) - K_{W5}(\lambda_S - \lambda_S^*) - K_{W6}([\lambda_S] - [\lambda_S^*]) - K_{W7}(\lambda_2 - \lambda_2^*) - K_{W8}([\lambda_2] - [\lambda_2^*])$

(Expression 24) $S_{S,FB} =$

$-K_{S1}(\theta_W - \theta_W^*) - K_{S2}([\theta_W] - [\theta_W^*]) - K_{S3}(\theta_1 - \theta_1^*) - K_{S4}([\theta_1] - [\theta_1^*]) - K_{S5}(\lambda_S - \lambda_S^*) - K_{S6}([\lambda_S] - [\lambda_S^*]) - K_{S7}(\lambda_2 - \lambda_2^*) - K_{S8}([\lambda_2] - [\lambda_2^*])$

(Expression 25) $S_{B,FB} =$

$-K_{B1}(\theta_W - \theta_W^*) - K_{B2}([\theta_W] - [\theta_W^*]) - K_{B3}(\theta_1 - \theta_1^*) - K_{B4}([\theta_1] - [\theta_1^*]) - K_{B5}(\lambda_S - \lambda_S^*) - K_{B6}([\lambda_S] - [\lambda_S^*]) - K_{B7}(\lambda_2 - \lambda_2^*) - K_{B8}([\lambda_2] - [\lambda_2^*])$

Some of the feedback gains may be zeroed to simplify the expressions. For example, $\tau_{W,FB} = -K_{W2}([\theta_W] - [\theta_W^*]) - K_{W3}(\theta_1 - \theta_1^*)$ may be used in place of Expression 23, $S_{S,FB} = -K_{S5}(\lambda_S - \lambda_S^*)$ may be used in place of Expression 24, and $S_{B,FB} = -K_{B7}(\lambda_2 - \lambda_2^*)$ may be used in place of Expression 25.
Finally, the main control ECU 21 gives each element control system a command value (step 200) and returns to the main routine.
Specifically, the main control ECU 21 supplies the drive wheel control ECU 22 with a sum ($\tau_{W,FF} + \tau_{W,FB}$) of the feedforward output $\tau_{W,FF}$ determined in step 160 and the feedback output $\tau_{W,FB}$ determined in step 190 as a drive torque command value $\tau_W$. Further, the riding section control ECU 23 with a sum ($S_{S,FF} + S_{S,FB}$) of the feedforward output $S_{S,FF}$ and the feedback output $S_{S,FB}$ as a riding section thrust force command value $S_S$, and the balancer control ECU 24 with a sum ($S_{B,FF} + S_{B,FB}$) of the feedforward output $S_{B,FF}$ and the feedback output $S_{B,FB}$ as a balancer thrust force command value $S_2$.
Accordingly, the drive wheel control ECU 22 supplies the drive motor 52 with an input voltage (drive voltage) corresponding to the drive torque command value $\tau_W$ to thereby give the drive wheel drive torque $\tau_W$.
Similarly, the balancer control ECU 24 supplies the balancer motor 72 with an input voltage (drive voltage) corresponding to the balancer thrust force command value $S_2$ to thereby move the balancer.
Further, the riding section control ECU 23 supplies the riding section motor 62 with an input voltage (drive voltage) corresponding to the riding section thrust force command value $S_S$ to thereby move the riding section.
In each of the above-described embodiments and modified examples thereof, a value set from the mass of the riding section 13 itself and that of the rider and an article expected in advance to be loaded therein is used for the mass $m_S$ of the riding section 13 including the weight body (such as the rider or the article to be loaded).
By contrast, variations in the mass of the riding section 13 may be taken into consideration based on, for example, a deviation in the weight body (such as the rider) on the riding section 13. Specifically, a measuring instrument or an observer is employed to acquire an actual value for the riding section mass 13 required for determining the target value and the actual value is applied to each of the expressions for determining the target values.
By inserting the actual value in each of the expressions as described above, even more accurate posture control can be performed.
Methods of acquiring the actual riding section mass value include: (a) using values of measurements taken by a load meter disposed on the riding section; and (b) estimating the value using observers based on each actuator output and each state quantity. Each of these methods will be described below.

(a) Modified example 1: Using a load meter

In this modified example, a load meter is disposed on the riding section 13. Vertical loading $W_S$ (a component perpendicular to the seat cushion 131) is measured and supplied to the main control ECU 21.

Then, according to Expression 26 given below, the riding section mass $m_S$ including, for example, the rider is calculated.

In Expression 26, $m_{S,0}$ is a non-variable portion of the riding section mass (mass not dependent on the rider; mass of the riding section 13 alone, such as the seat) and g is gravitational acceleration.

$$(\text{Expression 26}) \quad m_S = m_{S,0} + (W_S/g\cos\theta_1)$$

This modified example includes the load meter that measures the vertical load. Instead, a load meter capable of measuring also a horizontal component may be used. In this case, the riding section mass can be determined without using the value of the vehicle body inclination angle.

The main control ECU 21 applies a low pass filter to the value of the riding section mass $m_S$ calculated using Expression 26 to thereby remove an RF component. This prevents vibration of the vehicle body or the seat caused by noise.

Also for the vehicle body weight $m_1$, a deviation from a standard value (a value previously set based on assumption) of the riding section mass is added.

Additionally, in this modified example, an effect of variations in the riding section weight is considered for the vehicle body weight $m_1$. The effect may as well be taken into consideration for the vehicle body gravity center distance $l_1$ or the inertia moment $I_1$.

The effect may also be taken into consideration for, for example, the feedback gain, in addition to the parameters ($m_S$, $m_1$, $l_1$, and $I_1$) directly affected by variations in the riding section weight, and the feedback gain may be corrected using Expression 27 given below.

In Expression 27, the code - denotes the standard value.

$$(\text{Expression 27}) \quad K_{S5} = (m_S/m{\sim}_S)K{\sim}_{S5}$$

(b) Modified example 2: Estimation by observers

The modified example 1 has been described for the case, in which the value of the riding section mass $m_S$ (and the vehicle body mass $m_1$) is calculated using Expression 26 with the measurement taken by the load meter. In the modified example 2, the value of the riding section mass $m_S$ is estimated using an observer based on, for example, the movement state $\lambda_S$ of the riding section or the balancer thrust force $S_B$.

The main control ECU 21 uses a riding section movement model of Expression 28 given below to estimate the riding section mass $m_S$, where g denotes gravitational acceleration and $C_S$ denotes a viscous friction coefficient relative to seat movement. Further, acceleration [[x]] of each state quantity x is obtained by differentiating the speed [x].

In Expression 28, for example, the greater the thrust force $S_S$ required for moving the seat, the greater riding section mass $m_S$ is estimated.

$$(\text{Expression 28}) \quad m_S = (S_S - D_S[\lambda_S])/([[\lambda_S]] + \lambda_S[[\theta_1]] + a\cos\theta_1 - g\sin\theta_1)$$

Dry friction is not considered in the riding section movement model of Expression 28. The riding section mass $m_S$ may nonetheless be estimated by using a detailed model in which dry friction is strictly considered or a plurality of models including, for example, that of the vehicle body inclination.

Additionally, the observer can be stabilized and vibration caused by noise can be prevented by applying a low pass filter to the estimated value of the riding section mass $m_S$ given by Expression 28 to thereby remove the high-frequency component.

Note that, when the loop of running and posture control process is entered for the first time, the standard value is given to the riding section mass (as a default value of the observer).

The modified example 2 estimates the riding section weight $m_S$ using the observer based on the dynamic model. A simpler method may be used instead. For example, instead of using Expression 28, a map may be stored in memory in advance representing results of measurements taken of a relationship between the minimal thrust force required for moving the riding section 13 and the riding section weight $m_S$ relative thereto, so that the estimation can be made using the map.

According to the foregoing modified examples 1 and 2, a value that is even closer to the actual value compared with a previously assumed set value, is estimated for the mass $m_S$ of the riding section 13 (including, for example, the rider). Steady-state deviation relative to the targeted vehicle motion and vehicle body posture can be reduced as much as possible, which allows an appropriate control to be performed. This improves stability and accuracy in posture control.

Fourth through ninth embodiments will be described below.

Note that, for each embodiment and each modified example of the second and third embodiments, and the fourth through ninth embodiments, the vehicle should most preferably be provided with all the components in these embodiments and modifications, in addition to the first embodiment. The vehicle may, however, be implemented by applying at least one embodiment or modified example to the first embodiment.

In the fourth embodiment, either the vehicle body inclination or the riding section movement is selectively used according to a frequency component of the vehicle target acceleration $\alpha^*$. Specifically, in determining the target vehicle body posture, a low-frequency component of the vehicle target acceleration $\alpha^*$ is borne by the vehicle body inclination and a high-frequency component thereof is borne by the riding section movement. Thus, sudden vehicle body inclination can be prevented to improve riding comfort.

Acceleration or deceleration accompanying inclining of the vehicle body involves sudden inclination of the vehicle body during sudden acceleration or deceleration, which degrades the riding comfort. That is, although the inclination of the vehicle body provides the rider a sense of unity with the vehicle, sudden inclination may make the rider feel uncomfortable.

In addition, a forward or backward inclination of the vehicle body occurring upon quick and slight acceleration or deceleration also degrades the riding comfort.

In the fourth embodiment, therefore, the vehicle target acceleration $\alpha^*$ corresponding to the running target inputted by the rider is divided into a low-frequency component and a high-frequency component with a frequency-filter; the low-frequency component is borne by the vehicle body inclination and the high-frequency component is borne by the riding section movement, thereby preventing sudden vehicle body inclination upon sudden acceleration or deceleration.

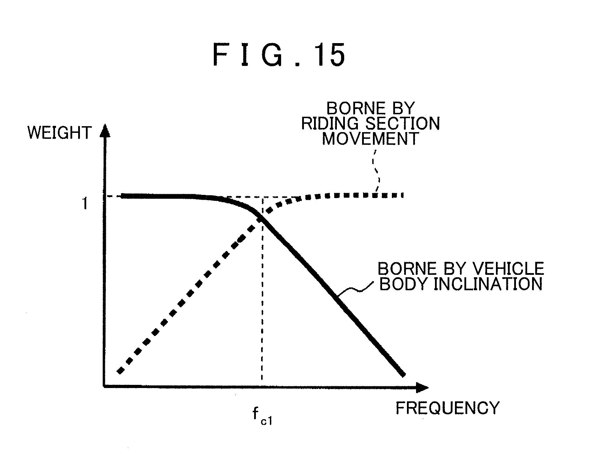

FIG. 15 is a diagram showing weighting of the vehicle body inclination and the riding section movement for each frequency component of the vehicle target acceleration $\alpha^*$.

As shown in FIG. 15, weighting of the vehicle body inclination and the riding section movement is determined for each frequency component of the vehicle target acceleration $\alpha^*$ such that frequencies less than a predetermined frequency $f_{c1}$ are primarily borne by the vehicle body inclination and frequencies at and higher than $f_{c1}$ are primarily borne by the riding section movement.

The value of the predetermined frequency $f_{c1}$ is set at a frequency at which the rider feels no unpleasantness due to vehicle body inclination, and is, for example, 1 Hz.

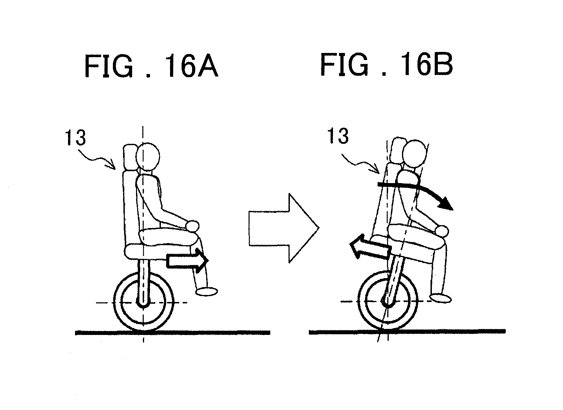

FIG. 16 shows changes in states of the vehicle body inclination and the riding section movement during sudden acceleration in the fourth embodiment.

Referring to FIG. 16A, immediately after a sudden acceleration command issued by the rider, the riding section 13 is moved forwardly based on the high-frequency component of the acceleration (sudden change) to move the vehicle body gravity center forwardly to respond to the sudden acceleration.

Referring to FIG. 16B, if a constant acceleration command is kept given thereafter, the riding section 13 is moved rearwardly (toward an original reference position), while being gradually inclined forwardly, based on the low-frequency component of the acceleration (a constant value, or a moderate change).

Thus, by moving the riding section 13 forwardly without inclining the vehicle body immediately after the sudden acceleration command and inclining the vehicle body forwardly slowly thereafter as described above, a comfortable ride under sudden acceleration is achieved.

Running and posture control according to the fourth embodiment will be described below.

A control system in the fourth embodiment is the same as that in the first embodiment described with reference to FIG. 3.

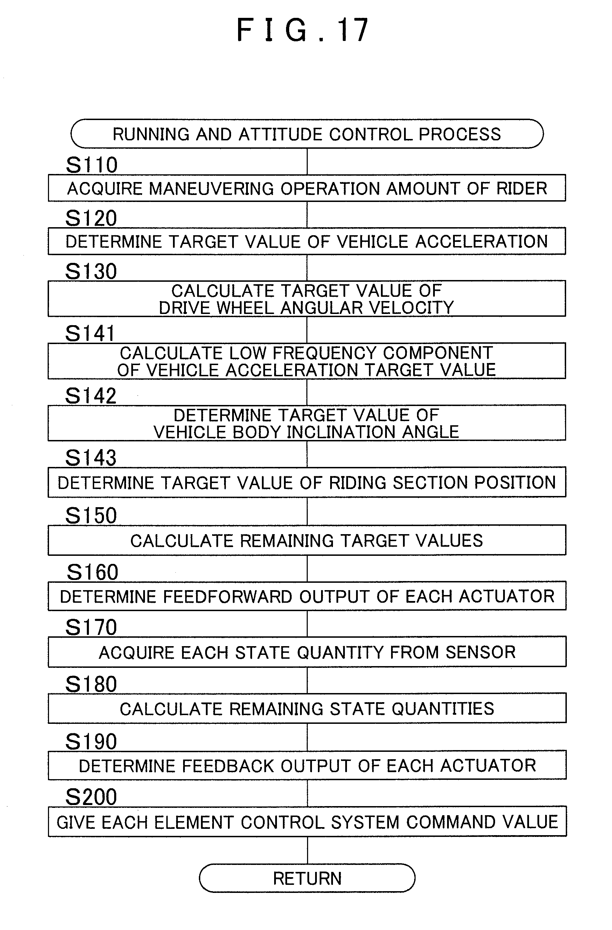

FIG. 17 is a flowchart showing details of the running and posture control process according to the fourth embodiment.

In the descriptions of the flowchart in the fourth embodiment, like or corresponding portions are identified by the same reference numerals or step numbers as those used for the first embodiment and descriptions for those portions will be omitted as appropriately.

In the running and posture control in the fourth embodiment, the main control ECU 21 first determines, as in the first embodiment, how the vehicle is moved according to the intention of the rider, specifically, the running target of the vehicle (steps 110 through 130).

The main control ECU 21 then calculates a low-frequency component $\alpha_1^*$ of the vehicle target acceleration $\alpha^*$ (step 141). Specifically, using a low pass filter expressed by Expression 29 given below, the low-frequency component $\alpha_1^*$, which is a portion of the vehicle target acceleration $\alpha^*$ borne by the vehicle body inclination, is calculated.

$$\text{(Expression 29) } \alpha_1^* = \xi\alpha^* + (1-\xi)\alpha_1^{*(k-1)}$$

In Expression 29, $\alpha_1^*$ is a present value of the vehicle target acceleration (at the current time step) and $\alpha_1^{*(k-1)}$ is a value of the low-frequency component of the vehicle target acceleration at a time $\Delta t$ ago.

If $\Delta t$ is a control operation cycle and $T_C (= 1/f_{C1})$ is a time constant of the low-pass filter, $\xi = \Delta t / T_C$. Specifically, if the value of $\xi$ is small, the change in the low-frequency component $\alpha_1^*$ becomes small, so that the change in inclination of the vehicle body based on the low-frequency component $\alpha_1^*$ is moderate. Note that the time constant of the low-pass filter $T_C$ or a cutoff frequency $f_{C1}$ may be variable based on the preference of the rider.

The above-cited Expression 29 corresponds to a first-order finite impulse type low-pass filter. Another type or a filter of a higher order may, instead, be used.

The main control ECU 21 then determines the vehicle body inclination angle $\theta_1^*$ from the low-frequency component $\alpha_1^*$ of the vehicle target acceleration $\alpha^*$ (step 142).

Specifically, the main control ECU 21 determines the vehicle body inclination angle $\theta_1^*$ from the low-frequency component $\alpha_1^*$ of the vehicle target acceleration $\alpha^*$ using Expressions 30 to 32 given below, in place of Expressions 1 to 3 in the first embodiment (step 142).

In Expression 31, $\varphi_1^* = \tan^{-1}\alpha_1^*$ where $\alpha_1^*$ is the low-frequency component of the vehicle target acceleration $\alpha^*$ calculated in step 141. The other codes are the same as those used in Expressions 1 to 3.

$$\text{(Expression 30) } \theta_1^* = \varphi^* - \beta_{Max} + \sin^{-1}(\gamma\sin\varphi^*\cos\beta_{Max}) \ (\alpha^* < -\alpha_{Max})$$

$$\text{(Expression 31) } \theta_1^* = (1-C_{Sense})\varphi_1^* \ (-\alpha_{Max} \le \alpha^* \le \alpha_{Max})$$

$$\text{(Expression 32) } \theta_1^* = \varphi^* + \beta_{Max} + \sin^{-1}(\gamma\sin\varphi^*\cos\beta_{Max}) \ (\alpha^* > \alpha_{Max})$$

Note that the riding section 13 cannot be moved if the vehicle target acceleration $\alpha^*$ exceeds the acceleration $\alpha_{Max}$ that corresponds to the riding section stroke limit. Thus, stable vehicle body posture control is achieved through the vehicle body inclination, regardless of the frequency of the vehicle target acceleration $\alpha^*$.

The limit may, however, be ignored because time through which the high-frequency component exceeds the limit is brief. In this case, Expression 31 applies at any cases regardless of the vehicle target acceleration $\alpha^*$.

The main control ECU 21 then determines the riding section target position $\lambda_S^*$ (step 143).

Specifically, the main control ECU 21 determines, as in the first embodiment, the riding section target position $\lambda_S^*$ from the vehicle target acceleration $\alpha^*$ and the target vehicle body inclination angle $\theta_1^*$ using Expressions 4 to 6.

In the first and third embodiments, modified examples of the technique for determining the target vehicle body inclination angle $\theta_1^*$ and the riding section target position $\lambda_S^*$ have been described with reference to the target value determination processes of FIGS. 6 and 14. Also in the fourth to ninth embodiments, the determination can be performed as in the modified examples.

Specifically, the main control ECU 21 calculates the target vehicle body inclination angle $\theta_1^*$ corresponding to the vehicle target acceleration $\alpha^*$ using the expression used when $-\alpha_{Max} \le \alpha^* < \alpha_{Max}$ (Expression 31 in the fourth embodiment).

Then, the obtained $\theta_1^*$ and Expression 5 are used to calculate the riding section target position $\lambda_S^*$. If $\lambda_S^*$ falls within the range of $-\lambda_{S,Max} \le \lambda_S^* \le \lambda_{S,Max}$ over which the riding section can move, the obtained $\theta_1^*$ is determined as the target vehicle body inclination angle and $\lambda_S^*$ is determined as the riding section target position.

If, on the other hand, the calculated value $\lambda_S^*$ falls outside the range over which the riding section can move, the maximum riding section movement amount $\pm\lambda_{S,Max}$ is determined to be the riding section target position $\lambda_S^*$; then, using Expression

1 or 3, $\theta_1^*$ corresponding to the vehicle target acceleration $\alpha^*$ is again calculated and is determined as the target vehicle body inclination angle $\theta_1^*$.

After determining the target vehicle body inclination angle $\theta_1^*$ and the riding section target position $\lambda_S^*$, the main control ECU 21 determines, as in the first embodiment, the output values of the drive motor 52 and the riding section motor 62 required for achieving the vehicle running state and vehicle body posture set as targets. The main control ECU 21 then uses the drive wheel control ECU 22 and the riding section control ECU 23 to control the actual outputs from the drive motor 52 and the riding section motor 62 according to the output values (steps 150 through 200), before returning to the main routine.

The following effects can be gained with the fourth embodiment.

(1) The vehicle body does not incline suddenly upon sudden acceleration or deceleration, thus providing a comfortable ride.
(2) The vehicle body does not rock forwardly or rearwardly by quick and slight acceleration/deceleration.
(3) Although the riding section, instead, suddenly moves this does not cause the field of view of the rider to move vertically. Moreover, the riding section moves in the direction of acceleration in which the rider requires. As a result, the rider can more intensely feel, for example, a startup acceleration, and a deceleration immediately after a braking operation.

As a modified example of the fourth embodiment, for example, if a movable speed (or acceleration) of the riding section movement is lower than a movable speed (or acceleration) of the vehicle body inclination, the low-frequency component may be borne by the riding section movement and the high-frequency component may be bone by the vehicle body inclination.

The posture control can be even further stabilized by corresponding to the dynamic structure of the vehicle and performance of each system element as above.

A fifth embodiment will be described below.

In the fifth embodiment, if the vehicle speed upon determining the target vehicle body posture is high, the riding section 13 is moved forwardly with the vehicle body inclined rearwardly in advance, thereby preventing the vehicle body posture from changing largely immediately after the sudden deceleration.

With the inverted vehicle that is decelerated while moving the gravity center rearwardly by inclining the vehicle body rearwardly, the vehicle body is suddenly inclined rearwardly largely upon sudden braking. Thus, the riding comfort for the rider is degraded and the braking operation performed by the rider may even be affected due to a sudden vertical movement of the field of view of the rider.

As the vehicle running speed increases, on the other hand, sudden braking, specifically, a large deceleration is more likely to be requested by the rider.

In the fifth embodiment, therefore, in determining the target vehicle body posture (the target vehicle body inclination angle $\theta_1^*$ and the riding section target position $\lambda_S^*$) corresponding to the vehicle target acceleration $\alpha^*$, the riding section 13 is moved forwardly with the vehicle body inclined rearwardly as the vehicle speed increases, thereby preparing for the sudden braking operation performed by the rider.

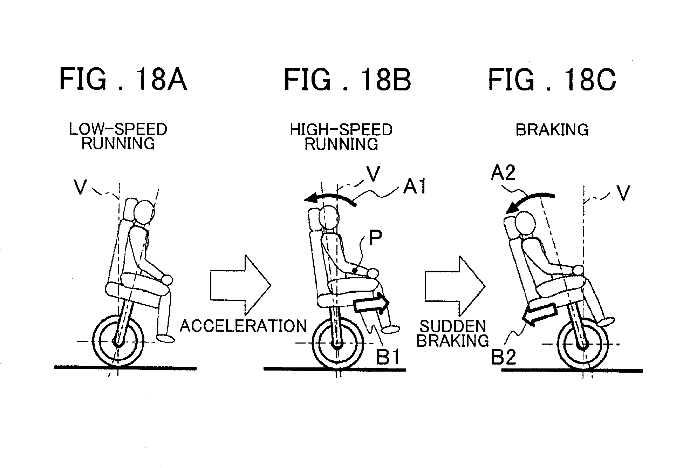

FIG. 18 shows <u>states</u> of the vehicle body inclination and the riding section movement according to the fifth embodiment.

Referring to FIG. 18A, the vehicle runs with the target vehicle body posture (the target vehicle body inclination angle $\theta_1^*$ and the riding section target position $\lambda_S^*$) corresponding to the vehicle target acceleration $\alpha^*$ during low-speed running as in the first embodiment.

Referring to FIG. 18B, during high-speed running, on the other hand, as the vehicle speed increases, the vehicle body is inclined rearwardly as indicated by an arrow Al of FIG. 18B and the riding section 13 is moved forwardly as indicated by an arrow B1. In this case, the rearward movement amount of the gravity center due to the rearward inclination of the vehicle body is equal to the forward movement amount of the gravity center due to the forward movement of the riding section. A gravity center position P is thereby prevented from being deviated from an appropriate position due to a correction made in the target vehicle body posture of this embodiment.

If a braking command is received in this condition, braking is performed with the target vehicle body posture (the target vehicle body inclination angle $\theta_1^*$ and the riding section target position $\lambda_S^*$) determined in the same manner as in the first embodiment. If sudden braking is commanded in this condition, as shown in FIG. 18C, in response to the sudden braking command, the riding section 13 is moved rearwardly as indicated by an arrow B2, while the vehicle body is inclined rearwardly as indicated by an arrow A2. Because the vehicle body is already inclined rearwardly to a certain degree in preparation for the sudden braking, the amount of change in the vehicle body inclination can be made small.

Running and posture control according to the fifth embodiment will be described below.

Note that a control system according to the fifth embodiment is arranged in the same manner as that in the first embodiment described with reference to FIG. 3.

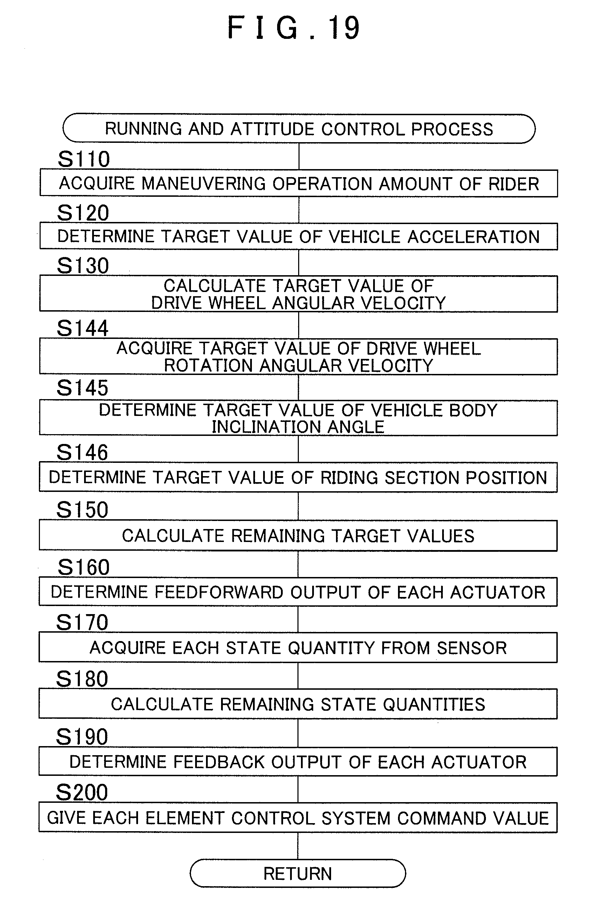

FIG. 19 is a flowchart showing details of the running and posture control process according to the fifth embodiment. In the descriptions of the flowchart in the fifth embodiment, like or corresponding portions are identified by the same reference numerals or step numbers as those used for the first embodiment and descriptions for those portions will be omitted as appropriate.

In the running and posture control in the fifth embodiment, the main control ECU 21 first determines, as in the first embodiment, how the vehicle is moved according to the intention of the rider, specifically, the <u>running target</u> of the vehicle (steps 110 through 130).

The main control ECU 21 next acquires the drive wheel rotation angular velocity (step 144). Specifically, the main control ECU 21 acquires the value of the drive wheel rotation angular velocity $[\dot{\theta}_W]$ used in a control operation in preceding time step.

The value of the drive wheel rotation angular velocity $[\dot{\theta}_W]$ may be acquired in advance from the drive wheel sensor 51.

The main control ECU 21 then determines the target vehicle body inclination angle $\theta_1{}^*$ (step 145). Specifically, the target vehicle body inclination angle $\theta_1{}^*$ is determined from the vehicle target acceleration $\alpha^*$ and the drive wheel rotation angular velocity $[\dot{\theta}_W]$ using Expressions 33 to 35.

$$\text{(Expression 33) } \theta_1{}^* = \varphi^* - \beta_{Max} + \sin^{-1}(\gamma \sin\varphi^* \cos\beta_{Max}) \ (\alpha^* < -\alpha_{Max})$$

$$\text{(Expression 34) } \theta_1{}^* = (1 - C_{Sense})\varphi^* - \psi \ (-\alpha_{Max} \leq \alpha^* \leq \alpha_{Max})$$

$$\text{(Expression 35) } \theta_1{}^* = \varphi^* + \beta_{Max} + \sin^{-1}(\gamma \sin\varphi^* \cos\beta_{Max}) \ (\alpha^* > \alpha_{Max})$$

Expressions 33 and 35 are the same as Expressions 1 and 3 of the first embodiment.

In Expression 34, <u>the vehicle body is inclined rearwardly by subtracting $\psi$ from the target vehicle body inclination angle $\theta_1{}^*$</u> of Expression 2.

Herein, $\psi$ is determined using Expressions 36 and 37 given below, where $\psi\sim$ is the amount of decrease in the vehicle body inclination angle according to the vehicle speed.

$$\text{(Expression 36) } \psi = \max(0, \psi\sim + (1 - C_{Sense})\varphi^*) \ (\alpha^* < 0)$$

$$\text{(Expression 37) } \psi = \psi\sim \ (\alpha^* \geq 0)$$

$\psi\sim$ is expressed by Expression 38. $\psi_0$ and $V_0$ are reference parameters (set values) and the vehicle body inclination angle is decreased by $\psi_0$ at a vehicle speed Vo.

Other codes used in Expressions 33 to 38 are the same as those used in Expressions 1 to 3 of the first embodiment.

$$\text{(Expression 38) } \psi\sim = \psi_0(R_W[\dot{\theta}_W]/V_0)$$

The main control ECU 21 then determines the riding section target position $\lambda_S{}^*$ (step 146).

Specifically, the main control ECU 21 determines, as in the first embodiment, the riding section target position $\lambda_S{}^*$ from the vehicle target acceleration $\alpha^*$ and the target vehicle body inclination angle $\theta_1{}^*$ using Expressions 4 to 6.

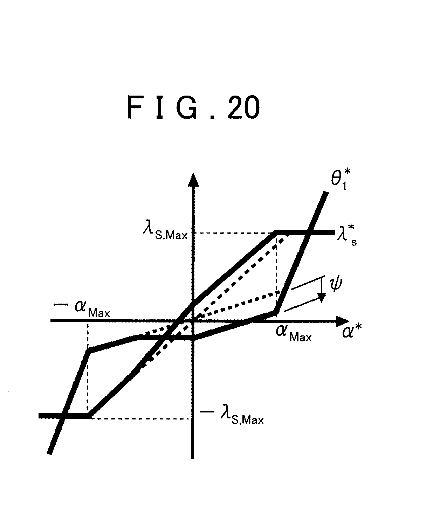

FIG. 20 is a diagram showing a relationship between the vehicle target acceleration $\alpha^*$ (abscissa), the target vehicle body inclination angle $\theta_1{}^*$, and the riding section target position $\lambda_S{}^*$ given by Expressions 33 to 38 and Expressions 4 to 6.

In FIG. 20, portions indicated by dotted lines are the target vehicle body inclination angle $\theta_1^*$ and the riding section target position $\lambda_S^*$, given in FIG. 5.

If the vehicle target acceleration $\alpha^*$ falls within a range of the threshold value $\pm\alpha_{Max}$ ($-\alpha_{Max} \leq \alpha^* \leq \alpha_{Max}$), the target vehicle body inclination angle $\theta_1^*$ is determined using Expression 34 and the riding section target position $\lambda_S^*$ is determined using Expression 5. If running at a constant speed with no acceleration or deceleration ($\alpha^* = 0$), as shown in FIG. 20, the target vehicle body inclination angle $\theta_1^*$ is negative; specifically, the vehicle is prepared for the braking with its body inclined rearwardly.

At this time, the higher the vehicle speed (the greater the drive wheel rotation angular velocity [$\theta_W$]) the target vehicle body inclination angle $\psi\sim$ is more decreased, so that the vehicle body inclines more largely rearwardly.

In the fifth embodiment, the amount of decrease in the target vehicle body inclination angle is given in proportion to the running speed. The amount of decrease in the target vehicle body inclination angle may instead be given nonlinearly. (A map showing correspondence between the running speed and the amount of decrease in the target vehicle body inclination angle may be used.) For example, the target vehicle body inclination angle may be decreased at a predetermined speed or higher.

After determining the target vehicle body inclination angle $\theta_1^*$ and the riding section target position $\lambda_S^*$, the main control ECU 21 determines, as in the first embodiment, the output values of the drive motor 52 and the riding section motor 62 required for achieving the vehicle running state and vehicle body posture set as targets. The main control ECU 21 then uses the drive wheel control ECU 22 and the riding section control ECU 23 to control the actual outputs from the drive motor 52 and the riding section motor 62 according to the output values (steps 150 through 200), before returning to the main routine.

The following effects can be gained with the fifth embodiment.

(1) During high-speed running, the vehicle body is inclined in advance in preparation for possible sudden braking so that the vehicle body does not suddenly incline largely rearwardly upon sudden braking. Thus, safe and comfortable ride is offered.

(2) Although the riding section 13, instead, suddenly moves rearwardly, the field of view of the rider does not move vertically. Moreover, the riding section 13 moves in the same direction of braking deceleration in which the rider requires. As a result, the rider can feel more intensely a deceleration feel immediately after the braking operation.

(3) During high-speed running, the vehicle body is inclined rearwardly to thereby raise the sight of the rider, thus bringing attention of the rider toward a remote distance.

As a modified example of the fifth embodiment, for example, if a movable speed (or acceleration) of the riding section movement is lower than a movable speed (or acceleration) of the vehicle body inclination, the riding section 13 may be moved rearwardly in advance to be prepared for sudden braking.

The posture control can be even further stabilized by corresponding to the dynamic structure of the vehicle and performance of each system element as above.

A sixth embodiment will be described below.

In the sixth embodiment, either the drive motor 52 or riding section movement is selectively used depending on the vehicle body posture and the direction of vehicle running. Specifically, the riding section 13 is moved when direction of the drive torque required for vehicle body posture control differs from that of the drive torque required for vehicle running control to eliminate reverse operations.

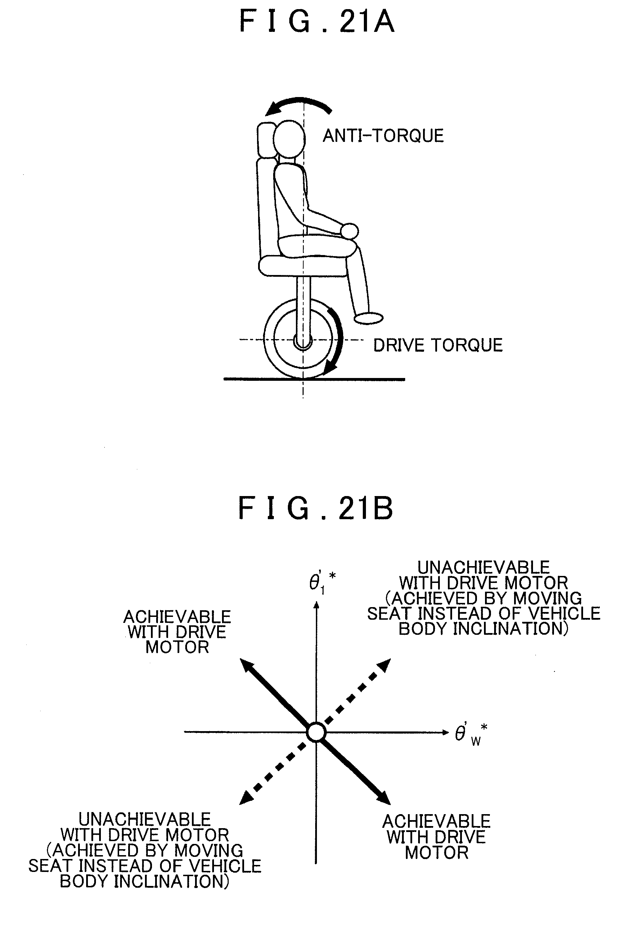

FIG. 21 is an illustration showing a relationship between the vehicle body posture control and the vehicle running control by the drive motor 52.

Referring to FIG. 21A, with the inverted type vehicle, applying the drive wheel 11 drive torque in the forward direction will cause the vehicle body to be inclined rearwardly because of anti-torque involved therein. As a result, the directions of the drive torque required for the vehicle body posture control and that required for the vehicle running control may be different.

Specifically, acceleration/deceleration (running control) of the vehicle (drive wheel) and vehicle body inclination (posture control) are accomplished through action and reaction of the drive motor 52. Thus, the vehicle body cannot be inclined forwardly while accelerating and the vehicle body cannot be inclined rearwardly while decelerating.

For example, to incline the vehicle body forwardly when accelerating from a standstill state, to achieve the forwardly inclined posture, the drive wheel needs to be temporarily moved rearwardly (the lower right part in FIG. 21B).

Similarly, to incline the vehicle body rearwardly when decelerating from a running state, to achieve the rearwardly inclined posture, the drive wheel needs to be temporarily moved forwardly (the lower left part in FIG. 21B).

In the sixth embodiment, therefore, the following (i) and (ii) are implemented to reduce reverse operation of the drive wheel.

(i) In determining the target vehicle body posture according to the vehicle target acceleration $\alpha^*$, the target vehicle

body inclination angle acceleration is limited according to the vehicle target acceleration $\alpha^*$, and the rest of the posture control is borne by movement of the riding section.

(ii) In feedback controls of the vehicle running and the vehicle body posture, the feedback gain of either one of feedback controls is limited according to deviation in the drive wheel rotation angular velocity and deviation in the vehicle body inclination angular velocity.

Note that either of (i) and (ii) may be implemented.

Running and posture control according to the sixth embodiment will be described below.

Note that a control system according to the sixth embodiment is arranged in the same manner as that in the first embodiment described with reference to FIG. 3.

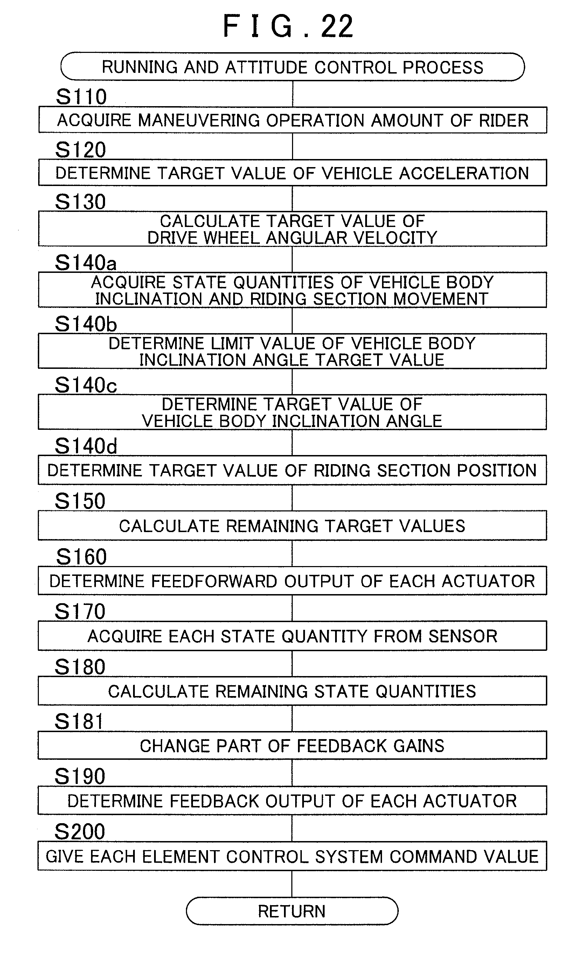

FIG. 22 is a flowchart showing details of the running and posture control process according to the sixth embodiment. In the descriptions of the flowchart in the sixth embodiment, like or corresponding portions are identified by the same reference numerals or step numbers as those used for the first embodiment and descriptions for those portions will be omitted as appropriately.

In the running and posture control in the sixth embodiment, the main control ECU 21 first determines, as in the first embodiment, how the vehicle is moved according to the intention of the rider, specifically, the <u>running target</u> of the vehicle (steps 110 through 130).

The main control ECU 21 next acquires state quantities of vehicle body inclination and riding section movement (step 140a). Specifically, the main control ECU 21 acquires values of the vehicle body inclination angle $\theta_1$, the vehicle body inclination angular velocity $[\theta_1]$, and the riding section positionin $\lambda_S$ in the preceding time step.

Note that each of these values may be acquired from the drive wheel sensor 51 in advance.

The main control ECU 21 then determines the limit value of the target vehicle body inclination angle (step 140b). From the vehicle target acceleration $\alpha^*$ and each of the state quantities ($\theta_1$, $[\theta_1]$, and $\lambda_S$) obtained in step 140a, using Expressions 39 or 40 given below, an upper limit value $\theta_1{}^*_{,Max}$ or a lower limit value $\theta_1{}^*_{,Min}$ of the target vehicle body inclination angle is determined.

Specifically, when (a) $\alpha^* \geq \alpha_{sh}$, the upper limit value $\theta_1{}^*_{,Max}$ is set using Expression 39 to thereby limiting the forward inclination of the vehicle body and; when (b) $\alpha^* < \alpha_{sh}$, the lower limit value $\theta_1{}^*_{,Min}$ is set using Expression 40 to thereby limiting the rearward inclination of the vehicle body.

$$\text{(Expression 39) Upper limit value } \theta_1{}^*_{,Max} = \theta_1{}^{*(k-1)} + \Delta t[\theta_1]$$

$$\text{(Expression 40) Lower limit value } \theta_1{}^*_{,Min} = \theta_1{}^{*(k-1)} + \Delta t[\theta_1]$$

In Expressions 39 and 40, $\theta_1{}^{*(k-1)}$ is a target value of the vehicle body inclination angle at a time $\Delta t$ ago. $\alpha_{sh}$ is a control <u>compatibility</u> limit vehicle acceleration and expressed by Expression 41 given below.

$C_{Limit}$ is a limit strength (set value is 0 or more and 1 or less), representing the degree of reducing reverse operation.

As shown in Expression 41, consideration of the vehicle body inclination angle $\theta_1$ or the riding section positionin $\lambda_S$ permits an appropriate examination of feasibility of control <u>compatibility</u> with only the drive torque even during vehicle body inclination or riding section movement.

(Expression 41) $\alpha_{sh} = C_{Limit} \tan^{-1}((m_1 l_1 \sin\theta_1 + m_S \lambda_S s \cos\theta_1)/(M{\sim}R_W + m_1 l_1))$

The main control ECU 21 then determines the target vehicle body inclination angle $\theta_1{}^*$ (step 140c). Specifically, from the vehicle target acceleration $\alpha^*$, and the limit value (the upper limit value $\theta_1{}^*_{,Max}$ or the lower limit value $\theta_1{}^*_{,Min}$) of the vehicle body inclination angle determined in step 140b, Expressions 42 to 44 given below are used to determine the target vehicle body inclination angle $\theta_1{}^*$.

In Expression 43, $\theta{\sim}_1{}^*$ is determined using Expression 45 when (a) $\alpha^* \geq \alpha_{sh}$ and using Expression 46 when (b) $\alpha^* < \alpha_{sh}$.

$$\text{(Expression 42) } \theta_1{}^* = \varphi^* - \beta_{Max} + \sin^{-1}(\gamma\sin\varphi^*\cos\beta_{Max}) \ (\alpha^* < -\alpha_{Max})$$

(Expression 43) $\theta_1{}^* = \theta\!\sim_1{}^* \; (-\alpha_{Max} \le \alpha^* \le \alpha_{Max})$

(Expression 44) $\theta_1{}^* = \varphi^* + \beta_{Max} + \sin^{-1}(\gamma\sin\varphi^*\cos\beta_{Max}) \; (\alpha^* > \alpha_{Max})$

(Expression 45) $\theta\!\sim_1{}^* = \min((1-C_{Sense})\varphi^*, \theta_1{}^*_{,Max})$

(Expression 46) $\theta\!\sim_1{}^* = \max((1-C_{Sense})\varphi^*, \theta_1{}^*_{,Min})$

The main control ECU 21 then determines the riding section target position $\lambda_S{}^*$ (step 140d).
Specifically, the main control ECU 21 determines, as in the first embodiment, the riding section target position $\lambda_S{}^*$ from the vehicle target acceleration $\alpha^*$ and the target vehicle body inclination angle $\theta_1{}^*$ using Expressions 4 to 6.
After determining the target vehicle body inclination angle $\theta_1{}^*$ and the riding section target position $\lambda_S{}^*$, the main control ECU 21 sets remaining target values, determines feedforward outputs, and acquires and calculates each of the state quantities as in the first embodiment (steps 150 to 180).
The main control ECU 21 next changes a part of the feedback gains (step 181). Specifically, based on the deviation in the drive wheel rotation angular velocity ($[\theta_W]-[\theta_W{}^*]$) and the deviation in the vehicle body inclination angular velocity ($[\theta_1]-[\theta_1{}^*]$), Expression 47 is used to change the feedback gain $K_{W2}$ relating to the drive wheel rotation angular velocity and Expression 48 is used to change the feedback gain $K_{W4}$ relating to the vehicle body inclination angular velocity.
(Expression 47) $K_{W2} = (1+\zeta)K_{W2,0}$

(Expression 48) $K_{W4} = (1-\zeta)K_{W4,0}$

In Expressions 47 and 48, $K_{W2,0}$ and $K_{W4,0}$ are feedback gain reference values. $\zeta$ is a feedback gain correction coefficient and expressed by Expression 49 given below. $c\zeta$ is a correction degree proportional coefficient, representing the degree of correct the feedback gain correction.
In Expression 49, as to the deviation (a difference between an actual state value and a target value) in the drive wheel rotation angular velocity and the deviation in the vehicle body inclination angular velocity, if both are positive or both are negative, the feedback gain of the drive wheel rotation angular velocity is made larger or the feedback gain of the vehicle body inclination angular velocity is made smaller according to the magnitude of the deviation, thereby relatively strengthening the drive wheel rotation control to weaken reverse operation of the drive wheel.
(Expression 49) $\zeta = c\zeta\max(([\theta_W]-[\theta_W{}^*])([\theta_1]-[\theta_1{}^*]),0)$

The main control ECU 21 next determines, as in the first embodiment, feedback outputs (step 190) and, using the drive wheel control ECU 22 and the riding section control ECU 23, controls the actual outputs from the drive motor 52 and the riding section motor 62 based on the determined feedforward outputs and feedback outputs (step 200), before returning to the main routine.

The following effect can be gained with the sixth embodiment. (1) "Reverse operation" of the drive wheel during acceleration from a stationary state or braking from a running state under a constant speed can be reduced to improve maneuverability for the rider.

Note that, each of the correction degree proportional coefficients c$\zeta$ for the correction of the two gains in the sixth embodiment may set to be different values.

Additionally, either one of the gains may be increased or decreased with the other correction coefficient zeroed. If the gain in the drive wheel rotation angular velocity is negative, in particular, only the gain in the vehicle body inclination angular velocity may be made smaller without correcting the drive wheel rotation angular velocity. Further, a positive gain in the drive wheel rotation angular velocity may be reversed to be negative, or vice versa.

In addition, other nonlinear functions may be employed for the two deviations. For example, the correction coefficient may be given only if the two deviations increase to a certain degree.

Similar corrections may be made for other feedback gains. For example, the feedback gain of the vehicle body inclination angle may be reduced. Additionally, the vehicle body inclination gain of the riding section motor 62 may be increased, while reducing the vehicle body inclination gain of the drive motor 52.

On the other hand, by reducing the drive wheel gain while increasing the vehicle body inclination gain, the vehicle body posture may be controlled more stably, at the expense of certain degree of the drive wheel control.

A seventh embodiment will be described below.

In the seventh embodiment, either the drive motor 52 or riding section movement is selectively used according to the frequency component of disturbance. Specifically, in feedback control, vibration caused by disturbance is prevented by making a low-frequency component of deviation borne by the riding section movement and a high-frequency component of the deviation borne by the drive motor 52.

Vibration at high frequency, which can affect riding comfort, may occur when the vehicle body posture is controlled with the movement of the riding section 13. This is attributable to the fact that the vehicle body posture control through the riding section movement involves "lag" and is thus not suitable for precise control.

Additionally, a balanced state may be achieved at a posture different from a target posture. That is, a state may be retained in which the vehicle body, for example, has inclined more than the target angle, and the riding section 13 has moved in an opposite direction thereof. This is caused as the posture control by the drive motor 52 is canceled by the posture control by the riding section movement.

In the seventh embodiment, therefore, the deviation between the actual state value and the target value of the vehicle body inclination angle is divided into a low-frequency component and a high-frequency component by a frequency filter. The low-frequency component is borne by the riding section movement and the high-frequency component is borne by the drive motor 52.

This allows the vibration at high frequency to be borne only with the vehicle body inclination appropriate therefor. Further, frequency bands borne by the vehicle body inclination and the riding section movement are shifted. Thus, the vehicle body inclination and the riding section movement are prevented from interfering with each other to form a false balanced state.

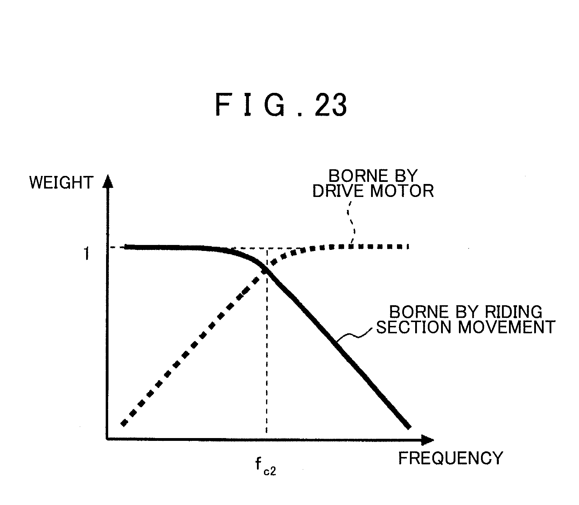

FIG. 23 is a diagram showing weighting of the drive motor 52 and the riding section movement for each frequency component of the disturbance.

As shown in FIG. 23, weighting of the drive motor 52 and the riding section movement is determined for each frequency component of the disturbance component such that frequencies less than a predetermined frequency $f_{c2}$ are primarily borne by the riding section movement and frequencies at and higher than $f_{c2}$ are primarily borne by the drive motor 52. The value of the predetermined frequency $f_{c2}$ is set at a frequency at which the posture can be controlled through the riding section movement to a certain degree. A predetermined value, for example, 5 Hz is preset. Generally, a value larger than the frequency $f_{c1}$ that serves as the threshold value in the fourth embodiment is set for this value.

Running and posture control according to the seventh embodiment will be described below.

Note that a control system according to the seventh embodiment is arranged in the same manner as that in the first embodiment described with reference to FIG. 3.

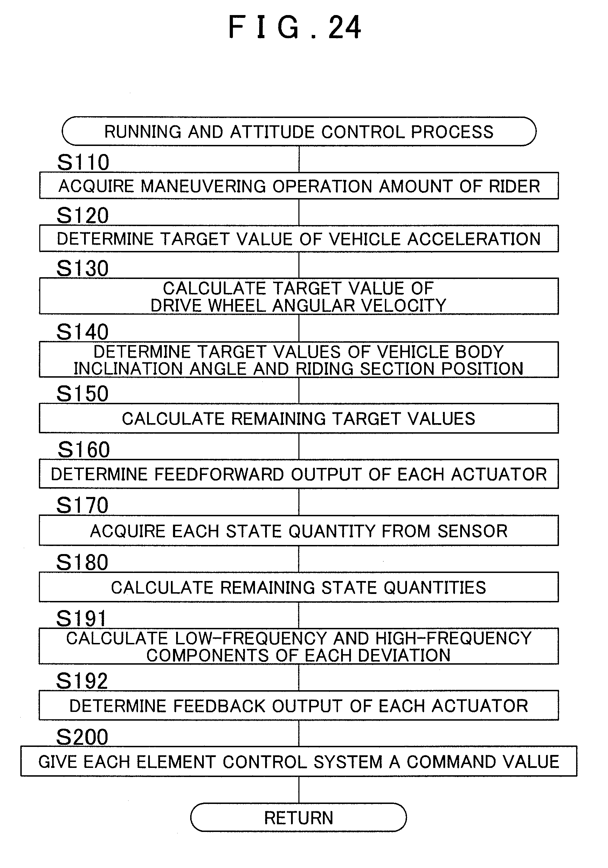

FIG. 24 is a flowchart showing details of the running and posture control process according to the seventh embodiment. In the description of the flowchart in the seventh embodiment, like or corresponding portions are identified by the same reference numerals or step numbers as those used for the first embodiment and descriptions for those portions will be omitted as appropriately.

In the running and posture control in the seventh embodiment, the main control ECU 21 determines the target state quantity, acquires the state quantity, and determines the feedforward output, as in the first embodiment (steps 110 to 180).

The main control ECU 21 then calculates low-frequency and high-frequency components of each deviation (step 191).

Specifically, the main control ECU 21 divides the deviation in the vehicle body inclination angle between the actual state value and the target value $(\theta_1 - \theta_1{}^*)$ into a low-frequency component and a high-frequency component using Expression 50 (a low-pass filter) and Expression 51 (serving as a high-pass filter).

Similarly, the main control ECU 21 divides the deviation in the vehicle body inclination angular velocity between the actual state value and the target value ($[\theta_1]-[\theta_1^*]$) into a low-frequency component and a high-frequency component using Expression 52 and Expression 53.

Note that, in the seventh embodiment, a first-order finite impulse type low-pass filter is used. Another type or a filter of a higher order may, instead, be used.

$$\text{(Expression 50)} \ (\theta_1-\theta_1^*)_L = \xi(\theta_1-\theta_1^*)+(1-\xi)(\theta_1-\theta_1^*)_L{}^{(k-1)}$$

$$\text{(Expression 51)} \ (\theta_1-\theta_1^*)_H = (\theta_1-\theta_1^*)-(\theta_1-\theta_1^*)_L$$

$$\text{(Expression 52)} \ ([\theta_1]-[\theta_1^*])_L = \xi([\theta_1]-[\theta_1^*])+(1-\xi)([\theta_1]-[\theta_1^*])_L{}^{(k-1)}$$

$$\text{(Expression 53)} \ ([\theta_1]-[\theta_1^*])_H = ([\theta_1]-[\theta_1^*])-([\theta_1]-[\theta_1^*])_L$$

In Expressions 50 to 53, $\xi = \Delta t/T_E$ and $(x)_L{}^{(k-1)}$ is a value of the low-frequency component at a time $\Delta t$ ago. $\Delta t$ is the control operation cycle. $T_E(=1/f_{C2})$ is the time constant of the filter.

The main control ECU 21 then determines a feedback output of each actuator (step 192). Specifically, Expression 54 is used to determine the feedback output of the drive motor 52 and Expression 55 is used to determine the feedback output of the riding section motor 62 based on the deviation between the state value and the target value in each state quantity.

$$\text{(Expression 54)} \ \tau_{W,FB} =$$

$$-K_{W1}(\theta_W-\theta_W{}^*)-K_{W2}([\theta_W]-[\theta_W{}^*])-K_{W3}(\theta_1-\theta_1^*)-K_{W4}([\theta_1]-[\theta_1^*])_H$$

$$\text{(Expression 55)} \ S_{S,FB} = -K_{S3}(\theta_1-\theta_1^*)_L-K_{S4}([\theta_1]-[\theta_1^*])_L-K_{S5}(\lambda_S-\lambda_S{}^*)-K_{S6}([\lambda_S]-[\lambda_S{}^*])$$

In the seventh embodiment, feedback gains $K_{W5}, K_{W6}, K_{S1}$, and $K_{S2}$ are zeroed in order to clarify roles of the drive motor 52 and the riding section motor 62. A value may nonetheless be assigned for each of the gains. Additionally, in that case, a value may be assigned for the deviation of the corresponding state quantity through frequency decomposition.

Finally, the main control ECU 21 uses, as in the first embodiment, the drive wheel control ECU 22 and the riding section control ECU 23 to control the actual outputs from the drive motor 52 and the riding section motor 62 based on the determined feedforward outputs and feedback outputs (step 200), before returning to the main routine.

The following effects can be gained with the seventh embodiment.

(1) Vibration of the vehicle body and the riding section 13 is prevented to improve the riding comfort.
(2) A balanced state is not achieved at a posture different from the target posture.

If, in the seventh embodiment, precise control of the drive wheel is difficult due to backlash in drive wheel gears or minor deformation of a drive tire, the low-frequency component may be borne by the drive motor 52 and the high-frequency component may be borne by the riding section movement.

An eighth embodiment will be described below.

The eighth embodiment is the vehicle incorporating the balancer of the third embodiment and employing the technique of the seventh embodiment. Either the riding section movement, the drive motor 52, or the balancer is selectively used according to the frequency component of disturbance.

Specifically, in feedback control, a low-frequency component of the deviation is borne by the riding section movement, a mid-frequency component is borne by the drive motor 52, and a high-frequency component is borne by the balancer movement. Vibration of the vehicle relative to the disturbance is thereby prevented and the rider feels no vibration.

Use of the riding section movement or the drive motor 52 for vehicle body posture control may generate vibration at high frequency, which causes the rider to feel unpleasant. This is because of inertia acting upon the riding section movement or the drive motor 52 is large, and thus the riding section movement or the drive motor 52 are not suitable for precise control.

In the eighth embodiment, therefore, the deviation $(\theta_1-\theta_1^*)$ in the vehicle body inclination angle between the actual state value $\theta_1$ and the target value $\theta_1^*$ is divided into the low-frequency component, the mid-frequency component, and the high-frequency component by a frequency filter. The low-frequency component is borne by the riding section movement, the mid-frequency component is borne by the drive motor 52, and the high-frequency component is borne by the balancer movement.

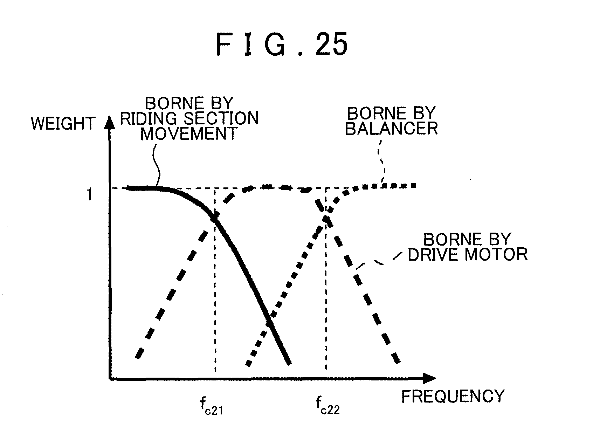

FIG. 25 is a diagram showing weighting of the riding section movement, the drive motor 52, and the balancer movement for each frequency component of the disturbance.

As shown in FIG. 25, weighting of the riding section movement, the drive motor 52, and the balancer movement is determined for each frequency component of the disturbance component such that frequencies less than a predetermined frequency $f_{c21}$ are primarily responded by the riding section movement, frequencies at $f_{c21}$ or higher and less than $f_{c22}$ are primarily responded by the drive motor 52, at and the frequency higher than $f_{c22}$ are primarily responded the balancer movement.

The values of the predetermined frequency $f_{c21}$ and $f_{c22}$ are set at frequencies at which the posture can be controlled through the riding section movement and by the drive motor to a certain degree. Predetermined values, for example, 1 Hz and 5 Hz are preset.

Running and posture control according to the eighth embodiment will be described below.

Note that a control system according to the eighth embodiment is arranged in the same manner as that in the third embodiment described with reference to FIG. 10.

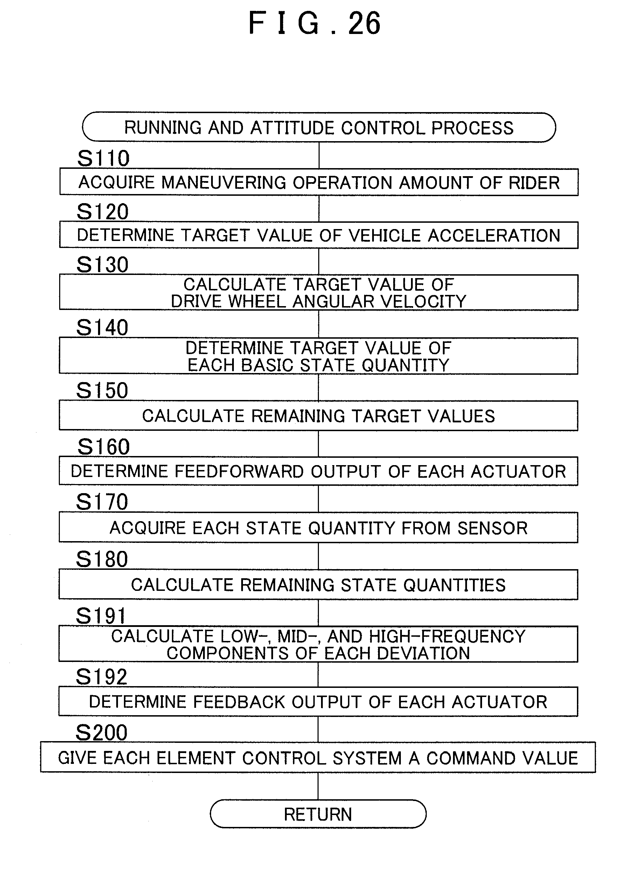

FIG. 26 is a flowchart showing details of the running and posture control process according to the eighth embodiment. In the descriptions of the flowchart in the eighth embodiment, like or corresponding portions are identified by the same reference numerals or step numbers as those used for the third embodiment and descriptions for those portions will be omitted as appropriately.

In the running and posture control in the eighth embodiment, the main control ECU 21 determines the target state quantity, acquires the state quantity, and determines the feedforward output, as in the third embodiment (steps 110 to 180).

The main control ECU 21 next calculates the low-, mid-, and high-frequency components of each deviation (step 191).

Specifically, the main control ECU 21 decomposes the deviation in the vehicle inclination angle between an actual state value and a target value $(\theta_1-\theta_1^*)$ into the low-frequency component (Expression 56), the high-frequency component (Expression 57), and the mid-frequency component (Expression 58) using frequency filters of Expressions 56 to 58. Further, the main control ECU 21 decomposes the deviation in the vehicle body inclination angular velocity between the actual state value and the target value $([\theta_1]-[\theta_1^*])$ into a low-frequency component (Expression 59), a high-frequency component (Expression 60), and a mid-frequency component (Expression 61) using frequency filters of Expressions 59 to 61.

Note that, in the eighth embodiment, a first-order finite impulse type low-pass filter is used. Another type or a filter of a higher order may, instead, be used.

In the expressions, $\xi_L = \Delta t/T_{C1}$ and $\xi_H = \Delta t/T_{C2}$ and $(x)_L^{(k-1)}$ is a value of the low-frequency component at a time $\Delta t$ ago. $(x)_H^{(k-1)}$ is a value of the high-frequency component. $\Delta t$ is the control operation cycle. $T_{C1}, (=1/f_{c21})$ and $T_{C2}$ $(=1/f_{c22})$ are the time constants of the respective filters.

$$\text{(Expression 56) } (\theta_1-\theta_1^*)_L = \xi_L(\theta_1-\theta_1^*)+(1-\xi_L)(\theta_1-\theta_1^*)_L^{(k-1)}$$

$$\text{(Expression 57) } (\theta_1-\theta_1^*)_H = (\theta_1-\theta_1^*)-(\theta_1-\theta_1^*)^{(k-1)}+(1-\xi_H)(\theta_1-\theta_1^*)_H^{(k-1)}$$

$$\text{(Expression 58) } (\theta_1-\theta_1{}^*)_M = (\theta_1-\theta_1{}^*)-(\theta_1-\theta_1{}^*)_L-(\theta_1-\theta_1{}^*)_H$$

$$\text{(Expression 59) } ([\theta_1]-[\theta_1{}^*])_L = \xi_L([\theta_1]-[\theta_1{}^*])+(1-\xi_L)([\theta_1]-[\theta_1{}^*])_L{}^{(k-1)}$$

$$\text{(Expression 60) } ([\theta_1]-[\theta_1{}^*])_H = ([\theta_1]-[\theta_1{}^*])-([\theta_1]-[\theta_1{}^*])^{(k-1)}+(1-\xi_H)([\theta_1]-[\theta_1{}^*])_H{}^{(k-1)}$$

$$\text{(Expression 61) } ([\theta_1]-[\theta_1{}^*])_M = ([\theta_1]-[\theta_1{}^*])-([\theta_1]-[\theta_1{}^*])_L-([\theta_1]-[\theta_1{}^*])_H$$

The main control ECU 21 then determines a feedback output of each actuator (step 192). Specifically, Expression 62 is used to determine the feedback output of the drive motor, Expression 63 is used to determine the feedback output of the riding section motor 62, and Expression 64 is used to determine the feedback output of the balancer motor 72 based on the deviation in each state quantity between the actual state value and the target value.
$$\text{(Expression 62) } \tau_{W,FB} =$$

$$-K_{W1}(\theta_W-\theta_W{}^*)-K_{W2}([\theta_W]-[\theta_W{}^*])-K_{W3}(\theta_1-\theta_1{}^*)_M-K_{W4}([\theta_1]-[\theta_1{}^*])_M$$

$$\text{(Expression 63) } S_{S,FB} = -K_{S3}(\theta_1-\theta_1{}^*)_L-K_{S4}([\theta_1]-[\theta_1{}^*])_L-K_{S5}(\lambda_S-\lambda_S{}^*)-K_{S6}([\lambda_S]-[\lambda_S{}^*])$$

$$\text{(Expression 64) } S_{B,FB} = -K_{B3}(\theta_1-\theta_1{}^*)_H-K_{B4}([\theta_1]-[\theta_1{}^*])_H-K_{B7}(\lambda_2-\lambda_2{}^*)-K_{B8}([\lambda_2]-[\lambda_2{}^*])$$

Finally, the main control ECU 21 uses, as in the third embodiment, the drive wheel control ECU 22 and the riding section control ECU 23 to control the actual outputs from the drive motor 52 and the riding section motor 62 based on the determined feedforward outputs and feedback outputs (step 200), before returning to the main routine.
The following effects can be gained according to the eighth embodiment.

(1) Vibration of the vehicle body and the riding section 13 is largely reduced for improving riding comfort.
(2) A balanced state is not achieved with a posture different from the target posture.

If, in the eighth embodiment, precise control of the drive wheel is difficult due to backlash in drive wheel gears or minor deformation of the drive tire, the low-frequency component may be borne by the drive motor 52 and the mid-frequency component may be borne by the riding section movement.
A ninth embodiment will be described below.
The ninth embodiment relates to control performed with a failed actuator. In the embodiment, if either the drive motor 52 or the riding section motor 62 fail, the inverted control of the vehicle body is maintained using only the operational motor by changing the control (changing the state target value and control gain).
If the drive motor 52 fails during posture control using the drive motor 52 without using the riding section movement or the balancer, the posture of the vehicle body cannot be controlled, so that the inverted state of the vehicle body can no longer be maintained.
Meanwhile, the riding section motor 62 failure during posture control including the riding section movement makes the control to bring the riding section 13 into the target position difficult and the inverted state of the vehicle body can no longer be maintained.

In the ninth embodiment, therefore, if the drive motor 52 fails, the riding section 13 is appropriately moved according to the actual vehicle running acceleration and the vehicle body inclination angle to thereby maintaining the inverted state. If, on the other hand, the riding motor 62 fails, the vehicle body is inclined appropriately according to the actual riding section position to thereby maintain the inverted state and control vehicle running.

Running and posture control according to the ninth embodiment will be described below.

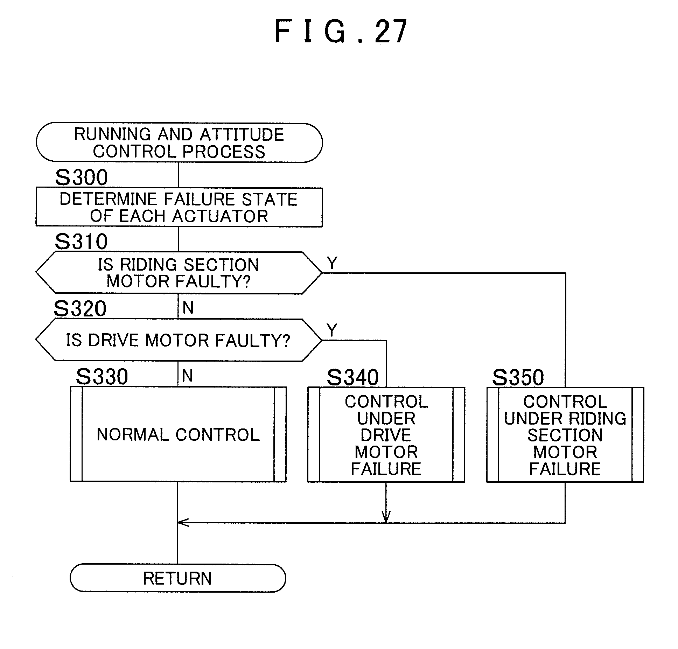

FIG. 27 is a main flowchart showing details of the running and posture control process according to the ninth embodiment. Note that a control system according to the ninth embodiment is arranged in the same manner as that in the first embodiment described with reference to FIG. 3 or that in the third embodiment described with reference to FIG. 10 in details of a normal process in step 330.

The main control ECU 21 determines a failure state of each actuator (step 300). Specifically, the failure state is detected by acquiring a fault indicating signal from each of the actuator control ECUs 22 to 24 or based on an estimation made from input/output relations by the observer.

For example, the main control ECU 21 estimates a value of drive torque outputted from the drive motor 52 based on, for example, a change in the drive wheel rotation state or the vehicle body inclination state and, if a difference between the estimated value and the command value issued to the drive motor 52 exceeds a predetermined threshold value, determines that the drive motor 52 is in a failure state.

Similarly, the main control ECU 21 estimates a value of movement thrust force outputted from the riding section motor 62 based on, for example, a riding section movement state and, if a difference between the estimated value and the command value issued to the riding section motor 62 exceeds a predetermined threshold value, determines that the riding section motor 62 is in a failure state.

From the result of the failure state determination, the main control ECU 21 determines whether the riding section motor 62 has failed (step 310) and whether the drive motor 52 has failed (step 320) and, if both are operational (step 310; N, step 320; N), performs the normal control (step 330).

In the normal control, the running and posture control is performed according to any one of the first through eighth embodiments or a combination thereof.

Meanwhile, if the drive motor 52 is determined to be faulty (step 320; Y), the main control ECU 21 performs a control under drive motor failure (step 340) and, if the riding section motor 62 is determined to be faulty (step 310; Y), the main control ECU 21 performs a control under riding section motor failure (step 350).

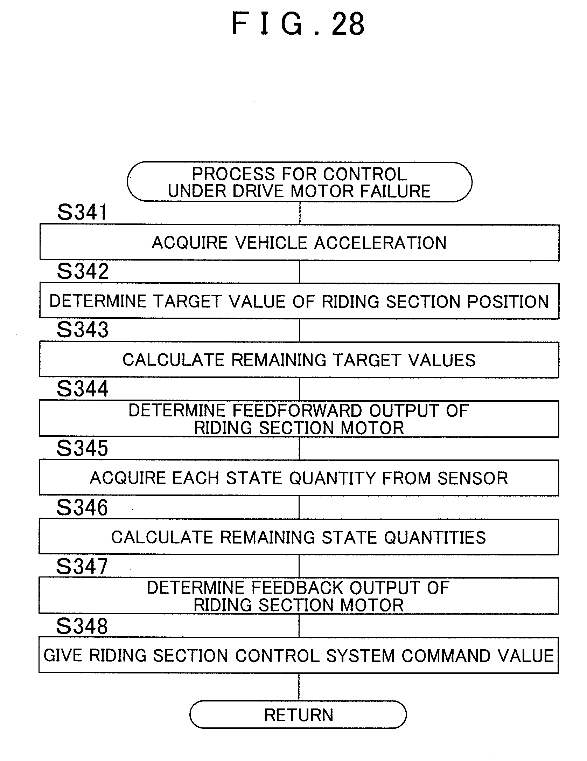

FIG. 28 is a flowchart showing details of the process for control under drive motor failure (step 340).

Upon detecting the drive motor 52 failure, the main control ECU 21 first acquires an actual acceleration $\alpha$ of the vehicle and the actual vehicle body inclination angle $\theta_1$ (step 341).

The actual acceleration $\alpha$ is, for example, acquired through any one of the following: acquisition from the acceleration sensor, calculation based on the rotation angle or the rotation angular velocity obtained from the drive wheel sensor 51, estimation by the observer, and use of braking performance specifications of an emergency brake system.

The main control ECU 21 next determines the target value of the riding section position (step 343). Specifically, Expressions 65 to 67 are used to determine the target value of the riding section position (riding section target position) $\lambda_S{}^*$ from the acquired vehicle acceleration $\alpha$ and the acquired vehicle body inclination angle $\theta_1$.

In Expression 66, $\varphi = \tan^{-1}\alpha$.

$$(\text{Expression 65}) \ \lambda_S{}^* = -\lambda_{S,\text{Max}} \ (\alpha < -\alpha_{\text{Max}})$$

$$(\text{Expression 66}) \ \lambda_S{}^* = l_1(m_1/m_S)[\tan(\varphi-\theta_1)+\gamma(\sin\varphi/\cos(\varphi-\theta_1))] \ (-\alpha_{\text{Max}} \le \alpha \le \alpha_{\text{Max}})$$

$$(\text{Expression 67}) \ \lambda_S{}^* = \lambda_{S,\text{Max}} \ (\alpha > \alpha_{\text{Max}})$$

If the drive motor 52 is faulty, accurate control of the vehicle acceleration and vehicle body inclination angle is difficult and, even though the target value $\alpha^*$ of the vehicle acceleration or the target value $\theta_1{}^*$ of the vehicle body inclination angle cannot achieved, the vehicle body posture needs to be controlled stably to a certain degree by using only the riding section movement.

Accordingly, as expressed by Expressions 65 to 67, the riding section target position $\lambda_S{}^*$ is determined in accordance with the actual vehicle acceleration $\alpha$ and the actual vehicle body inclination angle $\theta_1$ and the riding section 13 is moved to the target position to thereby retain the inverted state.

For the vehicle body inclination angle, the posture control may be maintained by giving a target value corresponding to the case in which the drive motor fails.

The main control ECU 21 then calculates remaining target values (step 343). Specifically, the riding section target position $\lambda_S{}^*$ is differentiated with respect to time to calculate the target value $[\lambda_S{}^*]$ of the riding section movement speed.

In addition, the main control ECU 21 determines the feedforward output of the riding section motor 62 (step 344). Specifically, Expression 68 is used to determine the feedforward output $S_{S,FF}$ of the riding section motor 62 from the riding section target position $\lambda_S{}^*$. The feedforward output $S_{S,FF}$ is the riding section thrust force required for keeping the riding section 13 at the target position at the actual vehicle body inclination angle $\theta_1$.

$$\text{(Expression 68)} \; S_{S,FF} = -m_S g \sin\theta_1$$

The main control ECU 21 next acquires each state quantity from the sensor (step 345). Specifically, the drive wheel rotation angle (rotation angular velocity) is acquired from the drive wheel sensor 51, the vehicle body inclination angle (inclination angular velocity) is acquired from the vehicle body inclination sensor, and the riding section position (movement speed) is acquired from the riding section sensor.

Additionally, the main control ECU 21 calculates remaining state quantities (step 346). Specifically, the drive wheel rotation angle (rotation angular velocity), the vehicle body inclination angle (inclination angular velocity), and the riding section position (movement speed) are integrated or differentiated with respect to time to calculate the remaining state quantities.

The main control ECU 21 determines the feedback output of the riding section motor 62 (step 347).

Expression 69 is used to determine the feedback output of the riding section motor 62 based on the deviation between each target value and actual state quantity.

The vehicle body posture control may be strengthened by making values of the feedback gains $K_{S3}$, $K_{S4}$ greater than those during the normal control. $K_{S3} = K_{S4} = 0$ may be made true by ignoring the vehicle body inclination angle.

$$\text{(Expression 69)} \; S_{S,FB} =$$

$$-K_{S3}(\theta_1 - \theta_1{}^*) - K_{S4}([\theta_1] - [\theta_1{}^*]) - K_{S5}(\lambda_S - \lambda_S{}^*) - K_{S6}([\lambda_S] - [\lambda_S{}^*])$$

The main control ECU 21 gives the riding section control system a command value (step 348) and returns to the main routine.

Specifically, the main control ECU 21 gives the riding section control ECU 23 a sum of the feedforward output and the feedback output as the command value (riding section thrust force command value) $S_S$.

The riding section control ECU 23 supplies an input voltage (drive voltage) corresponding to the riding section thrust force command value $S_S$ to thereby move the riding section 13.

Thus the posture is controlled through movement of the riding section 13. In this case, in which the drive motor 52 is faulty, the posture control under gradual deceleration of the vehicle and after a stop is performed only through the movement of the riding section 13.

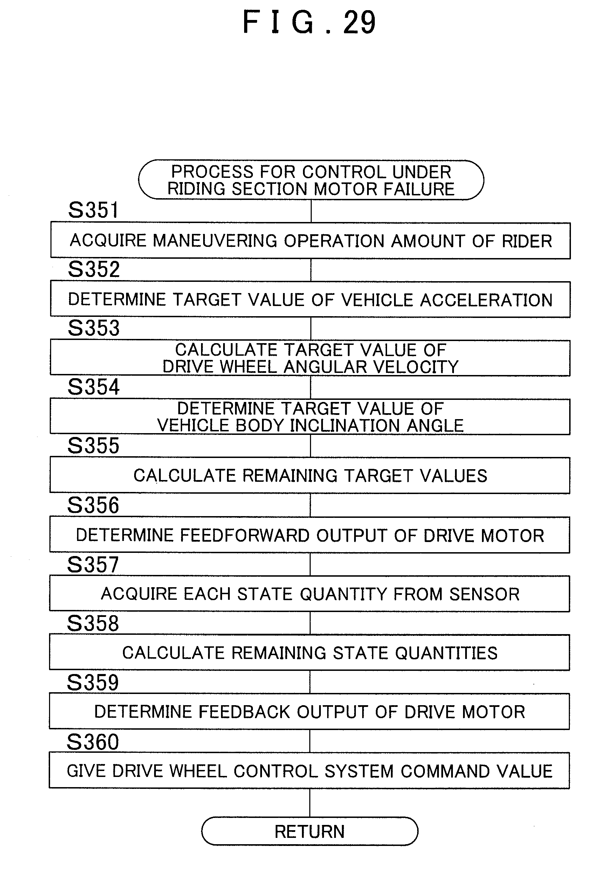

FIG. 29 is a flowchart showing details of process for control under riding section motor failure (step 350).

When the riding section motor 62 is faulty, the running and posture control can be performed using the drive motor 52.

When the failure is detected, the main control ECU 21 acquires the maneuvering operation amount operated by the rider, specifically, the amount of operation of the joystick 31 operated by the rider (step 351).

The main control ECU 21 then determines the vehicle target acceleration $\alpha^*$ based on the acquired maneuvering operation amount (step 352). Note that the vehicle control may be automatically shifted into an emergency stop mode, in which a predetermined deceleration target value is automatically assigned.

The main control ECU 21 calculates the target value of the drive wheel angular velocity (drive wheel target angular velocity) $[\theta\omega^*]$ (step 353). Specifically, the drive wheel target angular velocity $[\theta\omega^*]$ is calculated from the target value of deceleration. For example, the target value of deceleration is integrated with respect to time and divided by a predetermined drive wheel ground contact radius to arrive at a value as the target value of the drive wheel rotation angular velocity.

The main control ECU 21 then determines a target value of the vehicle body inclination angle (step 354). Specifically, Expression 70 is used to determine the target vehicle body inclination angle $\theta_1^*$ from the vehicle target acceleration $\alpha^*$ and the actual riding section target position $\lambda_S^*$.

In Expression 70, $\beta = \tan^{-1}(m_S\lambda_S/m_1l_1)$.

As such, the vehicle body is inclined to the target value $\theta_1^*$ as appropriately according to the actual riding section position $\lambda_S^*$ to maintain the inverted state, thereby responding to the failure of the riding section motor 62.

The posture control may be maintained even more strongly by giving the riding section position a target value.

$$\text{(Expression 70)} \ \theta_1^* = \varphi^* - \beta + \sin^{-1}(\gamma\sin\varphi^*\cos\beta)$$

The main control ECU 21 next calculates remaining target values (step 355).

Each target value is differentiated with respect to time or integrated with respect to time to calculate the drive wheel rotation angle target value $\theta_W^*$ and the vehicle body inclination angular velocity target value $[\theta_1^*]$.

The main control ECU 21 next determines the feedforward output of the drive motor 52 (step 356). Specifically, Expression 7 (see the first embodiment) is used to determine the feedforward output $\tau_{W,FF}$ of the drive motor 52 from the vehicle target acceleration $\alpha^*$.

The main control ECU 21 then acquires each state quantity from the sensor (step 357). Specifically, the drive wheel rotation angle (rotation angular velocity) is acquired from the drive wheel sensor 51, the vehicle body inclination angle (inclination angular velocity) is acquired from the vehicle body inclination sensor, and the riding section position (movement speed) is acquired from the riding section sensor.

Additionally, remaining state quantities are calculated (step 358). The drive wheel rotation angle (rotation angular velocity) and the vehicle body inclination angle (inclination angular velocity) are integrated or differentiated with respect to time to calculate the remaining state quantities.

The main control ECU 21 next determines the feedback output of the drive motor 52 (step 359). Specifically, Expression 71 is used to determine the feedback output $\tau_{W,FB}$ of the drive motor 52 based on the deviation between each target value and actual state quantity.

Note that, in Expression 71, the feedback gains $K_{W5}$ and $K_{W6}$ may be given to add a term of $(-K_{W5}\lambda_S - K_{W6}[\lambda_S])$ to thereby return the riding section back to a neutral position.

$$\text{(Expression 71)} \ \tau_{W,FB} =$$

$$-K_{W1}(\theta_W - \theta_W^*) - K_{W2}([\theta_W] - [\theta_W^*]) - K_{W3}(\theta_1 - \theta_1^*) - K_{W4}([\theta_1] - [\theta_1^*])$$

Finally, the main control ECU 21 gives the drive wheel control system a command value (step 360) and returns to the main routine.

Specifically, the main control ECU 21 supplies the drive wheel control ECU 22 a sum of the feedforward output $\tau_{W,FF}$ determined and the feedback output $\tau_{W,FB}$ determined $(\tau_{W,FF} + \tau_{W,FB})$ as the drive torque command value $\tau_W$.

The drive wheel control ECU 22 supplies an input voltage (drive voltage) corresponding to the drive torque command value $\tau_W$ to thereby give the drive wheel the drive torque $\tau_W$. Thus, the posture and running are controlled by the drive motor 52.

As described above, according to the ninth embodiment, even if the drive motor 52 or the riding section motor 62 fails, the posture control of the vehicle body can be maintained and safety of the rider can be sufficiently ensured.

Although this embodiment is provided with capability of the control when the drive motor 52 fails and that when the riding section motor 62 fails, only with either one of the capabilities may be provided.

**Claims**

1. A vehicle **characterized by** comprising:

a drive wheel;

a vehicle body rotatably supported by a rotational axis of the drive wheel;

a riding section relatively-movably disposed in the vehicle body;

target acquisition means acquiring a target running state; and

running control means controlling running while adjusting a gravity center of the vehicle body through rotation of the vehicle body about the rotational axis and movement of the riding section with respect to the vehicle body based on the target running state.

2.  The vehicle according to claim 1, **characterized in that**

the running control means includes

determination means determining drive torque of the drive wheel and movement thrust force for moving the riding section based on the acquired target running state,

drive means applying the drive torque determined by the determination means to the drive wheel, and

riding section movement means applying the movement thrust force determined by the determination means to the riding section.

3.  The vehicle according to claim 1, **characterized by** further comprising:

target inclination angle determination means determining a target inclination angle achieved through rotation of the vehicle body based on the target running state; and

target position determination means determining, based on the target running state and the target inclination angle, a target position to which the riding section is moved, wherein

the running control means controls the running while adjusting the gravity center of the vehicle body through rotation of the vehicle body and movement of the riding section based on the target running state, the target inclination angle, and the target position.

4.  The vehicle according to claim 1 or 2 **characterized by** further comprising:

target inclination angle determination means determining a target inclination angle achieved through rotation of the vehicle body based on the target running state;

target position determination means determining, based on the target running state and the target inclination angle, a target position to which the riding section is moved;

inclination angle detection means detecting an inclination angle of the vehicle body; and

position detection means detecting a position of the riding section, wherein

the determination means determines drive torque of the drive wheel based on the inclination angle of the vehicle body detected by the inclination angle detection means and the target inclination angle of the vehicle body determined by the target inclination angle determination means, and the movement thrust force of the riding section based on the position of the riding section detected by the position detection means and the target position of the riding section determined by the target position determination means.

5.  The vehicle according to claim 2, **characterized by** further comprising

target inclination angle determination means determining a target inclination angle achieved through rotation of the vehicle body based on the target running state;

target position determination means determining, based on the target running state and the target inclination angle, a target position to which the riding section is moved;

inclination detection means detecting an inclination angle of the vehicle body; position detection means detecting a position of the riding section made by the riding section movement mechanism;

feedforward output determination means determining feedforward drive torque of the drive wheel based on the target inclination angle, and feedforward movement thrust force of the riding section based on the target position of the riding section; and

feedback output determination means determining feedback drive torque of the drive wheel based on a deviation between the target inclination angle determined by the target inclination angle determination means and the inclination angle of the vehicle body detected by the inclination angle detection means, and determining feedback movement thrust force of the riding section based on a deviation between the target position determined by the target position determination means and the position of the riding section detected by the inclination detection means, wherein

the determination means determines the drive torque of the drive wheel based on a sum of the feedforward drive torque and the feedback drive torque, and the movement thrust force of the riding section based on a sum of the feedforward movement thrust force and the feedback movement thrust force.

**6.** The vehicle according to any one of claims 1 to 5, **characterized by** further comprising target acceleration acquisition means acquiring a target acceleration based on an operation state of an operation member for operating the vehicle, wherein
the target acquisition means acquires the target acceleration as the target running state.

**7.** The vehicle according to any one of claims 2 to 6, **characterized by** further comprising specification means specifying a sensory acceleration, wherein
the determination means determines the drive torque and the movement thrust force further based on a degree of the specified sensory acceleration.

**8.** The vehicle according to claim 1 or 6, **characterized by** further comprising:

a balancer; and
a balancer movement mechanism moving the balancer, wherein
the running control means controls the running while adjusting the gravity center of the vehicle body through the rotation of the vehicle body about the rotational axis, movement of the balancer with the balancer movement mechanism, and the movement of the riding section with respect to the vehicle body.

**9.** The vehicle according to claim 8, **characterized in that**:

the running control means controls the running while adjusting the gravity center of the vehicle body through inclination of the vehicle body and movement of the balancer when the acquired target acceleration is smaller than a predetermined threshold value, and
the inclination of the vehicle body and the movement of the riding section while the balancer is fixed at a movable limit position based on a direction of the target acceleration when the acquired target acceleration is equal to or greater than the predetermined threshold value.

**10.** The vehicle according to any one of claims 1 to 9, **characterized by** further comprising mass acquisition means acquiring a mass of the riding section including a weight body on the riding section, wherein
the running control means controls the running while adjusting the gravity center of the vehicle body based on the mass of the riding section acquired by the mass acquisition means.

**11.** A vehicle **characterized by** comprising:

a drive wheel;
a vehicle body rotatably supported by a rotational axis of the drive wheel;
a riding section relatively-movably disposed in the vehicle body;
target acquisition means acquiring a target running state;
drive means driving the drive wheel;
riding section movement means moving the riding section; and
running control means controlling running while adjusting a position of a gravity center of the vehicle body by controlling at least one of drive by the drive means and movement of the riding section by the riding section movement means based on the target running state, wherein
the running control means determines drive torque of the drive wheel based on a low-frequency component of a change in the target running state, and determines movement thrust force for moving the riding section based on a high-frequency component of the change in the target running state.

**12.** The vehicle according to claim 11, **characterized by** further comprising specification means specifying a sensory acceleration, wherein
the running control means determines the drive torque and the movement thrust force further based on the specified sensory acceleration.

**13.** The vehicle according to claim 11 or 12, **characterized by** further comprising:

target inclination angle determination means determining a target inclination angle achieved through rotation of the vehicle body based on the acquired low-frequency component of the target running state; and
target position determination means determining, based on the target running state and the target inclination angle, a target position to which the riding section is moved, wherein

the running control means determines drive torque of the drive wheel based on the determined target inclination angle, and movement thrust force for moving the riding section based on the determined target position.

**14.** A vehicle **characterized by** comprising:

a drive wheel;
a vehicle body rotatably supported by a rotational axis of the drive wheel;
a riding section relatively-movably disposed in the vehicle body;
target acquisition means acquiring a target running state;
drive means driving the drive wheel;
riding section movement means moving the riding section;
vehicle speed detection means detecting a vehicle speed; and
running control means controlling running while adjusting a position of a gravity center of the vehicle body by controlling at least one of drive by the drive means and movement of the riding section by the riding section movement means based on the target running state, wherein
the running control means controls at least one of the drive and the movement of the riding section so that an angle of rotation of the vehicle body increases in proportion to the vehicle speed.

**15.** The vehicle according to claim 14, **characterized by** further comprising specification means specifying a sensory acceleration, wherein
the determination means determines the drive torque and the movement thrust force further based on a degree of the specified sensory acceleration.

**16.** The vehicle according to claim 14, **characterized by** further comprising:

target inclination angle determination means determining a target inclination angle achieved through rotation of the vehicle body based on the target running state; and
target position determination means determining, based on the target running state and the target inclination angle, a target position to which the riding section is moved, wherein
the determination means determines the drive torque and the movement thrust force based on the target running state, the target inclination angle and the target position regarding the reference.

**17.** A vehicle **characterized by** comprising:

a drive wheel;
a vehicle body rotatably supported by a rotational axis of the drive wheel;
a riding section relatively-movably disposed in the vehicle body;
target acquisition means acquiring a target running state;
drive means driving the drive wheel;
riding section movement means moving the riding section;
determination means determining drive torque of the drive wheel and movement thrust force for moving the riding section based on the acquired target running state; and
running control means controlling running while adjusting a position of a gravity center of the vehicle body by controlling drive by the drive means with the determined drive torque and controlling movement of the riding section by the riding section movement means with the determined movement thrust force, wherein
when directions of a drive torque required for vehicle body posture control and drive torque required for vehicle running control are different from each other, the determination means determines, based on the acquired target running state, one of the drive torques as the drive torque of the drive wheel, and determines the movement thrust force based on the other drive torque and the target running state.

**18.** The vehicle according to claim 17, **characterized by** further comprising specification means specifying a sensory acceleration, wherein
the determination means determines the drive torque and the movement thrust force further based on a degree of the specified sensory acceleration.

**19.** A vehicle **characterized by** comprising:

a drive wheel;

a vehicle body rotatably supported by a rotational axis of the drive wheel;
a riding section relatively-movably disposed in the vehicle body;
target acquisition means acquiring a target running state;
drive means driving the drive wheel;
riding section movement means moving the riding section;
disturbance detection means detecting a disturbance acting on the vehicle body; and
running control means controlling running while adjusting a position of a gravity center of the vehicle body by controlling, based on the target running state, at least one of drive by the drive means and movement of the riding section by the riding section movement means, wherein
the running control means determines drive torque of the drive wheel based on a high-frequency component of the disturbance, and determines movement thrust force for moving the riding section based on the acquired target running state and a low-frequency component of the detected disturbance.

**20.** The vehicle according to claim 19, **characterized by** further comprising specification means specifying a sensory acceleration, wherein
the running control means further determines the drive torque and the movement thrust force based on a degree of the specified sensory acceleration.

**21.** The vehicle according to claim 19 or 20, **characterized by** further comprising:

a balancer; and
a balancer movement mechanism moving the balancer, wherein
the running control means determines the drive torque of the drive wheel based on the acquired target running state and a mid-frequency component of the detected disturbance, determines the movement thrust force for moving the riding section based on the acquired target running state and the low-frequency component of the detected disturbance, and determines balancer thrust force applied by the balancer movement mechanism based on the high-frequency component of the detected disturbance.

**22.** A vehicle **characterized by** comprising:

a drive wheel;
a vehicle body rotatably supported by a rotational axis of the drive wheel;
a riding section relatively-movably disposed in the vehicle body;
target acquisition means acquiring a target running state;
drive means driving the drive wheel;
riding section movement means moving the riding section;
running control means controlling running while adjusting a position of a gravity center of the vehicle body by controlling at least one of drive by the drive means and movement of the riding section by the riding section movement means based on the target running state; and
first failure detection means detecting a failure of the drive means, wherein
when the failure of the drive means is detected, the running control means determines movement thrust force for moving the riding section based on a running acceleration of the vehicle and an inclination angle of the vehicle body, and performs posture control while adjusting the position of the gravity center of the vehicle body with the movement thrust force.

**23.** The vehicle according to claim 22, **characterized by** further comprising:

target inclination angle determination means determining a target inclination angle achieved through rotation of the vehicle body based on the target running state;
target position determination means determining, based on the target running state and the target inclination angle, a target position to which the riding section is moved;
inclination detection means detecting the inclination angle of the vehicle body; and
position detection means detecting a position of the riding section made by the riding section movement mechanism, wherein
the running control means determines a drive torque for feedback control of the drive wheel based on a deviation between the target inclination angle determined by the target inclination angle determination means and the inclination angle of the vehicle body detected by the inclination angle detection means, and movement thrust force for feedback control of the riding section based on a deviation between the target position determined by the target position determination means and the position of the riding section detected by the inclination detection means, and

when the failure of the drive means is detected, the target position determination means determines the target position based on the running acceleration of the vehicle and an inclination angle of the vehicle body.

24. A vehicle **characterized by** comprising:

a drive wheel;
a vehicle body rotatably supported by a rotational axis of the drive wheel;
a riding section relatively-movably disposed in the vehicle body;
target acquisition means acquiring a target running state;
drive means driving the drive wheel;
riding section movement means moving the riding section;
running control means controlling running while adjusting a position of a gravity center of the vehicle body by controlling at least one of drive by the drive means and movement of the riding section by the riding section movement means based on the target running state; and
second failure detection means detecting a failure of the riding section movement means, wherein
when the failure of the riding section movement means is detected, the running control means determines drive torque of the drive wheel based on a position of the riding section, and performs posture control while adjusting the position of the gravity center of the vehicle body with the drive torque.

25. The vehicle according to claim 24, **characterized by** further comprising:

target inclination angle determination means determining a target inclination angle achieved through rotation of the vehicle body based on the target running state;
target position determination means determining, based on the target running state and the target inclination angle, a target position to which the riding section is moved;
inclination detection means detecting an inclination angle of the vehicle body; and
position detection means detecting the position of the riding section made by the riding section movement mechanism, wherein
the running control means determines drive torque for feedback control of the drive wheel from based on a deviation between the target inclination angle determined by the target inclination angle determination means and an inclination angle of the vehicle body detected by the inclination angle detection means, and movement thrust force for feedback control of the riding section based on a deviation between the target position determined by the target position determination means and the position of the riding section detected by the inclination detection means, and determines the drive torque by changing control gain of the feedback based on the acquired target running state and an actual position of the riding section when the failure of the riding section movement means is detected.

# FIG.1A

## WHEN RIDING SECTION IS MOVED

INERTIAL FORCE

GRAVITATIONAL FORCE

ANTI-TORQUE

TRANSLATIONAL MOVEMENT
OF RIDING SECTION

# FIG.1B

## WHEN RIDING SECTION IS NOT MOVED

INERTIAL FORCE

GRAVITATIONAL FORCE

ANTI-TORQUE

# FIG.2

HEAD RESTRAINT 133

RIDER

RIDING SECTION 13

SEAT BACK 132

JOYSTICK 31

INPUT DEVICE 30

SEAT CUSHION 131

MOVEMENT MECHANISM 63

CONTROL UNIT 16

SUPPORT MEMBER 14

FORWARD MOTION

DRIVE WHEEL 11a, 11b

DRIVE MOTOR 12

# FIG.3

EP 2 163 467 A1

# FIG.4

```
( RUNNING AND ATTITUDE CONTROL PROCESS )
```

S110
```
ACQUIRE MANEUVERING OPERATION AMOUNT OF RIDER
```

S120
```
DETERMINE TARGET VALUE OF VEHICLE ACCELERATION
```

S130
```
CALCULATE TARGET VALUE OF
DRIVE WHEEL ANGULAR VELOCITY
```

S140
```
DETERMINE TARGET VALUES OF VEHICLE BODY
INCLINATION ANGLE AND RIDING SECTION POSITION
```

S150
```
CALCULATE REMAINING TARGET VALUES
```

S160
```
DETERMINE FEEDFORWARD OUTPUT OF EACH ACTUATOR
```

S170
```
ACQUIRE EACH STATE QUANTITY FROM SENSOR
```

S180
```
CALCULATE REMAINING STATE QUANTITIES
```

S190
```
DETERMINE FEEDBACK OUTPUT OF EACH ACTUATOR
```

S200
```
GIVE EACH ELEMENT CONTROL SYSTEM COMMAND VALUE
```

```
( RETURN )
```

# FIG.5

# F I G . 6

```
        ┌─────────────────────────────┐
        │      TARGET VALUE           │
        │  DETERMINATION PROCESS      │
        └─────────────────────────────┘
                    │
   S10              │
  ┌─────────────────────────────┐
  │   OBTAIN θ₁* USING          │
  │   EXPRESSION 2              │
  └─────────────────────────────┘
                    │
   S11              │
  ┌─────────────────────────────┐
  │   OBTAIN λₛ* USING          │
  │   EXPRESSION 5              │
  └─────────────────────────────┘
                    │
   S12              │
   ◁─────────────────────────────▷────── Y ──────┐
   │  −λ_S,Max ≤ λₛ* ≤ λ_S,Max ?  │              │
                    │ N                            │
   S14                          S13               │
  ┌─────────────────────────┐   ┌──────────────────────────────┐
  │   λₛ* = ± λ_S,Max        │   │  DETERMINE θ₁* AND λₛ*       │
  └─────────────────────────┘   └──────────────────────────────┘
                    │
   S15              │
  ┌─────────────────────────────┐
  │  DETERMINE θ₁* USING        │
  │  EXPRESSION 1 OR 3          │
  └─────────────────────────────┘
                    │
                    │◄──────────────────────────────┘
                    │
        ┌─────────────────────────────┐
        │          END                │
        └─────────────────────────────┘
```

The flowchart steps:

- **TARGET VALUE DETERMINATION PROCESS**
- **S10**: OBTAIN $\theta_1^*$ USING EXPRESSION 2
- **S11**: OBTAIN $\lambda_S^*$ USING EXPRESSION 5
- **S12**: $-\lambda_{S,Max} \leq \lambda_S^* \leq \lambda_{S,Max}$ ?
  - Y → **S13**: DETERMINE $\theta_1^*$ AND $\lambda_S^*$
  - N → **S14**: $\lambda_S^* = \pm \lambda_{S,Max}$
- **S15**: DETERMINE $\theta_1^*$ USING EXPRESSION 1 OR 3
- **END**

# F I G . 7

EP 2 163 467 A1

# F I G . 8

# FIG.9

```
(   RUNNING AND ATTITUDE CONTROL PROCESS   )
```

S110
| ACQUIRE MANEUVERING OPERATION AMOUNT OF RIDER |

S120
| DETERMINE TARGET VALUE OF VEHICLE ACCELERATION |

S130
| CALCULATE TARGET VALUE OF<br>DRIVE WHEEL ANGULAR VELOCITY |

S131
| ACQUIRE CONTROL MODE SIGNAL |

S132
| DETERMINE RIDER'S<br>ACCELERATION SENSATION COEFFICIENT |

S140
| DETERMINE TARGET VALUES OF VEHICLE BODY<br>INCLINATION ANGLE AND RIDING SECTION POSITION |

S150
| CALCULATE REMAINING TARGET VALUES |

S160
| DETERMINE FEEDFORWARD OUTPUT OF EACH ACTUATOR |

S170
| ACQUIRE EACH STATE QUANTITY FROM SENSOR |

S180
| CALCULATE REMAINING STATE QUANTITIES |

S190
| DETERMINE FEEDBACK OUTPUT OF EACH ACTUATOR |

S200
| GIVE EACH ELEMENT CONTROL SYSTEM COMMAND VALUE |

```
(   RETURN   )
```

# F I G . 10

EP 2 163 467 A1

# FIG . 11A

### LINEAR MOTION TYPE

134
135

# FIG . 11B

### ROTARY PENDULUM TYPE

137
136
134

# FIG . 11C

### ROTARY INVERTED PENDULUM TYPE

134
136
138

# F I G . 12

$\lambda_s$
$m_1, I_1$
$\theta_1$
$m_s$
$S_s$
$l_1$
$m_2, I_2$
134
$l_2$
$S_B$
$\tau_W$
$\lambda_2$
$\theta_W$
$m_w, I_w, R_w$

# FIG. 13

# F I G . 14

TARGET VALUE DETERMINATION PROCESS

**S30** OBTAIN $\theta_1^*$ USING EXPRESSION 12

**S31** OBTAIN $\lambda_2^*$ USING EXPRESSION 20

**S32** $-\lambda_{2,Max} \leq \lambda_2^* \leq \lambda_{2,Max}$ ?

Y → **S33** DETERMINE $\theta_1^*$ AND $\lambda_s^*$ $\lambda_s^* = 0$

N

**S34** $\lambda_2^* = \pm \lambda_{2,Max}$

**S35** OBTAIN $\lambda_s^*$ USING EXPRESSION 15 OR 17

**S36** $-\lambda_{S,Max} \leq \lambda_s^* \leq \lambda_{S,Max}$ ?

Y → **S37** DETERMINE $\theta_1^*$ AND $\lambda_s^*$

N

**S38** $\lambda_s^* = \pm \lambda_{S,Max}$

**S39** DETERMINE $\theta_1^*$ USING EXPRESSION 11 OR 13

END

# F I G . 15

# FIG . 16A

# FIG . 16B

# F I G . 17

RUNNING AND ATTITUDE CONTROL PROCESS

S110
ACQUIRE MANEUVERING OPERATION AMOUNT OF RIDER

S120
DETERMINE TARGET VALUE OF VEHICLE ACCELERATION

S130
CALCULATE TARGET VALUE OF
DRIVE WHEEL ANGULAR VELOCITY

S141
CALCULATE LOW FREQUENCY COMPONENT
OF VEHICLE ACCELERATION TARGET VALUE

S142
DETERMINE TARGET VALUE OF
VEHICLE BODY INCLINATION ANGLE

S143
DETERMINE TARGET VALUE OF RIDING SECTION POSITION

S150
CALCULATE REMAINING TARGET VALUES

S160
DETERMINE FEEDFORWARD OUTPUT OF EACH ACTUATOR

S170
ACQUIRE EACH STATE QUANTITY FROM SENSOR

S180
CALCULATE REMAINING STATE QUANTITIES

S190
DETERMINE FEEDBACK OUTPUT OF EACH ACTUATOR

S200
GIVE EACH ELEMENT CONTROL SYSTEM COMMAND VALUE

RETURN

FIG . 18A

FIG . 18B

FIG . 18C

LOW-SPEED
RUNNING

HIGH-SPEED
RUNNING

BRAKING

ACCELERATION

SUDDEN
BRAKING

# F I G . 19

```
( RUNNING AND ATTITUDE CONTROL PROCESS )
```

**S110**

ACQUIRE MANEUVERING OPERATION AMOUNT OF RIDER

**S120**

DETERMINE TARGET VALUE OF VEHICLE ACCELERATION

**S130**

CALCULATE TARGET VALUE OF
DRIVE WHEEL ANGULAR VELOCITY

**S144**

ACQUIRE TARGET VALUE OF DRIVE WHEEL
ROTATION ANGULAR VELOCITY

**S145**

DETERMINE TARGET VALUE OF VEHICLE BODY
INCLINATION ANGLE

**S146**

DETERMINE TARGET VALUE OF RIDING SECTION POSITION

**S150**

CALCULATE REMAINING TARGET VALUES

**S160**

DETERMINE FEEDFORWARD OUTPUT OF EACH ACTUATOR

**S170**

ACQUIRE EACH STATE QUANTITY FROM SENSOR

**S180**

CALCULATE REMAINING STATE QUANTITIES

**S190**

DETERMINE FEEDBACK OUTPUT OF EACH ACTUATOR

**S200**

GIVE EACH ELEMENT CONTROL SYSTEM COMMAND VALUE

```
( RETURN )
```

F I G . 20

# FIG.21A

ANTI-TORQUE

DRIVE TORQUE

# FIG.21B

$\theta_1'{}^*$

UNACHIEVABLE
WITH DRIVE MOTOR
(ACHIEVED BY MOVING
SEAT INSTEAD OF VEHICLE
BODY INCLINATION)

ACHIEVABLE
WITH DRIVE
MOTOR

$\theta_w'{}^*$

ACHIEVABLE
WITH DRIVE
MOTOR

UNACHIEVABLE
WITH DRIVE MOTOR
(ACHIEVED BY MOVING
SEAT INSTEAD OF VEHICLE
BODY INCLINATION)

# F I G . 22

RUNNING AND ATTITUDE CONTROL PROCESS

S110
ACQUIRE MANEUVERING OPERATION AMOUNT OF RIDER

S120
DETERMINE TARGET VALUE OF VEHICLE ACCELERATION

S130
CALCULATE TARGET VALUE OF
DRIVE WHEEL ANGULAR VELOCITY

S140a
ACQUIRE STATE QUANTITIES OF VEHICLE BODY
INCLINATION AND RIDING SECTION MOVEMENT

S140b
DETERMINE LIMIT VALUE OF VEHICLE BODY
INCLINATION ANGLE TARGET VALUE

S140c
DETERMINE TARGET VALUE OF
VEHICLE BODY INCLINATION ANGLE

S140d
DETERMINE TARGET VALUE OF RIDING SECTION POSITION

S150
CALCULATE REMAINING TARGET VALUES

S160
DETERMINE FEEDFORWARD OUTPUT OF EACH ACTUATOR

S170
ACQUIRE EACH STATE QUANTITY FROM SENSOR

S180
CALCULATE REMAINING STATE QUANTITIES

S181
CHANGE PART OF FEEDBACK GAINS

S190
DETERMINE FEEDBACK OUTPUT OF EACH ACTUATOR

S200
GIVE EACH ELEMENT CONTROL SYSTEM COMMAND VALUE

RETURN

# F I G . 23

# F I G . 24

RUNNING AND ATTITUDE CONTROL PROCESS

S110
ACQUIRE MANEUVERING OPERATION AMOUNT OF RIDER

S120
DETERMINE TARGET VALUE OF VEHICLE ACCELERATION

S130
CALCULATE TARGET VALUE OF
DRIVE WHEEL ANGULAR VELOCITY

S140
DETERMINE TARGET VALUES OF VEHICLE BODY
INCLINATION ANGLE AND RIDING SECTION POSITION

S150
CALCULATE REMAINING TARGET VALUES

S160
DETERMINE FEEDFORWARD OUTPUT OF EACH ACTUATOR

S170
ACQUIRE EACH STATE QUANTITY FROM SENSOR

S180
CALCULATE REMAINING STATE QUANTITIES

S191
CALCULATE LOW-FREQUENCY AND HIGH-FREQUENCY
COMPONENTS OF EACH DEVIATION

S192
DETERMINE FEEDBACK OUTPUT OF EACH ACTUATOR

S200
GIVE EACH ELEMENT CONTROL SYSTEM A COMMAND VALUE

RETURN

# F I G . 25

WEIGHT

BORNE BY RIDING SECTION MOVEMENT

BORNE BY BALANCER

BORNE BY DRIVE MOTOR

1

$f_{c21}$          $f_{c22}$          FREQUENCY

# F I G . 26

RUNNING AND ATTITUDE CONTROL PROCESS

S110
ACQUIRE MANEUVERING OPERATION AMOUNT OF RIDER

S120
DETERMINE TARGET VALUE OF VEHICLE ACCELERATION

S130
CALCULATE TARGET VALUE OF
DRIVE WHEEL ANGULAR VELOCITY

S140
DETERMINE TARGET VALUE OF
EACH BASIC STATE QUANTITY

S150
CALCULATE REMAINING TARGET VALUES

S160
DETERMINE FEEDFORWARD OUTPUT OF EACH ACTUATOR

S170
ACQUIRE EACH STATE QUANTITY FROM SENSOR

S180
CALCULATE REMAINING STATE QUANTITIES

S191
CALCULATE LOW-, MID-, AND HIGH-FREQUENCY
COMPONENTS OF EACH DEVIATION

S192
DETERMINE FEEDBACK OUTPUT OF EACH ACTUATOR

S200
GIVE EACH ELEMENT CONTROL SYSTEM A COMMAND VALUE

RETURN

# F I G . 27

```
┌─────────────────────────────┐
│  RUNNING AND ATTITUDE       │
│  CONTROL PROCESS            │
└─────────────────────────────┘
 S300
┌─────────────────────────────┐
│  DETERMINE FAILURE STATE    │
│  OF EACH ACTUATOR           │
└─────────────────────────────┘
 S310
      IS RIDING SECTION          Y
      MOTOR FAULTY?
 S320          N
      IS DRIVE MOTOR FAULTY?     Y
 S330          N      S340            S350
┌──────────────┐  ┌──────────┐  ┌──────────────┐
│              │  │ CONTROL  │  │   CONTROL    │
│              │  │ UNDER    │  │ UNDER RIDING │
│ NORMAL       │  │ DRIVE    │  │  SECTION     │
│ CONTROL      │  │ MOTOR    │  │   MOTOR      │
│              │  │ FAILURE  │  │  FAILURE     │
└──────────────┘  └──────────┘  └──────────────┘

┌─────────────────────────────┐
│         RETURN              │
└─────────────────────────────┘
```

# FIG. 28

```
        ┌─────────────────────────────┐
        │     PROCESS FOR CONTROL     │
        │   UNDER DRIVE MOTOR FAILURE │
        └─────────────────────────────┘
S341                    │
┌────────────────────────────────────────────┐
│        ACQUIRE VEHICLE ACCELERATION         │
└────────────────────────────────────────────┘
S342                    │
┌────────────────────────────────────────────┐
│ DETERMINE TARGET VALUE OF RIDING SECTION POSITION │
└────────────────────────────────────────────┘
S343                    │
┌────────────────────────────────────────────┐
│        CALCULATE REMAINING TARGET VALUES    │
└────────────────────────────────────────────┘
S344                    │
┌────────────────────────────────────────────┐
│        DETERMINE FEEDFORWARD OUTPUT OF      │
│              RIDING SECTION MOTOR           │
└────────────────────────────────────────────┘
S345                    │
┌────────────────────────────────────────────┐
│   ACQUIRE EACH STATE QUANTITY FROM SENSOR   │
└────────────────────────────────────────────┘
S346                    │
┌────────────────────────────────────────────┐
│     CALCULATE REMAINING STATE QUANTITIES    │
└────────────────────────────────────────────┘
S347                    │
┌────────────────────────────────────────────┐
│         DETERMINE FEEDBACK OUTPUT OF        │
│              RIDING SECTION MOTOR           │
└────────────────────────────────────────────┘
S348                    │
┌────────────────────────────────────────────┐
│ GIVE RIDING SECTION CONTROL SYSTEM COMMAND VALUE │
└────────────────────────────────────────────┘
                        │
                ┌───────────────┐
                │    RETURN      │
                └───────────────┘
```

# F I G . 29

PROCESS FOR CONTROL UNDER
RIDING SECTION MOTOR FAILURE

S351
ACQUIRE MANEUVERING OPERATION AMOUNT OF RIDER

S352
DETERMINE TARGET VALUE OF VEHICLE ACCELERATION

S353
CALCULATE TARGET VALUE OF
DRIVE WHEEL ANGULAR VELOCITY

S354
DETERMINE TARGET VALUE OF
VEHICLE BODY INCLINATION ANGLE

S355
CALCULATE REMAINING TARGET VALUES

S356
DETERMINE FEEDFORWARD OUTPUT OF DRIVE MOTOR

S357
ACQUIRE EACH STATE QUANTITY FROM SENSOR

S358
CALCULATE REMAINING STATE QUANTITIES

S359
DETERMINE FEEDBACK OUTPUT OF DRIVE MOTOR

S360
GIVE DRIVE WHEEL CONTROL SYSTEM COMMAND VALUE

RETURN

## INTERNATIONAL SEARCH REPORT

International application No.

PCT/JP2008/056551

A. CLASSIFICATION OF SUBJECT MATTER
*B62K17/00(2006.01)i, B60L15/00(2006.01)i, B62K3/00(2006.01)i*

According to International Patent Classification (IPC) or to both national classification and IPC

B. FIELDS SEARCHED

Minimum documentation searched (classification system followed by classification symbols)
B62K17/00, B60L15/00, B62K3/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-1385 A (Sony Corp.),<br>05 January, 2006 (05.01.06),<br>Par. No. [0047]; Fig. 8<br>(Family: none) | 1-4<br>5,6,8<br>7,9,10 |
| X<br>Y<br>A | JP 11-500331 A (Deka Products Ltd.<br>Partnership),<br>12 January, 1999 (12.01.99),<br>Page 44, line 8 to page 45, line 21; Figs. 46,<br>47<br>& EP 806929 A          & EP 1298041 A2<br>& WO 1996/023478 A1 | 1-4<br>6<br>5,7-10 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 June, 2008 (25.06.08) | Date of mailing of the international search report<br>08 July, 2008 (08.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/056551

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2006-123854 A (Matsushita Electric<br>Industrial Co., Ltd.),<br>18 May, 2006 (18.05.06),<br>Par. Nos. [0069] to [0071]; Figs. 14 to 17<br>(Family: none) | 5,6,8<br>1-4,7,9,10 |
| Y<br>A | JP 2007-62685 A (Equos Research Co., Ltd.),<br>15 March, 2007 (15.03.07),<br>Full text; all drawings<br>& WO 2006/095823 A1 | 8<br>1-7,9,10 |
| A | JP 2004-129435 A (Sony Corp.),<br>22 April, 2004 (22.04.04),<br>Full text; all drawings<br>(Family: none) | 1-10 |

Form PCT/ISA/210 (continuation of second sheet) (April 2007)

## INTERNATIONAL SEARCH REPORT

International application No.

PCT/JP2008/056551

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The matter common to the inventions of claims 1 - 25 is "a vehicle comprising run control means for controlling the run, while adjusting the center of gravity of a vehicle body, in accordance with a target running state by the turn of said vehicle body with respect to the axis of rotation and the movement of a riding area with respect to the vehicle body".

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
    Claims 1 - 10.

**Remark on Protest**
the
☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**EP 2 163 467 A1**

| INTERNATIONAL SEARCH REPORT | International application No. |
|---|---|
| | PCT/JP2008/056551 |

Continuation of Box No.III of continuation of first sheet(2)

However, the search has revealed that the vehicle comprising that run control means makes no contribution over the prior art, since it was disclosed in document: JP 2006-1385 A (Sony Corp.), 5 January, 2006 (05.01.06), Par. No. [0047]; Fig. 8 (Family: none), or in document JP 11-500331 A (Deka Products Ltd. Partnership), 12 January, 1999 (12.01.99), Page 44, line 8 to page 45, line 21; Figs. 46, 47 & EP 806929 A & EP 1298041 A2 & WO 1996/023478 A1. As a result, the vehicle comprising the aforementioned run control means is not the special technical feature within the meaning of PCT Rule 13.2, second sentence, since it makes no contribution over the prior art. Therefore, there exists no matter common to all the inventions of claims 1 - 25. Consequently, it is apparent that the inventions of claims 1 - 25 do not comply with the requirement of unity of invention.

Form PCT/ISA/210 (extra sheet) (April 2007)

**EP 2 163 467 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004129435 A